(19) **Europäisches Patentamt / European Patent Office / Office européen des brevets**

(11) **EP 4 614 846 A1**

(12) **EUROPEAN PATENT APPLICATION**
published in accordance with Art. 153(4) EPC

(43) Date of publication:
**10.09.2025 Bulletin 2025/37**

(21) Application number: **23900047.4**

(22) Date of filing: **07.12.2023**

(51) International Patent Classification (IPC):
***H04L 1/00*** (2006.01)

(52) Cooperative Patent Classification (CPC):
**H04B 1/7163; H04L 1/00**

(86) International application number:
**PCT/CN2023/137010**

(87) International publication number:
**WO 2024/120474 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 07.12.2022 CN 202211567222
15.12.2022 CN 202211620738
17.01.2023 CN 202310095577
01.02.2023 CN 202310101526

(71) Applicant: **Huawei Technologies Co., Ltd.**
**Shenzhen, Guangdong 518129 (CN)**

(72) Inventors:
- LIU, Chenchen
  Shenzhen, Guangdong 518129 (CN)
- QIAN, Bin
  Shenzhen, Guangdong 518129 (CN)
- YANG, Xun
  Shenzhen, Guangdong 518129 (CN)
- YANG, Yang
  Shenzhen, Guangdong 518129 (CN)

(74) Representative: **Huawei European IPR**
**Huawei Technologies Duesseldorf GmbH**
**Riesstraße 25**
**80992 München (DE)**

(54) **ULTRA-WIDEBAND-BASED SIGNAL TRANSMISSION METHODS AND APPARATUS**

(57) This application relates to an ultra-wideband-based signal transmission method and apparatus. The method includes: sending a signal, where the signal includes a signal generated based on a codeword obtained by encoding first PHR information, the codeword includes a codeword, in a first codeword set, that corresponds to the first PHR information, and the first PHR information indicates a data rate of a physical layer payload field. In this application, coding performance of the first PHR information can be improved. This application is applied to a UWB-based WPAN system, a sensing system, and the like, including an 802.15 series protocol, for example, the 802.15.4a protocol, the 802.15.4z protocol, or the 802.15.4ab protocol, and is also applicable to WLAN systems of 802.11 series protocols such as a next-generation Wi-Fi protocol of 802.11ax, for example, 802.11be, Wi-Fi 7, or EHT, and a next-generation protocol of 802.1 The like Wi-Fi 8.

First communication apparatus → Second communication apparatus

S201: Generate a PPDU, where the PPDU includes a PHR field and a PHY payload field, the PHR field includes first PHR information, and the first PHR information indicates a data rate of the PHY payload field

S202: Send a signal, where the signal is generated based on the PPDU, the signal includes a signal generated based on a codeword obtained by encoding the first PHR information, and the codeword includes a codeword, in a first codeword set, that corresponds to the first PHR information

S203: Decode the signal to obtain the first PHR information

FIG. 8

## Description

This application claims priorities to Chinese Patent Application No. 202211567222.2, filed with the China National Intellectual Property Administration on December 7, 2022 and entitled "ULTRA-WIDEBAND-BASED SIGNAL TRANSMISSION METHOD AND APPARATUS", to Chinese Patent Application No. 202211620738.9, filed with the China National Intellectual Property Administration on December 15, 2022 and entitled "ULTRA-WIDEBAND-BASED SIGNAL TRANSMISSION METHOD AND APPARATUS", to Chinese Patent Application No. 202310095577.4, filed with the China National Intellectual Property Administration on January 17, 2023 and entitled "ULTRA-WIDEBAND-BASED SIGNAL TRANSMISSION METHOD AND APPARATUS", and to Chinese Patent Application No. 202310101526.8, filed with the China National Intellectual Property Administration on February 1, 2023 and entitled "ULTRA-WIDEBAND-BASED SIGNAL TRANSMISSION METHOD AND APPARATUS", all of which are incorporated herein by reference in their entireties.

## TECHNICAL FIELD

This application relates to the field of wireless communication technologies, and in particular, to an ultra-wideband (ultra-wideband, UWB)-based signal transmission method and apparatus.

## BACKGROUND

As an ultra-wideband (ultra-wideband, UWB) technology enters the civil field, ultra-wideband (UWB) wireless communication becomes one of physical layer technologies for a short-range and high-speed wireless network. The ultra-wideband (UWB) technology is a wireless carrier communication technology in which a nanosecond-level non-sinusoidal narrow impulse may be used for data transmission. Therefore, the ultra-wideband technology occupies a quite wide spectrum range. Due to a narrow impulse and low radiation spectral density of the ultra-wideband, the UWB has advantages such as a strong multi-path resolution capability, low power consumption, and high confidentiality.

The Institute of Electrical and Electronics Engineers (institute of electrical and electronics engineers, IEEE) has incorporated the UWB technology into IEEE 802 series wireless standards, and has released a high-speed wireless personal area network (wireless personal area network, WPAN) standard IEEE 802.15.4a based on the UWB technology, and an evolved release IEEE 802.15.4z of the IEEE 802.15.4a. A next-generation UWB wireless personal area network (WPAN) standard 802.15.4ab is under discussion. A physical layer protocol data unit (physical layer protocol data unit, PPDU) in an existing WPAN standard includes at least a physical layer header (physical layer header, PHR) field and a physical layer (physical layer, PHY) payload (PHY payload) field.

Currently, convolutional coding is used for the PHR field, and coding performance of the PHR field needs to be further improved.

## SUMMARY

Embodiments of this application provide an ultra-wideband-based signal transmission method and apparatus, to improve coding performance of a PHR field, and further reduce transmission duration of the PHR field.

The following describes this application from different aspects. It should be understood that mutual reference may be made between the following different aspects in terms of implementations and beneficial effect.

According to a first aspect, this application provides an ultra-wideband-based signal transmission method. The method includes: A communication apparatus generates a physical layer protocol data unit (physical layer protocol data unit, PPDU), where the PPDU includes a physical layer header (physical layer header, PHR) field and a physical layer (physical layer, PHY) payload (PHY payload) field, and the PHR field includes first PHR information indicating a data rate of the PHY payload field. The communication apparatus sends a signal generated based on the PPDU, where the signal includes a signal generated based on a codeword obtained by encoding the first PHR information, and the codeword includes a codeword, in a first codeword set, that corresponds to the first PHR information. For specific content of the codeword, refer to the following method embodiments. Due to limited space, details are not described herein.

In this application, a new codeword set (namely, a codebook) is designed, and the first PHR information is mapped and encoded by using a codeword in the codeword set. Compared with convolutional coding, this can improve coding performance of the PHR field (mainly the first PHR information).

According to a second aspect, this application provides an ultra-wideband-based signal transmission method. The method includes: A communication apparatus receives a signal, where the signal is generated based on a PPDU, the PPDU includes a PHR field and a PHY payload field, the PHR field includes first PHR information, the signal includes a signal generated based on a codeword obtained by encoding the first PHR information, and the codeword includes a codeword, in a first codeword set, that corresponds to the first PHR information, and demodulates and decodes the signal to obtain the first PHR information, where the first PHR information indicates a data rate of the PHY payload field. For specific content of the codeword, refer to the following method embodiments. Due to limited space, details are not described herein.

In a possible implementation of any one of the foregoing aspects, the first PHR information is three bits, and may indicate that the data rate of the PHY payload field is any one of the following: 1.95 Mbps (million bit per second), 7.8 Mbps, 31.2 Mbps, 62.4 Mbps, or 124.8 Mbps.

In a possible implementation of any one of the foregoing aspects, the first PHR information further includes information indicating whether the PHY payload field is encoded by using a first coding scheme. For example, the first PHR information is four bits, where three bits indicate the data rate of the PHY payload field, and the other one bit indicates whether the PHY payload field is encoded by using the first coding scheme.

Optionally, the first coding scheme is any one of the following: a low-density parity-check code (low-density parity-code, LDPC), a convolutional code, a polar code, a turbo code, and the like. This is not limited in this application. For ease of description, an example in which the first coding scheme is the LDPC is used for description.

In this application, the first PHR information (four bits) is mapped and encoded by using the codeword in the first codeword set. Compared with convolutional coding, this not only can meet a requirement for demodulation performance, but also can reduce transmission duration of the first PHR information, to achieve a good compromise between the demodulation performance and the transmission duration of the first PHR information.

In a possible implementation of any one of the foregoing aspects, a quantity M of codewords in the first codeword set is less than or equal to $2^K$, where K is a bit length of the first PHR information. For example, when K is equal to 3, the quantity M of codewords in the first codeword set is less than or equal to 8; when K is equal to 4, the quantity M of codewords in the first codeword set is less than or equal to 16; or when K is equal to 2, the quantity M of codewords in the first codeword set is less than or equal to 4.

In some scenarios, a Hamming distance between any two codewords in the first codeword set is greater than or equal to a theoretical minimum Hamming distance bound of the first codeword set.

Optionally, if the first codeword set includes M codewords, a length of each codeword is L. For example, a Hamming distance d between any two of the M codewords satisfies the following formula:

$$d \geq \left\lfloor \frac{ML}{2(M-1)} \right\rfloor \quad \text{or} \quad d \geq \left\lfloor \frac{ML}{2(M-1)} \right\rfloor - 1 .$$

In this application, a Hamming distance between codewords is increased to improve coding performance.

In a possible implementation of any one of the foregoing aspects, when the first PHR information is four bits, the length of the codeword in the first codeword set satisfies the following formula: L=4n+2, where L represents the length of the codeword, and n is a positive integer. For specific content of the codeword in the first codeword set in the case of different lengths of the codeword, refer to descriptions in Embodiment 1 below. Details are not described herein.

In a possible implementation of any one of the foregoing aspects, when the first PHR information is three bits, the length of the codeword in the first codeword set is an even quantity of bits, and satisfies the following formula: L=7n+m, where L represents the length of the codeword, n is a positive integer, and m is an integer greater than or equal to 0 and less than 7. For specific content of the codeword in the first codeword set in the case of different lengths of the codeword, refer to descriptions in Embodiment 2 below. Details are not described herein.

In a possible implementation of any one of the foregoing aspects, the length of the codeword is greater than or equal to 2K bits, where K is a bit length of the first PHR information. For example, the length of the codeword is any one of the following: 20, 22, 24, 26, 28, 30, 32, 34, 36, 38, or 40 bits.

According to a third aspect, an embodiment of this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, an embodiment of this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments shown below. For beneficial effect of the third aspect and the fourth aspect, refer to related descriptions of the first aspect and the second aspect. Details are not described herein again.

According to a fifth aspect, this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to send a signal.

According to a sixth aspect, this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

With reference to the sixth aspect, in a possible implementation, the memory is located outside the communication apparatus.

With reference to the sixth aspect, in a possible implementation, the memory is located inside the communication apparatus.

In this application, the processor and the memory may alternatively be integrated into one component. In other words, the processor and the memory may alternatively be integrated together.

With reference to the sixth aspect, in a possible implementation, the communication apparatus further includes a transceiver, and the transceiver is configured to receive a signal.

According to a seventh aspect, this application provides a communication apparatus. The communication apparatus includes a logic circuit and an interface, and the logic circuit is coupled to the interface. The logic circuit is configured to generate a PPDU, where the PPDU includes a PHR field and a PHY payload field, the PHR field includes first PHR information, and the first PHR information indicates a data rate of the PHY payload field. The interface is configured to output a signal, where the signal is generated based on the PPDU, the signal includes a signal generated based on a codeword obtained by encoding the first PHR information, and the codeword includes a codeword, in a first codeword set, that corresponds to the first PHR information.

According to an eighth aspect, this application provides a communication apparatus. The communication apparatus includes a logic circuit and an interface, and the logic circuit is coupled to the interface. The interface is configured to input a signal, where the signal is generated based on a PPDU, the PPDU includes a PHR field and a PHY payload field, the PHR field includes first PHR information, the signal includes a signal generated based on a codeword obtained by encoding the first PHR information, and the codeword includes a codeword, in a first codeword set, that corresponds to the first PHR information. The logic circuit is configured to decode the signal to obtain the first PHR information, where the first PHR information indicates a data rate of the PHY payload field.

In the seventh aspect or the eighth aspect, for specific descriptions of the PPDU, the first PHR information, the first codeword set, and the like, refer to the descriptions of the first aspect or the second aspect. Details are not described herein again.

According to a ninth aspect, this application provides a computer-readable storage medium. The computer-readable storage medium is configured to store a computer program. When the computer program is run on a computer, the method according to any one of the first aspect or the possible implementations of the first aspect is performed.

According to a tenth aspect, this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code. When the computer program or the computer code is run on a computer, the method according to any one of the first aspect or the possible implementations of the first aspect is performed.

According to a twelfth aspect, an embodiment of this application provides a computer program product. The computer program product includes a computer program or computer code. When the computer program or the computer code is run on a computer, the method according to any one of the second aspect or the possible implementations of the second aspect is performed.

According to a thirteenth aspect, this application provides a computer program. When the computer program is run on a computer, the method according to any one of the first aspect or the possible implementations of the first aspect is performed.

According to a fourteenth aspect, this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a first communication apparatus and/or a second communication apparatus. The first communication apparatus is configured to perform the method according to any one of the first aspect or the possible implementations of the first aspect. The second communication apparatus is configured to perform the method according to any one of the second aspect or the possible implementations of the second aspect.

For technical effect achieved in the foregoing aspects, mutual reference may be made between the foregoing aspects, or refer to beneficial effect in the following method embodiments. Details are not described herein.

## BRIEF DESCRIPTION OF DRAWINGS

FIG. 1 is a diagram of a structure of a wireless communication system according to an embodiment of this application;

FIG. 2 is a diagram of another structure of a wireless communication system according to an embodiment of this application;

FIG. 3 is a diagram of a UWB PPDU format according to an embodiment of this application;

FIG. 4 is another diagram of a UWB PPDU format according to an embodiment of this application;

FIG. 5 is a schematic flowchart of an ultra-wideband-based signal transmission method according to an embodiment of this application;

FIG. 6 is a diagram of theoretical minimum Hamming distance bounds at different code lengths according to an embodiment of this application;

FIG. 7 is a diagram of a simulation result of packet error rates of a PHR1 in different coding schemes according to an embodiment of this application;

FIG. 8 is another schematic flowchart of an ultra-wideband-based signal transmission method according to an embodiment of this application;

FIG. 9 is another diagram of theoretical minimum Hamming distance bounds at different code lengths according to an embodiment of this application;

FIG. 10 is a diagram of minimum Hamming distances at different code lengths according to an embodiment of this application;

FIG. 11 is a diagram of a structure of a communication apparatus according to an embodiment of this application;

FIG. 12 is a diagram of another structure of a communication apparatus according to an embodiment of this application; and

FIG. 13 is a diagram of still another structure of a communication apparatus according to an embodiment of this application.

## DESCRIPTION OF EMBODIMENTS

The following clearly and completely describes technical solutions in embodiments of this application with reference to accompanying drawings in embodiments of this application.

In descriptions of this application, the terms "first", "second", and the like are merely intended to distinguish between different objects, but do not limit a quantity or an execution sequence, and the terms "first", "second", and the like do not indicate a definite difference either. In addition, the terms "include", "have", and any variants thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device.

In descriptions of this application, "/" indicates "or", unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, "one or more of the following items" or a similar expression thereof indicates any combination of the items, including one of the items or any combination of a plurality of the items. For example, at least one of a, b, or c may indicate a, b, c, a and b, a and c, b and c, or a, b, and c. a, b, and c may be in a singular form or a plural form.

In this application, the term "example", "for example", or the like is used to give an example, an illustration, or a description. Any embodiment or design scheme described with "example", "in an example", or "for example" in this application should not be construed as being more preferred or more advantageous than another embodiment or design scheme. To be precise, the term "example", "in an example", "for example", or the like is intended to present a related concept in a specific manner.

In this application, an element represented in a singular form is intended to indicate "one or more", but not indicate "one and only one", unless otherwise specified.

It can be understood that, in embodiments of this application, "B mapped to A" or "A mapped to B" indicates that there is a correspondence between A and B, and B may be determined based on A. However, it should be further understood that determining (or generating) B based on A does not mean that B is determined (or generated) only based on A, and B may alternatively be determined (or generated) based on A and/or other information.

The technical solutions provided in this application are applicable to a wireless personal area network (wireless personal area network, WPAN) based on a UWB technology. For example, a method provided in this application is applicable to an IEEE 802.15 series protocol, for example, the 802.15.4a protocol, the 802.15.4z protocol, or the 802.15.4ab protocol, or a future-generation UWB WPAN standard. Examples are not listed one by one herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, an LTE system, a fifth-generation (5th-generation, 5G) communication system, a sixth-generation (6th-generation, 6G) communication system, and the like.

The UWB technology is a new wireless communication technology. In the UWB technology, a nanosecond-level non-sinusoidal narrow impulse is used for data transmission, and modulation is performed on an impulse with quite steep rise and fall time, and therefore, the UWB technology has a wide spectrum range for transmission, so that a signal has a bandwidth of a gigahertz (GHz) magnitude. A bandwidth used by a UWB is usually greater than 1 GHz. A UWB system does not need to generate a sinusoidal carrier signal and may directly transmit an impulse sequence. Therefore, the UWB system has a wide spectrum and low average power. A UWB wireless communication system has advantages of a strong multi-path resolution capability, low power consumption, high confidentiality, and the like. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and existing narrowband communication. Therefore, both the UWB system and a narrowband (narrowband, NB) communication system can operate without interfering with each other.

The method provided in this application may be implemented by a communication apparatus in a wireless communication system. In a communication apparatus, an apparatus, a chip, or a functional unit that implements a function of the UWB system may be referred to as a UWB module, and an apparatus, a chip, or a functional unit that implements a function of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. A communication apparatus in this application includes a UWB module, and optionally, further includes a narrowband communication module. It can be understood that the foregoing descriptions of the communication apparatus are applicable to a first communication apparatus and a second communication apparatus in this application.

Embodiments of this application are mainly described by using a WPAN, for example, a network used in an IEEE 802.15 series standard, as an example. It is easily understood by a person skilled in the art that various aspects of this application may be extended to another network using various standards or protocols, for example, a wireless local area network (wireless local area networks, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, IEEE 802.15.4ab currently under discussion, or a subsequent release.

For example, the method provided in this application may be implemented by a communication apparatus in a wireless communication system, and the communication apparatus may be an apparatus in the UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not listed one by one herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home appliance, or the like. For another example, the communication apparatus may include a chip, and the chip may be disposed in a communication server, a router, a switch, a terminal device, or the like. Examples are not listed one by one herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing the method provided in embodiments of this application is not particularly limited in embodiments of this application, provided that the entity can run a program that records code of the method provided in embodiments of this application to perform communication according to the method provided in embodiments of this application.

It can be understood that the foregoing descriptions of the communication apparatus are applicable to a first communication apparatus and a second communication apparatus in this application.

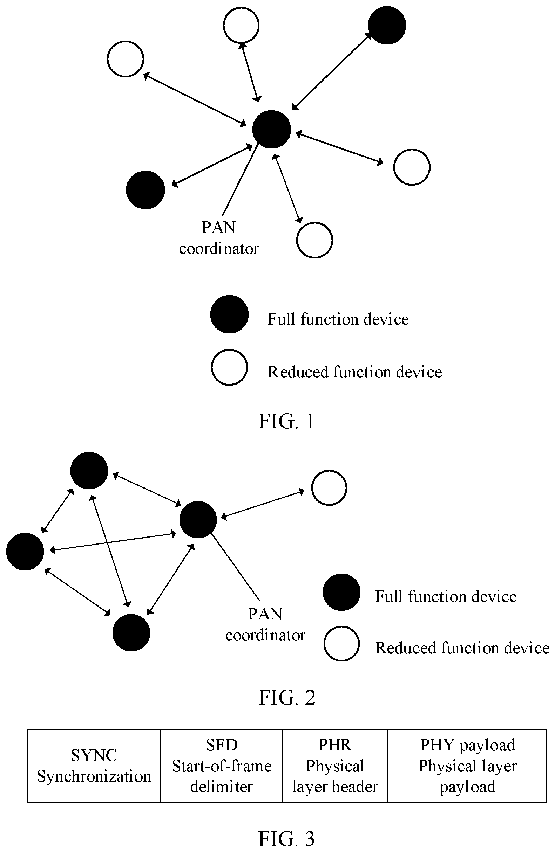

For example, FIG. 1 is a diagram of a structure of a wireless communication system according to an embodiment of this application. As shown in FIG. 1, the wireless communication system is of a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is of a point-to-point topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device is defined relative to the reduced function device. For example, the reduced function device cannot be a PAN coordinator (coordinator). For another example, compared with the full function device, the reduced function device may have no coordination capability or have a lower communication rate than the full function device. It can be understood that the PAN coordinator shown in FIG. 2 is merely an example, and each of other three full function devices shown in FIG. 2 may alternatively serve as a PAN coordinator. Examples are not shown one by one herein. It can be further understood that the full function device and the reduced function device in this application are merely example communication apparatuses, and any apparatus that can implement a PPDU transmission method provided in this application falls within the protection scope of this application.

The UWB has quite low spectral energy, and has quite small interference to other wireless communication technologies. Therefore, according to regulations, the UWB may be used to send a signal without channel monitoring, and therefore is quite friendly to low-delay data transmission. In addition, because the UWB has quite high communication bandwidth, data may be transmitted in an ultra-wideband channel at a high rate. On the other hand, to increase a transmission distance or expand a coverage area of a device, data may alternatively be transmitted at a low rate.

A possible UWB PPDU format (format) is shown in FIG. 3. FIG. 3 is a diagram of a UWB PPDU format according to an embodiment of this application. As shown in FIG. 3, the UWB PPDU includes at least a physical layer header (physical layer header, PHR) field, and optionally, further includes one or more of the following fields: a synchronization (synchronization, SYNC) field, a start-of-frame delimiter (start-of-frame delimiter, SFD) field, or a physical layer (physical layer, PHY) payload (PHY payload) field. The synchronization (SYNC) field is used for channel measurement and signal synchronization, and the SFD field is used to separate the SYNC field from a subsequent part. The PHR field indicates some parameters needed for demodulating the PHY payload field, for example, a length, a data rate (data rate), and a coding scheme of the PHY payload field. The PHY payload field is used to carry data. It can be understood that the names of the fields in FIG. 3 are merely examples. With evolution of a standard, the names of the fields in the UWB PPDU may vary, but all fields that can implement the foregoing functions fall within the protection scope of this application.

Therefore, to correctly demodulate data in the PHY payload field, it needs to be ensured that the PHR field is correctly demodulated. Usually, data transmitted at a lower data rate is more reliable, to be specific, is more likely to be correctly demodulated. Therefore, the PHR field is usually transmitted at a low data rate. However, the PHY payload field may be transmitted at a high data rate, to improve transmission performance. In other words, to ensure demodulation performance, a data rate of the PHR field is usually less than a data rate of the PHY payload field. Currently, to ensure that the PHR field can be correctly demodulated and reliability of the PHR field is higher than reliability of the PHY payload field, the PHR field needs to be transmitted at a low data rate. This leads to long transmission time (in other words, air interface occupation time), increases a delay, and causes interference to another wireless device or another wireless communication technology. In addition, if the data rate of the PHR field is excessively high, the PHR field becomes a performance bottleneck of demodulation of the entire PPDU.

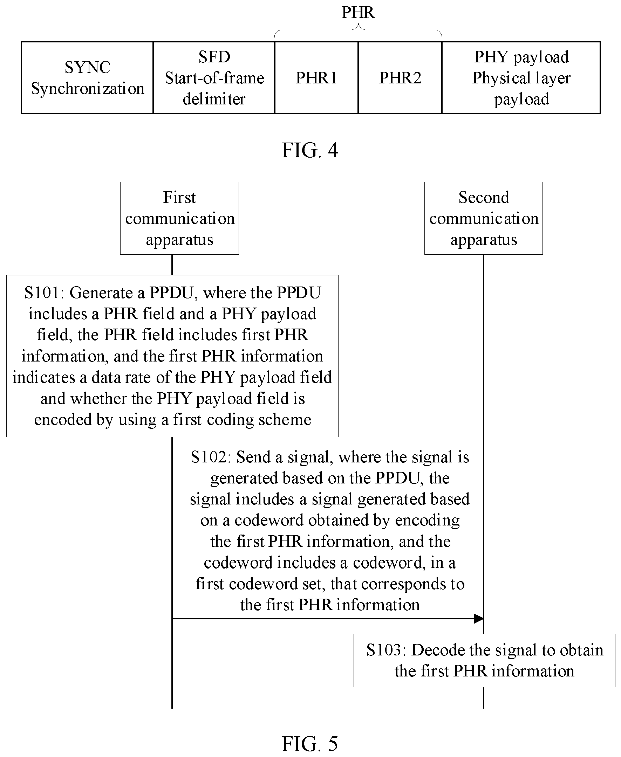

In a possible implementation, to reduce transmission time of the PHR field, the PHR field may be divided into two parts. One part is transmitted at a fixed low data rate, and the other part is transmitted at a dynamic data rate. FIG. 4 is another diagram of a UWB PPDU format according to an embodiment of this application. As shown in FIG. 4, a PHR field may be divided into two parts that are denoted as a PHR1 and a PHR2. The PHR1 is also referred to as a rate header (rate header), and has a total of four bits, where three bits indicate a data rate of a PHY payload field, and the other one bit indicates whether the PHY payload field is encoded by using a low-density parity-check code (low-density parity-code, LDPC). Currently, data rates supported by the PHY payload field include 1.95 Mbps (million bit per second), 7.8 Mbps, 31.2 Mbps, 62.4 Mbps, and 124.8 Mbps. The PHR2 mainly indicates a length of the PHY payload field. Optionally, the PHR2 may further include a bit indicating whether the PPDU is used for sensing measurement, a reserved bit, and a cyclic redundancy check (cyclic redundancy check, CRC) bit. The PHR1 may be transmitted at a fixed low data rate, and the PHR2 may be transmitted at a dynamic data rate. A data rate of the PHR2 may be determined based on the data rate of the PHY payload field and channel coding used for the PHY payload field.

In addition, the PHR1 may be encoded by using a convolutional code with a code rate of 0.5, for example, a convolutional code with a polynomial of $(133, 171)_8$. A possible coding scheme for the PHR1 is as follows: Six 0s are added after the four bits of the PHR1 as tail bits, and then the bits are encoded by using a convolutional code with a code rate of 0.5 to obtain 20 bits. Then two bits serve as one symbol, to obtain a total of 10 symbols. The following solutions are available based on different symbol transmission rates: (1) The PHR1 is transmitted at a rate of 3.9 Mbps, and a total of approximate 2.5 $\mu$s (microsecond) is needed. (2) The PHR1 is transmitted at a rate of 1.95 Mbps, and a total of approximate 5 $\mu$s is needed. (3) The PHR1 is transmitted at a rate of 0.975 Mbps, and a total of approximate 10 $\mu$s is needed. In the solution (1), because a symbol rate of the PHR1 is high (3.9 Mbps), when the data rate of the PHY payload field is 1.95 Mbps, demodulation performance cannot be ensured, leading to a performance bottleneck. In the solution (2), a symbol rate of the PHR1 is 1.95 Mbps. Because performance of LDPC coding is better than performance of convolutional code-based coding, when the data rate of the PHY payload field is 1.95 Mbps and LDPC coding is used, demodulation performance still cannot be ensured, leading to a performance bottleneck. In the solution (3), a symbol rate of the PHR1 is quite low (0.975 Mbps), and transmission duration of the PHR1 is increased.

In view of this, embodiments of this application provide an ultra-wideband-based signal transmission method and apparatus. A new codebook (for example, a first codeword set) is designed for mapping (mapping) and encoding first PHR information, to improve coding performance of a PHR field (mainly the first PHR information), and further reduce transmission duration of the PHR field (mainly the first PHR information). For example, a "codeword set" in this application is one or more codewords.

The technical solutions provided in this application are described below in detail with reference to more accompanying drawings.

To clearly describe the technical solutions of this application, this application is described by using a plurality of embodiments. For details, refer to the following descriptions. In this application, for same or similar parts of embodiments or implementations, mutual reference may be made between the embodiments or implementations, unless otherwise specified. In embodiments of this application and implementations/methods/implementation methods of embodiments, unless otherwise specified or a logical conflict occurs, terms and/or descriptions in different embodiments and implementations/methods/implementation methods of embodiments are consistent and may be mutually referenced. Technical features in different embodiments and implementations/methods/implementation methods of embodiments may be combined to form a new embodiment, implementation, method, or implementation method based on an internal logical relationship between the technical features. The following implementations of this application are not intended to limit the protection scope of this application.

A communication apparatus in this application may support the 802.15.4ab standard or a next-generation standard of 802.15.4ab, may support a plurality of standards such as 802.15.4a, 802.15.4-2011, 802.15.4-2015, 802.15.4-2020, and 802.15.4z, and may further support WLAN standards of an 802.11 family such as 802.11ax, 802.11ac, 802.11n, 802.11g, 802.11b, 802.11a, and a next generation of 802.11be.

FIG. 5 is a schematic flowchart of an ultra-wideband-based signal transmission method according to an embodiment of this application. As shown in FIG. 5, the ultra-wideband-based signal transmission method includes but is not limited to the following steps.

S101: A first communication apparatus generates a PPDU, where the PPDU includes a PHR field and a PHY payload field, the PHR field includes first PHR information, and the first PHR information indicates a data rate of the PHY payload field and whether the PHY payload field is encoded by using a first coding scheme.

S102: The first communication apparatus sends a signal, where the signal is generated based on the PPDU, the signal includes a signal generated based on a codeword obtained by encoding the first PHR information, and the codeword includes a codeword, in a first codeword set, that corresponds to the first PHR information.

Correspondingly, a second communication apparatus receives the signal.

S103: The second communication apparatus decodes the signal to obtain the first PHR information.

Optionally, the PPDU may be a PPDU used in a UWB WPAN standard, for example, a PPDU in the 802.15.4ab protocol.

Optionally, the PPDU may include but is not limited to the PHR field and the PHY payload field. The PHR field may include the first PHR information and second PHR information. The first PHR information may indicate the data rate of the PHY payload field and whether the PHY payload field is encoded by using the first coding scheme. The second PHR information may indicate a length of the PHY payload field, and optionally, further indicates one or more of the following: whether the PPDU is used for sensing measurement, or a cyclic redundancy check (cyclic redundancy check, CRC) code.

For example, the first coding scheme may be any one of the following: LDPC, a convolutional code, a polar (Polar) code, a turbo (Turbo) code, and the like. This is not limited in this embodiment of this application. For ease of description, an example in which the first coding scheme is the LDPC is used for description. Certainly, with development of a standard, the LDPC below may alternatively be replaced with any coding scheme (for example, the convolutional code, the polar code, or the turbo code) specified in a future standard.

For example, a frame format of the PPDU may be shown in FIG. 4. The PHR1 in FIG. 4 corresponds to the first PHR information in this embodiment of this application, and the PHR2 in FIG. 4 corresponds to the second PHR information in this embodiment of this application. In this case, the first PHR information (PHR1) has a total of four bits, where three bits indicate the data rate of the PHY payload field, and the other one bit indicates whether the PHY payload field is encoded by using the LDPC. For example, the second PHR information (PHR2) has a total of 23 bits, where 12 bits indicate the length of the PHY payload field, one bit indicates whether the PPDU is used for sensing measurement, two bits are reserved, and eight bits indicate the CRC code.

Optionally, the first communication apparatus may encode the generated PPDU, and then may modulate a codeword obtained through encoding into a UWB impulse (namely, a signal) and send the UWB impulse. Correspondingly, after receiving the signal (namely, the UWB impulse), the second communication apparatus demodulates the signal to obtain the codeword obtained by encoding the PPDU, and then decodes, based on the first codeword set, the codeword obtained by encoding the first PHR information (PHR1), to obtain the first PHR information (PHR1). The first codeword set may be predefined, pre-negotiated-upon, preconfigured, or the like. The encoding herein may include the convolutional code, the LDPC, a specific codebook, a repetition code, or the like. It can be understood that different fields in the PPDU may be encoded by using different coding schemes. For example, the PHY payload field in the PPDU is encoded by using the LDPC or the convolutional code, and an SFD field is mapped and encoded by using the codebook. For another example, the first PHR information (PHR1) in the PPDU is mapped and encoded by using the codebook, and the second PHR information (PHR2) is encoded by using the convolutional code.

Therefore, the signal may be generated based on the PPDU. In this case, the signal includes at least the signal generated based on the codeword obtained by encoding the first PHR information (PHR1), and the codeword may include a codeword, in the first codeword set, to which the first PHR information is mapped. The first codeword set includes at least M codewords, and a length of each codeword is L. For example, a Hamming distance d between any two of the M codewords satisfies the following formula (1-1) or the following formula (1-2):

$$d \geq \left\lfloor \frac{ML}{2(M-1)} \right\rfloor - 1 \quad \cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots (1\text{-}1)$$

$$d \geq \left\lfloor \frac{ML}{2(M-1)} \right\rfloor \quad \cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots \quad (1\text{-}2)$$

The symbol ⌊⌋ indicates rounding down. A same symbol in the following descriptions indicates a same meaning, and details are not described again.

Optionally, the first codeword set may be all or some of codewords in the codebook, and a quantity of codewords in the codebook is $2^K$, where K is a bit length of the first PHR information (PHR1). M is less than or equal to $2^K$. The codebook may be predefined, pre-negotiated-upon, preconfigured, or the like. Predefining in this application may be understood as defining, defining in advance, presetting, storing, prestoring, pre-negotiating, preconfiguring, solidifying, pre-burning, or the like.

In this specification, the "length of the codeword" may also be referred to as a "code length", a "codeword length", or the like. The three terms may be used interchangeably, and details are not described below again.

It can be understood that the Hamming distance (Hamming distance) is used in error control coding for data transmission, and indicates a quantity of different characters at corresponding positions in two character strings (with a same length). d(x, y) represents a Hamming distance between two character strings: x and y. An exclusive OR operation is performed on the two character strings, and a quantity of results that are 1s is counted. In this case, the counted quantity of results that are 1s is the Hamming distance.

It can be further understood that a theoretical minimum Hamming distance of a codebook whose size is N codewords and whose code length is L satisfies the following formula (1-3):

$$d_{\min} \leq \left\lfloor \frac{NL}{2(N-1)} \right\rfloor \quad \cdots\cdots\cdots\cdots\cdots\cdots\cdots\cdots\cdots\cdots\cdots\cdots\cdots\cdots\cdots\cdots\cdots\cdots\cdots\cdots\cdots\cdots\cdots \quad (1\text{-}3)$$

Optionally, the length L of the codeword in the first codeword set may be an even quantity of bits, and may be further greater than or equal to $2^K$ bits, where K is the bit length of the first PHR information (PHR1). For example, the length L of the codeword is 22 bits, 26 bits, 30 bits, or 36 bits.

Optionally, the codeword in the first codeword set may be generated based on an (L+2)-order Hadamard (Hadamard) matrix. For a manner of generating the first codeword set and specific content of the codeword, refer to the following descriptions. Details are not described herein.

It can be understood that the Hadamard matrix (Hadamard matrix) is a square matrix, and includes an element +1 and an element -1. In addition, all rows of the Hadamard matrix are orthogonal to each other, and all columns are also orthogonal to each other. A k-order (k×k) Hadamard matrix H satisfies the following formula: $HH^T = kI_k$, where $I_k$ represents a k×k identity matrix, and $H^T$ represents a transpose of H. Because all rows of the Hadamard matrix are orthogonal to each other, a Hamming distance between different rows is (k/2). A normalized Hadamard matrix is a Hadamard matrix in which the 1st row of elements and the 1st column of elements are all 1. When a quantity k of rows of the Hadamard matrix is greater than 2, k is an integer multiple of 4.

In this embodiment of this application, a new codebook is designed, and the first PHR information (PHR1) is mapped and encoded by using the first codeword set in the codebook. This not only can meet a requirement for demodulation performance, but also can reduce transmission duration of the PHR field (mainly the PHR1), to achieve a good compromise between the demodulation performance and the transmission duration of the PHR field (mainly the PHR1). In addition, in this embodiment of this application, the Hamming distance between codewords in the first codeword set is further increased to improve coding performance of the PHR field (mainly the PHR1).

The following describes in detail a design idea of the codebook in this embodiment of this application, and describes, by using examples, the codebook provided in this embodiment of this application and a manner of generating the codebook.

In this embodiment of this application, because the PHY payload field currently supports a total of five data rates, depending on whether the PHY payload field is encoded by using the LDPC, at least 10 values are needed in the first PHR information (PHR1) to indicate the data rate of the PHY payload field and whether the PHY payload field is encoded by using the LDPC. Correspondingly, at least 10 codewords are needed for mapping and encoding the first PHR information (PHR1).

It can be understood that coding performance is related to a minimum Hamming distance between codewords. A larger minimum Hamming distance between codewords indicates a greater difference between different codewords, better coding performance, and a higher probability of correct decoding.

When the first PHR information (PHR1) is four bits, if mappings between all values of the four bits and codewords are considered, there are a total of 16 codewords. When the code length is L, a bound (bound) of a theoretical minimum Hamming distance between the 16 codewords is as follows:

$$\left\lfloor \frac{16*L}{2(16-1)} \right\rfloor = \left\lfloor \frac{8*L}{15} \right\rfloor.$$

If only 10 codewords are considered, when the code length is L, a bound of a theoretical minimum Hamming distance between the 10 codewords is as follows:

$$\left\lfloor \frac{10*L}{2(10-1)} \right\rfloor = \left\lfloor \frac{5*L}{9} \right\rfloor.$$

In this specification, the symbol "*" represents a "multiplied by" or "multiply" operation. A same symbol in the following descriptions indicates a same meaning, and details are not described below again.

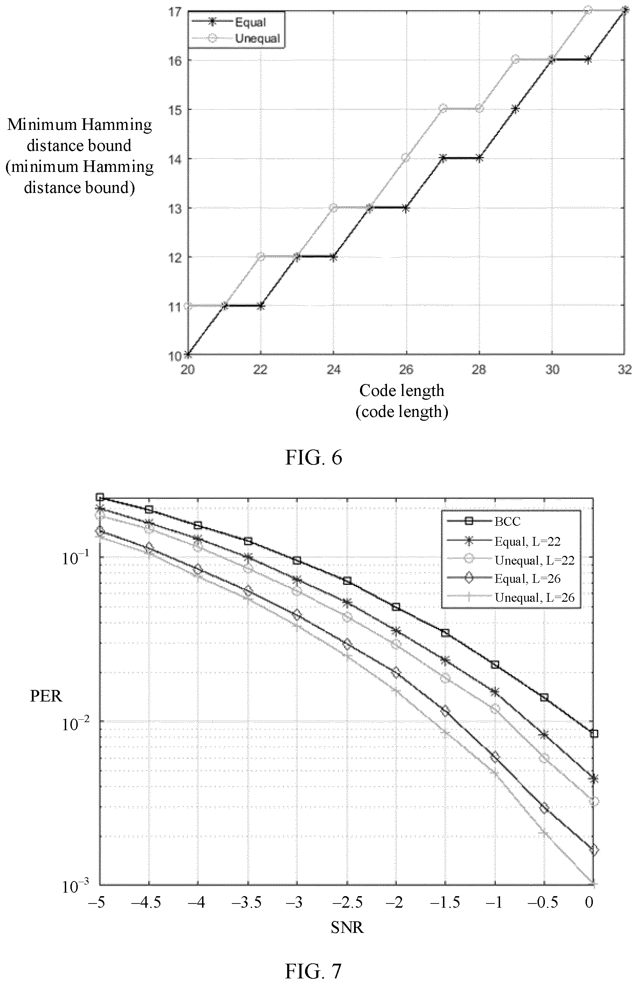

FIG. 6 is a diagram of theoretical minimum Hamming distances bounds at different code lengths according to an embodiment of this application. As shown in FIG. 6, a horizontal coordinate represents a code length (code length), and a vertical coordinate represents a theoretical minimum Hamming distance bound (minimum Hamming distance bound). It can be understood that, for precision of illustration, FIG. 6 shows only theoretical minimum Hamming distance bounds for some of code lengths. To be specific, a code length range represented by horizontal coordinates is 20 bits to 32 bits. In FIG. 6, Equal (equal) represents equal coding, and Unequal (unequal) represents unequal coding. The equal coding is a case in which 16 codewords are considered. The unequal coding is a case in which only 10 codewords are considered.

It can be learned from FIG. 6 that, when the code length L is 20, 22, 24, 26, 28, or another value, a case in which only 10 codewords (unequal coding) are considered has a specific advantage in terms of a theoretical minimum Hamming distance compared with a case in which 16 codewords (equal coding) are considered.

Examples are used below to describe how to design a codebook, to make the codebook include 10 codewords and make a Hamming distance between the 10 codewords reach a maximum value.

For example, a possible codebook generation manner is as follows:
It is assumed that K represents the bit length of the first PHR information (namely, the PHR1), L represents the length of the codeword, $L \geq 2^K$, a quantity of codewords included in the first codeword set is M, and $M \leq 2^K$.

When L=4n+2 (n is a positive integer), L+2 (namely, 4n+4) is an integer multiple of 4. In this case, an (L+2)*(L+2) normalized Hadamard matrix $H_{(L+2)}$ exists, and a codebook may be generated through the following steps.

Step 1: Select an (L+2)*(L+2) normalized Hadamard matrix $H_{(L+2)}$. It can be learned, based on characteristics of the Hadamard matrix, that a Hamming distance between any two rows in $H_{(L+2)}$ is as follows: (L+2)/2=(4(n+1))/2=2n+2. Then remove the 1st column of elements in $H_{(L+2)}$ to obtain an (L+2)*(L+1) matrix $H_{((L+2)*(L+1))}$. Because the 1st column of elements in $H_{(L+2)}$ are the same (all the elements are 1), a Hamming distance between any two rows in the matrix $H_{((L+2)*(L+1))}$ is still 2n+2.

Step 2: Select any column from the matrix $H_{((L+2)*(L+1))}$, remove the column, and divide, into two groups based on positive/negative properties of elements in the removed column, rows of a matrix obtained by removing the column, to obtain a matrix $G_+$ and a matrix $G_-$. The matrix $G_+$ includes (2n+2) rows with a length of L (in other words, a size of $G_+$ is (2n+2) rows and L columns), and a Hamming distance between any two rows of elements in the matrix $G_+$ is still 2n+2. The matrix $G_-$ includes (2n+2) rows with a length of L (in other words, a size of $G_-$ is (2n+2) rows and L columns), and a Hamming distance between any two rows of elements in the matrix $G_-$ is still 2n+2. In addition, a Hamming distance between any row of elements in the matrix $G_+$ and any row of elements in the matrix $G_-$ is 2n+1.

Step 3: Select M rows of elements from any one of the matrix $G_+$ and the matrix $G_-$, select $(2^K-M)$ rows of elements from the other matrix, and combine the elements to form a codebook matrix C. The codebook matrix C includes $2^K$ codewords with a length of L, where a minimum Hamming distance between M valid codewords is 2n+2, and a minimum Hamming distance between all codewords is 2n+1. It can be understood that the M rows of elements selected from the matrix $G_+$ or the matrix $G_-$ are the M valid codewords. The M valid codewords may be combined into the first codeword set, or the M valid codewords are some of the codewords in the first codeword set.

The codebook generated through the foregoing steps satisfies the following conditions: A minimum Hamming distance between codewords in the codebook is equal to a theoretical minimum Hamming distance bound of the codebook, that is, 2n+1; and a Hamming distance between any two codewords in the first codeword set of the codebook is equal to a theoretical minimum Hamming distance bound of the first codeword set, that is, 2n+2. In this way, coding performance of the first PHR information (PHR1) can be improved.

It can be understood that, in the foregoing steps (step 1 to step 3), different codebooks may be constructed by using different Hadamard matrices, but minimum Hamming distances of the codebooks remain the same. It can be further understood that another codebook matrix may be obtained by performing column rearrangement, row rearrangement, entire-column element negation (the element negation means that an element -1 is changed to an element 1, and an element 1 is changed to an element - 1), or another operation on the codebook matrix C obtained in step 3. The another codebook matrix and the codebook matrix C obtained in step 3 have same Hamming distance distribution.

For example, K is equal to 4, and when L=22, the following 24*24 Hadamard matrix $H_{24}$ is constructed:

$$H_{24}=\begin{bmatrix} 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 \\ 1 & -1 & 1 & -1 & 1 & 1 & 1 & -1 & -1 & -1 & 1 & 1 & -1 & 1 & -1 & 1 & 1 & 1 & 1 & -1 & -1 & -1 & 1 & -1 \\ 1 & -1 & -1 & 1 & 1 & -1 & 1 & 1 & 1 & -1 & -1 & -1 & 1 & 1 & 1 & -1 & -1 & 1 & 1 & -1 & 1 & 1 & 1 & -1 & -1 & -1 & 1 \\ 1 & 1 & -1 & -1 & 1 & 1 & -1 & 1 & 1 & 1 & -1 & -1 & -1 & 1 & 1 & 1 & -1 & -1 & 1 & 1 & -1 & 1 & 1 & -1 & -1 & -1 \\ 1 & -1 & 1 & 1 & -1 & 1 & 1 & -1 & 1 & 1 & 1 & -1 & -1 & 1 & 1 & -1 & -1 & 1 & -1 & 1 & 1 & 1 & 1 & -1 \\ 1 & -1 & -1 & 1 & 1 & -1 & 1 & 1 & -1 & 1 & 1 & 1 & 1 & -1 & 1 & 1 & -1 & -1 & 1 & 1 & -1 & 1 & 1 & 1 & -1 \\ 1 & -1 & -1 & -1 & 1 & 1 & -1 & 1 & 1 & -1 & 1 & 1 & 1 & 1 & 1 & -1 & -1 & 1 & 1 & -1 & 1 & 1 & -1 & 1 & 1 & 1 \\ 1 & 1 & -1 & -1 & 1 & 1 & -1 & -1 & 1 & 1 & -1 & 1 & 1 & 1 & 1 & 1 & -1 & -1 & 1 & 1 & -1 & 1 & 1 & -1 & 1 & 1 \\ 1 & 1 & 1 & -1 & -1 & -1 & 1 & 1 & -1 & -1 & 1 & 1 & -1 & 1 & 1 & 1 & 1 & -1 & -1 & 1 & 1 & -1 & -1 & 1 & 1 & -1 \\ 1 & 1 & 1 & 1 & -1 & -1 & -1 & 1 & 1 & -1 & -1 & 1 & 1 & -1 & 1 & 1 & 1 & 1 & -1 & -1 & 1 & 1 & -1 & -1 & 1 & 1 & -1 \\ 1 & -1 & 1 & 1 & 1 & -1 & -1 & -1 & 1 & 1 & -1 & -1 & 1 & 1 & -1 & 1 & 1 & 1 & 1 & -1 & -1 & 1 & 1 & -1 & -1 & 1 \\ 1 & 1 & -1 & 1 & 1 & 1 & -1 & -1 & -1 & 1 & 1 & -1 & -1 & 1 & 1 & -1 & 1 & 1 & 1 & 1 & -1 & -1 & 1 & 1 & -1 & -1 \\ 1 & 1 & 1 & 1 & 1 & 1 & 1 & 1 & 1 & 1 & 1 & 1 & 1 & -1 & -1 & -1 & -1 & -1 & -1 & -1 & -1 & -1 & -1 & -1 & -1 & -1 \\ 1 & -1 & 1 & -1 & 1 & 1 & 1 & -1 & -1 & -1 & 1 & 1 & -1 & -1 & 1 & 1 & -1 & 1 & 1 & -1 & -1 & -1 & 1 & 1 & 1 & -1 & 1 \\ 1 & -1 & -1 & 1 & 1 & -1 & 1 & 1 & 1 & -1 & -1 & -1 & 1 & 1 & -1 & 1 & 1 & 1 & -1 & 1 & 1 & -1 & -1 & -1 & 1 & 1 & 1 & -1 \\ 1 & 1 & -1 & -1 & 1 & 1 & -1 & 1 & 1 & 1 & -1 & -1 & -1 & -1 & 1 & 1 & 1 & -1 & 1 & 1 & -1 & -1 & -1 & 1 & 1 & 1 \\ 1 & -1 & 1 & 1 & -1 & 1 & 1 & -1 & 1 & 1 & 1 & -1 & -1 & -1 & 1 & 1 & -1 & 1 & 1 & -1 & 1 & 1 & -1 & -1 & -1 & 1 & 1 \\ 1 & -1 & -1 & 1 & 1 & -1 & 1 & 1 & -1 & 1 & 1 & 1 & 1 & -1 & -1 & 1 & 1 & -1 & 1 & 1 & -1 & 1 & 1 & -1 & -1 & -1 & 1 & 1 \\ 1 & -1 & -1 & -1 & 1 & 1 & -1 & 1 & 1 & -1 & 1 & 1 & 1 & -1 & 1 & 1 & 1 & -1 & 1 & 1 & -1 & 1 & 1 & -1 & -1 & -1 \\ 1 & 1 & -1 & -1 & 1 & 1 & -1 & -1 & 1 & 1 & -1 & 1 & 1 & -1 & 1 & 1 & 1 & -1 & 1 & 1 & -1 & 1 & 1 & -1 & -1 & -1 \\ 1 & 1 & 1 & -1 & -1 & -1 & 1 & 1 & -1 & -1 & 1 & 1 & -1 & -1 & 1 & 1 & 1 & 1 & -1 & 1 & 1 & -1 & 1 & 1 & -1 \\ 1 & 1 & 1 & 1 & -1 & -1 & -1 & 1 & 1 & -1 & -1 & 1 & 1 & -1 & -1 & -1 & 1 & 1 & 1 & 1 & -1 & 1 & 1 & 1 & -1 & 1 \\ 1 & -1 & 1 & 1 & 1 & -1 & -1 & -1 & 1 & 1 & -1 & -1 & 1 & 1 & -1 & 1 & -1 & -1 & 1 & 1 & 1 & 1 & -1 & 1 & 1 & -1 \\ 1 & 1 & -1 & 1 & 1 & 1 & -1 & -1 & -1 & 1 & 1 & -1 & -1 & 1 & 1 & -1 & -1 & 1 & 1 & 1 & 1 & -1 & 1 & 1 \end{bmatrix}$$

After the 1st column of $H_{24}$ is removed, a matrix $H_{24*23}$ is obtained. It is assumed that the 1st column of $H_{24*23}$ is selected, and when the 1st column of $H_{24*23}$ is removed, all rows are divided into the following two groups based on positive/negative properties of the 1st column of elements in $H_{24*23}$:

$$G_+^{22}=\begin{bmatrix} 1 & 1 & 1 & 1 & 1 & 1 & 1 & 1 & 1 & 1 & 1 & 1 & 1 & 1 & 1 & 1 & 1 & 1 & 1 & 1 & 1 & 1 \\ -1 & -1 & 1 & 1 & -1 & 1 & 1 & 1 & -1 & -1 & -1 & 1 & 1 & 1 & -1 & -1 & 1 & 1 & -1 & 1 & 1 & 1 & -1 & -1 & -1 \\ -1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 & 1 & 1 & 1 \\ 1 & -1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 & 1 & 1 \\ 1 & 1 & -1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 \\ -1 & 1 & 1 & 1 & -1 & -1 & -1 & 1 & 1 & -1 & -1 & 1 & 1 & 1 & 1 & -1 & -1 & -1 & 1 & 1 & -1 & -1 & 1 \\ 1 & 1 & 1 & 1 & 1 & 1 & 1 & 1 & 1 & 1 & -1 & -1 & -1 & -1 & -1 & -1 & -1 & -1 & -1 & -1 & -1 & -1 \\ -1 & -1 & 1 & 1 & -1 & 1 & 1 & 1 & -1 & -1 & -1 & -1 & 1 & 1 & 1 & -1 & 1 & 1 & -1 & -1 & 1 & 1 & 1 & 1 \\ -1 & -1 & -1 & 1 & 1 & -1 & -1 & 1 & 1 & -1 & 1 & 1 & -1 & 1 & 1 & 1 & 1 & -1 & 1 & 1 & -1 & 1 & 1 & -1 \\ 1 & -1 & -1 & -1 & 1 & 1 & -1 & -1 & 1 & 1 & -1 & -1 & -1 & 1 & 1 & 1 & 1 & -1 & 1 & 1 & 1 & -1 & 1 & 1 & -1 \\ 1 & 1 & -1 & -1 & -1 & 1 & 1 & -1 & -1 & 1 & 1 & -1 & -1 & -1 & -1 & 1 & 1 & 1 & 1 & -1 & 1 & 1 & 1 & -1 & 1 \\ -1 & 1 & 1 & 1 & -1 & -1 & -1 & 1 & 1 & -1 & -1 & -1 & -1 & 1 & 1 & -1 & -1 & 1 & 1 & 1 & 1 & -1 & 1 & 1 \end{bmatrix}$$

$$G_-^{22}=\begin{bmatrix} 1 & -1 & 1 & 1 & 1 & -1 & -1 & -1 & 1 & 1 & -1 & 1 & -1 & 1 & 1 & -1 & 1 & 1 & 1 & -1 & -1 & -1 & 1 & 1 & -1 \\ -1 & 1 & 1 & -1 & 1 & 1 & 1 & -1 & -1 & -1 & 1 & 1 & 1 & -1 & -1 & 1 & 1 & -1 & 1 & 1 & 1 & -1 & -1 & -1 & 1 & 1 \\ 1 & -1 & -1 & 1 & 1 & -1 & 1 & 1 & 1 & -1 & -1 & 1 & 1 & -1 & 1 & 1 & -1 & 1 & 1 & 1 & 1 & -1 & -1 & 1 \\ -1 & 1 & 1 & -1 & -1 & 1 & 1 & -1 & 1 & 1 & 1 & -1 & 1 & 1 & -1 & -1 & 1 & 1 & -1 & 1 & 1 & 1 & 1 & -1 \\ -1 & -1 & 1 & 1 & -1 & -1 & 1 & 1 & -1 & 1 & 1 & 1 & 1 & -1 & -1 & -1 & 1 & 1 & -1 & -1 & 1 & 1 & -1 & 1 & 1 & 1 & 1 \\ 1 & 1 & 1 & -1 & -1 & -1 & 1 & 1 & -1 & -1 & 1 & 1 & 1 & -1 & 1 & 1 & 1 & -1 & -1 & -1 & 1 & 1 & -1 & 1 & 1 \\ 1 & -1 & 1 & 1 & 1 & -1 & -1 & -1 & 1 & 1 & -1 & -1 & 1 & 1 & -1 & -1 & -1 & 1 & 1 & 1 & 1 & -1 & 1 & 1 \\ -1 & 1 & -1 & 1 & 1 & 1 & -1 & -1 & -1 & 1 & 1 & -1 & 1 & 1 & -1 & -1 & -1 & 1 & 1 & 1 & 1 & -1 \\ 1 & -1 & -1 & 1 & 1 & -1 & 1 & 1 & 1 & -1 & -1 & 1 & 1 & -1 & 1 & 1 & -1 & -1 & -1 & 1 & 1 & 1 \\ -1 & 1 & -1 & 1 & 1 & -1 & 1 & 1 & 1 & 1 & -1 & 1 & 1 & 1 & -1 & 1 & 1 & -1 & -1 & -1 & 1 & 1 \\ -1 & 1 & 1 & -1 & -1 & 1 & 1 & -1 & 1 & 1 & 1 & -1 & 1 & 1 & 1 & -1 & 1 & 1 & -1 & -1 & -1 & 1 \\ 1 & 1 & 1 & -1 & -1 & -1 & 1 & 1 & -1 & 1 & 1 & -1 & 1 & 1 & -1 & -1 & 1 & 1 & 1 & 1 & -1 & 1 & 1 & -1 \end{bmatrix}$$

In this case, a Hamming distance between any two rows of elements in $G_+^{22}$ is 12, a Hamming distance between any two rows of elements in $G_-^{22}$ is also 12, and a Hamming distance between any row of elements in $G_+^{22}$ and any row of elements in $G_-^{22}$ is 11. Then 12 (to be specific, M is equal to 12) rows of elements are selected from $G_-^{22}$, four rows of elements are selected from $G_+^{22}$, an element 1 is mapped to 0, and an element -1 is mapped to 1, to obtain codewords shown in the following Table 1. A size of $G_+^{22}$ is 12 rows and 22 columns, and a size of $G_-^{22}$ is also 12 rows and 22 columns.

It can be understood that a mapping relationship between elements 1 and -1 in a matrix, and 1 and 0 is not limited in this embodiment of this application. It can be further understood that, in the following Table 1, a Hamming distance between any two of the first 10 codewords is 12. Based on FIG. 6, this reaches a theoretical bound in unequal coding in a case in which the code length L is equal to 22. In addition, for all codewords shown in the following Table 1, a minimum Hamming distance may reach 11. This also reaches a theoretical bound in equal coding in a case in which the code length L is equal to 22.

Table 1 Example 1 of a codebook with a code length (L) of 22

| First PHR information (PHR1) | | Codeword (codeword) |
|---|---|---|
| Data rate (data rate) (three bits) | LDPC indication (LDPC indication) (one bit) | |
| 000 | 0 | 0 1 0 0 0 1 1 1 0 1 0 1 0 1 0 0 0 1 1 1 0 1 |
| 000 | 1 | 1 0 1 0 0 0 1 1 1 0 0 1 1 0 1 0 0 0 1 1 1 0 |
| 001 | 0 | 0 1 1 0 1 0 0 0 1 1 0 1 0 1 1 0 1 0 0 0 1 1 |
| 001 | 1 | 1 0 1 1 0 1 0 0 0 1 0 1 1 0 1 1 0 1 0 0 0 1 |
| 010 | 0 | 1 1 0 1 1 0 1 0 0 0 0 1 1 1 0 1 1 0 1 0 0 0 |
| 010 | 1 | 0 0 0 1 1 1 0 1 1 0 0 1 0 0 0 1 1 1 0 1 1 0 |
| 011 | 0 | 0 1 0 0 0 1 1 1 0 1 1 0 1 0 1 1 1 0 0 0 1 0 |
| 011 | 1 | 1 0 1 0 0 0 1 1 1 0 1 0 0 1 0 1 1 1 0 0 0 1 |
| 100 | 0 | 0 1 1 0 1 0 0 0 1 1 1 0 1 0 0 1 0 1 1 1 0 0 |
| 100 | 1 | 1 0 1 1 0 1 0 0 0 1 1 0 0 1 0 0 1 0 1 1 1 0 |
| 101 | 0 | 1 1 0 1 1 0 1 0 0 0 1 0 0 0 1 0 0 1 0 1 1 1 |
| 101 | 1 | 0 0 0 1 1 1 0 1 1 0 1 0 1 1 1 0 0 0 1 0 0 1 |
| 110 | 0 | 1 1 1 0 1 1 0 1 0 0 1 1 0 0 0 1 0 0 1 0 1 1 |
| 110 | 1 | 0 1 1 1 0 1 1 0 1 0 1 1 1 0 0 0 1 0 0 1 0 1 |
| 111 | 0 | 0 0 1 1 1 0 1 1 0 1 1 1 1 1 0 0 0 1 0 0 1 0 |
| 111 | 1 | 1 0 0 0 1 1 1 0 1 1 1 1 0 1 1 1 0 0 0 1 0 0 |

For another example, K is equal to 4, and when L=26, a 28*28 normalized Hadamard matrix $H_{28}$ is as follows:

$$H_{28}=\begin{bmatrix}
1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1 \\
1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1}\ 1\ 1\ {-1}\ 1 \\
1\ 1\ 1\ {-1}\ 1\ 1\ {-1}{-1}{-1}{-1}\ 1\ 1\ {-1}\ 1\ 1\ {-1}\ 1\ {-1}\ 1\ 1\ {-1}{-1}{-1}{-1}\ 1\ 1\ 1\ {-1} \\
1\ {-1}\ 1\ 1\ 1\ {-1}\ 1\ 1\ {-1}{-1}{-1}{-1}\ 1\ 1\ {-1}\ 1\ 1\ {-1}\ 1\ {-1}\ 1\ 1\ {-1}{-1}{-1}{-1}\ 1\ 1 \\
1\ 1\ {-1}\ 1\ 1\ 1\ {-1}\ 1\ 1\ {-1}{-1}{-1}{-1}\ 1\ 1\ {-1}\ 1\ 1\ {-1}\ 1\ {-1}\ 1\ 1\ {-1}{-1}{-1}{-1}\ 1 \\
1\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1\ {-1}{-1}{-1}{-1}{-1} \\
1\ {-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1\ {-1}{-1}{-1}{-1} \\
1\ {-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1\ {-1}{-1}{-1} \\
1\ {-1}{-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1\ {-1}{-1} \\
1\ {-1}{-1}{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1 \\
1\ 1\ {-1}{-1}{-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1}\ 1\ 1 \\
1\ 1\ 1\ {-1}{-1}{-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1} \\
1\ {-1}\ 1\ 1\ {-1}{-1}{-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1 \\
1\ 1\ {-1}\ 1\ 1\ {-1}{-1}{-1}{-1}\ 1\ 1\ {-1}\ 1\ 1\ 1\ {-1}\ 1\ {-1}\ 1\ 1\ {-1}{-1}{-1}{-1}\ 1\ 1\ {-1}\ 1\ {-1} \\
1\ {-1}{-1}{-1}{-1}{-1}{-1}{-1}{-1}{-1}{-1}{-1}{-1}{-1}{-1}\ 1\ 1\ 1\ 1\ 1\ 1\ 1\ 1\ 1\ 1\ 1\ 1\ 1\ 1 \\
1\ {-1}\ 1\ {-1}\ 1\ 1\ {-1}{-1}{-1}{-1}\ 1\ 1\ 1\ {-1}\ 1\ 1\ {-1}\ 1\ {-1}{-1}\ 1\ 1\ 1\ 1\ {-1}{-1}\ 1\ 1\ {-1} \\
1\ 1\ {-1}\ 1\ {-1}\ 1\ 1\ {-1}{-1}{-1}{-1}\ 1\ 1\ {-1}\ 1\ {-1}{-1}\ 1\ 1\ {-1}{-1}\ 1\ 1\ 1\ 1\ {-1}{-1}\ 1 \\
1\ {-1}\ 1\ {-1}\ 1\ {-1}\ 1\ 1\ {-1}{-1}{-1}{-1}\ 1\ 1\ 1\ {-1}\ {-1}{-1}\ 1\ 1\ {-1}{-1}\ 1\ 1\ 1\ 1\ {-1}{-1} \\
1\ 1\ {-1}\ 1\ {-1}\ 1\ {-1}\ 1\ 1\ {-1}{-1}{-1}{-1}\ 1\ 1\ {-1}\ 1\ {-1}{-1}\ 1\ 1\ {-1}{-1}\ 1\ 1\ 1\ 1\ {-1} \\
1\ 1\ 1\ {-1}\ 1\ {-1}\ 1\ {-1}\ 1\ 1\ {-1}{-1}{-1}{-1}\ 1\ {-1}{-1}\ 1\ 1\ {-1}{-1}\ 1\ 1\ {-1}{-1}\ 1\ 1\ 1 \\
1\ {-1}\ 1\ 1\ {-1}\ 1\ {-1}\ 1\ {-1}\ 1\ 1\ {-1}{-1}{-1}\ 1\ 1\ {-1}\ 1\ 1\ {-1}{-1}\ 1\ 1\ {-1}{-1}\ 1\ 1\ 1 \\
1\ {-1}{-1}\ 1\ 1\ {-1}\ 1\ {-1}\ 1\ {-1}\ 1\ 1\ {-1}{-1}\ 1\ 1\ 1\ {-1}\ 1\ 1\ {-1}{-1}\ 1\ 1\ {-1}{-1}\ 1\ 1 \\
1\ {-1}{-1}{-1}\ 1\ 1\ {-1}\ 1\ {-1}\ 1\ {-1}\ 1\ 1\ {-1}\ 1\ 1\ 1\ 1\ {-1}\ 1\ 1\ {-1}{-1}\ 1\ 1\ {-1}{-1}\ 1 \\
1\ {-1}{-1}{-1}{-1}\ 1\ 1\ {-1}\ 1\ {-1}\ 1\ {-1}\ 1\ 1\ 1\ 1\ 1\ 1\ 1\ {-1}{-1}\ 1\ 1\ {-1}{-1}{-1}{-1}\ 1\ 1 \\
1\ 1\ {-1}{-1}{-1}{-1}\ 1\ 1\ {-1}\ 1\ {-1}\ 1\ {-1}\ 1\ 1\ {-1}\ 1\ 1\ 1\ 1\ {-1}{-1}\ 1\ 1\ {-1}{-1}{-1}{-1} \\
1\ 1\ 1\ {-1}{-1}{-1}{-1}\ 1\ 1\ {-1}\ 1\ {-1}\ 1\ {-1}\ 1\ 1\ 1\ 1\ 1\ {-1}{-1}\ 1\ 1\ {-1}{-1}{-1}{-1}\ 1 \\
1\ {-1}\ 1\ 1\ {-1}{-1}{-1}{-1}\ 1\ 1\ {-1}\ 1\ {-1}\ 1\ 1\ 1\ 1\ 1\ {-1}{-1}\ 1\ 1\ {-1}{-1}\ 1\ {-1}{-1}{-1} \\
1\ 1\ {-1}\ 1\ 1\ {-1}{-1}{-1}{-1}\ 1\ 1\ {-1}\ 1\ {-1}\ 1\ 1\ {-1}\ 1\ {-1}{-1}\ 1\ 1\ 1\ 1\ {-1}{-1}\ 1\ {-1}
\end{bmatrix}$$

After the 1st column of $H_{28}$ is removed, a matrix $H_{28*27}$ is obtained. It is assumed that the 14th column of $H_{28*27}$ is selected, and when the 14th column of $H_{28*27}$ is removed, all rows are divided into the following two groups based on positive/negative properties of elements in the 14th column of $H_{28*27}$:

$$G_{+}^{26}=\begin{bmatrix}
1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1 \\
{-1}\ 1\ {-1}\ 1\ 1\ {-1}{-1}{-1}{-1}\ 1\ 1\ {-1}\ 1\ {-1}{-1}\ 1\ 1\ {-1}{-1}\ 1\ 1\ 1\ 1\ {-1}{-1}\ 1\ {-1} \\
1\ {-1}\ 1\ {-1}\ 1\ 1\ {-1}{-1}{-1}{-1}\ 1\ 1\ {-1}{-1}{-1}{-1}\ 1\ 1\ {-1}{-1}\ 1\ 1\ 1\ 1\ {-1}{-1}\ 1\ 1 \\
{-1}\ 1\ {-1}\ 1\ {-1}\ 1\ 1\ {-1}{-1}{-1}{-1}\ 1\ 1\ 1\ {-1}{-1}{-1}{-1}\ 1\ {-1}{-1}\ 1\ 1\ 1\ 1\ {-1}{-1} \\
1\ {-1}\ 1\ {-1}\ 1\ {-1}\ 1\ 1\ {-1}{-1}{-1}{-1}\ 1\ {-1}\ 1\ 1\ {-1}{-1}{-1}{-1}\ 1\ {-1}\ 1\ 1\ 1\ 1\ {-1} \\
1\ 1\ {-1}\ 1\ {-1}\ 1\ {-1}\ 1\ 1\ {-1}{-1}{-1}{-1}{-1}{-1}\ 1\ 1\ {-1}{-1}{-1}\ 1\ 1\ {-1}{-1}\ 1\ 1\ 1 \\
{-1}\ 1\ 1\ {-1}\ 1\ {-1}\ 1\ {-1}\ 1\ 1\ {-1}{-1}{-1}\ 1\ 1\ {-1}\ 1\ {-1}{-1}{-1}\ 1\ 1\ {-1}{-1}\ 1\ 1\ 1 \\
{-1}{-1}\ 1\ 1\ {-1}\ 1\ {-1}\ 1\ {-1}\ 1\ 1\ {-1}{-1}\ 1\ 1\ {-1}\ 1\ {-1}{-1}{-1}\ 1\ 1\ {-1}{-1}\ 1\ 1 \\
{-1}{-1}{-1}\ 1\ 1\ {-1}\ 1\ {-1}\ 1\ {-1}\ 1\ 1\ {-1}\ 1\ 1\ 1\ {-1}\ 1\ {-1}{-1}{-1}\ 1\ 1\ {-1}{-1}\ 1 \\
{-1}{-1}{-1}{-1}\ 1\ 1\ {-1}\ 1\ {-1}\ 1\ {-1}\ 1\ 1\ 1\ 1\ 1\ 1\ {-1}{-1}\ 1\ 1\ {-1}{-1}{-1}{-1}\ 1\ 1 \\
1\ {-1}{-1}{-1}{-1}\ 1\ 1\ {-1}\ 1\ {-1}\ 1\ {-1}\ 1\ {-1}\ 1\ 1\ 1\ 1\ {-1}{-1}\ 1\ 1\ {-1}{-1}{-1}{-1}\ 1 \\
1\ 1\ {-1}{-1}{-1}{-1}\ 1\ 1\ {-1}\ 1\ {-1}\ 1\ {-1}\ 1\ 1\ 1\ 1\ {-1}{-1}\ 1\ 1\ {-1}{-1}\ 1\ {-1}{-1}{-1}\ 1 \\
{-1}\ 1\ 1\ {-1}{-1}{-1}{-1}\ 1\ 1\ {-1}\ 1\ {-1}\ 1\ 1\ {-1}\ 1\ 1\ 1\ 1\ {-1}{-1}\ 1\ 1\ {-1}{-1}{-1}{-1} \\
1\ {-1}\ 1\ 1\ {-1}{-1}{-1}{-1}\ 1\ 1\ {-1}\ 1\ {-1}\ 1\ 1\ {-1}\ 1\ 1\ 1\ 1\ {-1}{-1}\ 1\ 1\ {-1}{-1}{-1}
\end{bmatrix}$$

$$G_{-}^{26}=\begin{bmatrix}
1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1}\ 1\ 1\ {-1}\ 1 \\
1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1}\ 1\ 1\ {-1} \\
{-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1}\ 1\ 1 \\
1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1}\ 1 \\
1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1}{-1} \\
{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1}{-1} \\
{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1}{-1} \\
{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1\ {-1} \\
{-1}{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1}\ 1\ 1 \\
1\ {-1}{-1}{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ 1\ {-1} \\
1\ 1\ {-1}{-1}{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1\ {-1} \\
{-1}\ 1\ 1\ {-1}{-1}{-1}{-1}\ 1\ 1\ 1\ {-1}\ 1\ 1\ 1\ {-1}\ 1\ 1\ {-1}{-1}{-1}{-1}\ 1\ 1\ {-1}\ 1\ {-1}\ 1 \\
1\ {-1}\ 1\ 1\ {-1}{-1}{-1}{-1}\ 1\ 1\ {-1}\ 1\ 1\ 1\ {-1}\ 1\ 1\ {-1}{-1}{-1}{-1}\ 1\ 1\ {-1}\ 1\ {-1}\ 1 \\
{-1}{-1}{-1}{-1}{-1}{-1}{-1}{-1}{-1}{-1}{-1}{-1}{-1}\ 1\ 1\ 1\ 1\ 1\ 1\ 1\ 1\ 1\ 1\ 1\ 1\ 1\ 1
\end{bmatrix}$$

In this case, a Hamming distance between any two rows of elements in $G_{+}^{26}$ is 14, a Hamming distance between any two rows of elements in $G_-^{26}$ is also 14, and a Hamming distance between any row of elements in $G_+^{26}$ and any row of elements in $G_-^{26}$ is 13. Then 14 (to be specific, M is equal to 14) rows of elements are selected from $G_-^{26}$, two rows of elements (any two rows, where the last two rows in $G_+^{26}$ are used as an example in the following Table 2) are selected from $G_+^{26}$, an element 1 is mapped to 0, and an element -1 is mapped to 1, to obtain codewords shown in the following Table 2. A size of $G_+^{26}$ is 14 rows and 26 columns, and a size of $G_-^{26}$ is also 14 rows and 26 columns.

It can be understood that a mapping relationship between elements 1 and -1 in a matrix, and 1 and 0 is not limited in this embodiment of this application. It can be further understood that, in the following Table 2, a Hamming distance between any two of the first 10 codewords is 14. Based on FIG. 6, this reaches a theoretical bound in unequal coding in a case in which the code length L is equal to 26. In addition, for all codewords shown in the following Table 2, a minimum Hamming distance may reach 13. This also reaches a theoretical bound in equal coding in a case in which the code length L is equal to 26.

Table 2 Example 1 of a codebook with a code length (L) of 26

| First PHR information (PHR1) | | |
|---|---|---|
| Data rate (data rate) (three bits) | LDPC indication (LDPC indication) (one bit) | Codeword (codeword) |
| 000 | 0 | 0 0 1 0 0 1 1 1 1 0 0 1 0 1 0 1 0 0 1 1 1 1 0 0 1 0 |
| 000 | 1 | 0 0 0 1 0 0 1 1 1 1 0 0 1 0 1 0 1 0 0 1 1 1 1 0 0 1 |
| 001 | 0 | 1 0 0 0 1 0 0 1 1 1 1 0 0 1 0 1 0 1 0 0 1 1 1 1 0 0 |
| 001 | 1 | 0 1 0 0 0 1 0 0 1 1 1 1 0 0 1 0 1 0 1 0 0 1 1 1 1 0 |
| 010 | 0 | 0 0 1 0 0 0 1 0 0 1 1 1 1 0 0 1 0 1 0 1 0 0 1 1 1 1 |
| 010 | 1 | 1 0 0 1 0 0 0 1 0 0 1 1 1 1 0 0 1 0 1 0 1 0 0 1 1 1 |
| 011 | 0 | 1 1 0 0 1 0 0 0 1 0 0 1 1 1 1 0 0 1 0 1 0 1 0 0 1 1 |
| 011 | 1 | 1 1 1 0 0 1 0 0 0 1 0 0 1 1 1 1 0 0 1 0 1 0 1 0 0 1 |
| 100 | 0 | 1 1 1 1 0 0 1 0 0 0 1 0 0 1 1 1 1 0 0 1 0 1 0 1 0 0 |
| 100 | 1 | 0 1 1 1 1 0 0 1 0 0 0 1 0 0 1 1 1 1 0 0 1 0 1 0 1 0 |
| 101 | 0 | 0 0 1 1 1 1 0 0 1 0 0 0 1 0 0 1 1 1 1 0 0 1 0 1 0 1 |
| 101 | 1 | 1 0 0 1 1 1 1 0 0 1 0 0 0 1 0 0 1 1 1 1 0 0 1 0 1 0 |
| 110 | 0 | 0 1 0 0 1 1 1 1 0 0 1 0 0 0 1 0 0 1 1 1 1 0 0 1 0 1 |
| 110 | 1 | 1 1 1 1 1 1 1 1 1 1 1 1 1 0 0 0 0 0 0 0 0 0 0 0 0 0 |
| 111 | 0 | 1 0 0 1 1 1 1 0 0 1 0 1 0 0 1 1 0 0 0 0 1 1 0 1 1 1 |
| 111 | 1 | 0 1 0 0 1 1 1 1 0 0 1 0 1 1 0 1 1 0 0 0 0 1 1 0 1 1 |

For still another example, K is equal to 4, and when L=30, a 32*32 normalized Hadamard matrix $H_{32}$ is as follows:

$$H_{32}=\begin{bmatrix}
1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1 \\
1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1}\ 1\ {-1} \\
1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1} \\
1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1 \\
1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1} \\
1\ {-1}\ 1\ {-1}{-1}\ 1\ {-1}\ 1\ 1\ {-1}\ 1\ {-1}{-1}\ 1\ {-1}\ 1\ 1\ {-1}\ 1\ {-1}{-1}\ 1\ {-1}\ 1\ 1\ {-1}\ 1\ {-1}{-1}\ 1\ {-1}\ 1 \\
1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1 \\
1\ {-1}{-1}\ 1\ {-1}\ 1\ 1\ {-1}\ 1\ {-1}{-1}\ 1\ 1\ {-1}\ 1\ {-1}{-1}\ 1\ 1\ {-1}\ 1\ {-1}{-1}\ 1\ {-1}\ 1\ 1\ {-1}{-1}\ 1\ 1\ {-1} \\
1\ 1\ 1\ 1\ 1\ 1\ 1\ 1\ {-1}{-1}{-1}{-1}{-1}{-1}{-1}{-1}\ 1\ 1\ 1\ 1\ 1\ 1\ 1\ 1\ {-1}{-1}{-1}{-1}{-1}{-1}{-1}{-1} \\
1\ {-1}\ 1\ {-1}\ 1\ {-1}\ 1\ {-1}{-1}\ 1\ {-1}\ 1\ {-1}\ 1\ {-1}\ 1\ 1\ {-1}\ 1\ {-1}\ 1\ {-1}\ 1\ {-1}{-1}\ 1\ {-1}\ 1\ {-1}\ 1\ {-1}\ 1 \\
1\ 1\ {-1}{-1}\ 1\ 1\ {-1}{-1}{-1}{-1}\ 1\ 1\ {-1}{-1}\ 1\ 1\ 1\ 1\ {-1}{-1}\ 1\ 1\ {-1}{-1}{-1}{-1}\ 1\ 1\ {-1}{-1}\ 1\ 1 \\
1\ {-1}{-1}\ 1\ 1\ {-1}{-1}\ 1\ {-1}\ 1\ 1\ {-1}{-1}\ 1\ 1\ {-1}\ 1\ {-1}{-1}\ 1\ 1\ {-1}{-1}\ 1\ {-1}\ 1\ 1\ {-1}{-1}\ 1\ 1\ {-1} \\
1\ 1\ 1\ 1\ {-1}{-1}{-1}{-1}{-1}{-1}{-1}{-1}\ 1\ 1\ 1\ 1\ 1\ 1\ 1\ 1\ {-1}{-1}{-1}{-1}{-1}{-1}{-1}{-1}\ 1\ 1\ 1\ 1 \\
1\ {-1}\ 1\ {-1}{-1}\ 1\ {-1}\ 1\ {-1}\ 1\ {-1}\ 1\ 1\ {-1}\ 1\ {-1}\ 1\ {-1}\ 1\ {-1}{-1}\ 1\ {-1}\ 1\ {-1}\ 1\ {-1}\ 1\ 1\ {-1}\ 1\ {-1} \\
1\ 1\ {-1}{-1}{-1}{-1}\ 1\ 1\ {-1}{-1}\ 1\ 1\ 1\ 1\ {-1}{-1}\ 1\ 1\ {-1}{-1}{-1}{-1}\ 1\ 1\ {-1}{-1}\ 1\ 1\ 1\ 1\ {-1}{-1} \\
1\ {-1}{-1}\ 1\ {-1}\ 1\ 1\ {-1}{-1}\ 1\ 1\ {-1}\ 1\ {-1}{-1}\ 1\ 1\ {-1}{-1}\ 1\ {-1}\ 1\ 1\ {-1}{-1}\ 1\ 1\ {-1}\ 1\ {-1}{-1}\ 1 \\
1\ 1\ 1\ 1\ 1\ 1\ 1\ 1\ 1\ 1\ 1\ 1\ 1\ 1\ 1\ 1\ {-1}{-1}{-1}{-1}{-1}{-1}{-1}{-1}{-1}{-1}{-1}{-1}{-1}{-1}{-1}{-1} \\
1\ {-1}\ 1\ {-1}\ 1\ {-1}\ 1\ {-1}\ 1\ {-1}\ 1\ {-1}\ 1\ {-1}\ 1\ {-1}{-1}\ 1\ {-1}\ 1\ {-1}\ 1\ {-1}\ 1\ {-1}\ 1\ {-1}\ 1\ {-1}\ 1\ {-1}\ 1 \\
1\ 1\ {-1}{-1}\ 1\ 1\ {-1}{-1}\ 1\ 1\ {-1}{-1}\ 1\ 1\ {-1}{-1}{-1}{-1}\ 1\ 1\ {-1}{-1}\ 1\ 1\ {-1}{-1}\ 1\ 1\ {-1}{-1}\ 1\ 1 \\
1\ {-1}{-1}\ 1\ 1\ {-1}{-1}\ 1\ 1\ {-1}{-1}\ 1\ 1\ {-1}{-1}\ 1\ {-1}\ 1\ 1\ {-1}{-1}\ 1\ 1\ {-1}{-1}\ 1\ 1\ {-1}{-1}\ 1\ 1\ {-1} \\
1\ 1\ 1\ 1\ {-1}{-1}{-1}{-1}\ 1\ 1\ 1\ 1\ {-1}{-1}{-1}{-1}{-1}{-1}{-1}{-1}\ 1\ 1\ 1\ 1\ {-1}{-1}{-1}{-1}\ 1\ 1\ 1\ 1 \\
1\ {-1}\ 1\ {-1}{-1}\ 1\ {-1}\ 1\ 1\ {-1}\ 1\ {-1}{-1}\ 1\ {-1}\ 1\ {-1}\ 1\ {-1}\ 1\ 1\ {-1}\ 1\ {-1}{-1}\ 1\ {-1}\ 1\ 1\ {-1}\ 1\ {-1} \\
1\ 1\ {-1}{-1}{-1}{-1}\ 1\ 1\ 1\ 1\ {-1}{-1}{-1}{-1}\ 1\ 1\ {-1}{-1}\ 1\ 1\ 1\ 1\ {-1}{-1}{-1}{-1}\ 1\ 1\ 1\ 1\ {-1}{-1} \\
1\ {-1}{-1}\ 1\ {-1}\ 1\ 1\ {-1}\ 1\ {-1}{-1}\ 1\ 1\ {-1}\ 1\ {-1}{-1}\ 1\ 1\ {-1}\ 1\ {-1}{-1}\ 1\ {-1}\ 1\ 1\ {-1}\ 1\ {-1}{-1}\ 1 \\
1\ 1\ 1\ 1\ 1\ 1\ 1\ 1\ {-1}{-1}{-1}{-1}{-1}{-1}{-1}{-1}{-1}{-1}{-1}{-1}{-1}{-1}{-1}{-1}\ 1\ 1\ 1\ 1\ 1\ 1\ 1\ 1 \\
1\ {-1}\ 1\ {-1}\ 1\ {-1}\ 1\ {-1}{-1}\ 1\ {-1}\ 1\ {-1}\ 1\ {-1}\ 1\ {-1}\ 1\ {-1}\ 1\ {-1}\ 1\ {-1}\ 1\ 1\ {-1}\ 1\ {-1}\ 1\ {-1}\ 1\ {-1} \\
1\ 1\ {-1}{-1}\ 1\ 1\ {-1}{-1}{-1}{-1}\ 1\ 1\ {-1}{-1}\ 1\ 1\ {-1}{-1}\ 1\ 1\ {-1}{-1}\ 1\ 1\ 1\ 1\ {-1}{-1}\ 1\ 1\ {-1}{-1} \\
1\ {-1}{-1}\ 1\ 1\ {-1}{-1}\ 1\ {-1}\ 1\ 1\ {-1}{-1}\ 1\ 1\ {-1}{-1}\ 1\ 1\ {-1}{-1}\ 1\ {-1}\ 1\ 1\ {-1}{-1}\ 1\ 1\ {-1}{-1}\ 1\ 1 \\
1\ 1\ 1\ 1\ {-1}{-1}{-1}{-1}{-1}{-1}{-1}{-1}\ 1\ 1\ 1\ 1\ {-1}{-1}{-1}{-1}\ 1\ 1\ 1\ 1\ 1\ 1\ 1\ 1\ {-1}{-1}{-1}{-1} \\
1\ {-1}\ 1\ {-1}{-1}\ 1\ {-1}\ 1\ {-1}\ 1\ {-1}\ 1\ 1\ {-1}\ 1\ {-1}{-1}\ 1\ {-1}\ 1\ 1\ {-1}\ 1\ {-1}\ 1\ {-1}\ 1\ {-1}{-1}\ 1\ {-1}\ 1 \\
1\ 1\ {-1}{-1}{-1}{-1}\ 1\ 1\ {-1}{-1}\ 1\ 1\ 1\ 1\ {-1}{-1}{-1}{-1}\ 1\ 1\ 1\ 1\ {-1}{-1}\ 1\ 1\ {-1}{-1}{-1}{-1}\ 1\ 1 \\
1\ {-1}{-1}\ 1\ {-1}\ 1\ 1\ {-1}{-1}\ 1\ 1\ {-1}\ 1\ {-1}{-1}\ 1\ {-1}\ 1\ 1\ {-1}\ 1\ {-1}{-1}\ 1\ 1\ {-1}{-1}\ 1\ {-1}\ 1\ 1\ {-1}
\end{bmatrix}$$

After the 1st column of $H_{32}$ is removed, a matrix $H_{32*31}$ is obtained It is assumed that the 1st column of $H_{32*31}$ is selected, and when the 1st column of $H_{32*31}$ is removed, all rows are divided into the following two groups based on positive/negative properties of the 1st column of elements in $H_{32*31}$:

$$G_{+}^{30}=\begin{bmatrix}
1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1\ 1 \\
{-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1} \\
1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1} \\
{-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1 \\
1\ 1\ 1\ 1\ 1\ 1\ {-1}{-1}{-1}{-1}{-1}{-1}{-1}{-1}\ 1\ 1\ 1\ 1\ 1\ 1\ 1\ 1\ {-1}{-1}{-1}{-1}{-1}{-1}{-1}{-1} \\
{-1}{-1}\ 1\ 1\ {-1}{-1}{-1}{-1}\ 1\ 1\ {-1}{-1}\ 1\ 1\ 1\ 1\ {-1}{-1}\ 1\ 1\ {-1}{-1}{-1}{-1}\ 1\ 1\ {-1}{-1}\ 1\ 1 \\
1\ 1\ {-1}{-1}{-1}{-1}{-1}{-1}{-1}{-1}\ 1\ 1\ 1\ 1\ 1\ 1\ 1\ 1\ {-1}{-1}{-1}{-1}{-1}{-1}{-1}{-1}\ 1\ 1\ 1\ 1 \\
{-1}{-1}{-1}{-1}\ 1\ 1\ {-1}{-1}\ 1\ 1\ 1\ 1\ {-1}{-1}\ 1\ 1\ {-1}{-1}{-1}{-1}\ 1\ 1\ {-1}{-1}\ 1\ 1\ 1\ 1\ {-1}{-1} \\
1\ 1\ 1\ 1\ 1\ 1\ 1\ 1\ {-1}{-1}{-1}{-1}{-1}{-1}{-1}{-1}{-1}{-1}{-1}{-1}{-1}{-1}{-1}{-1}{-1}{-1}{-1}{-1}{-1}{-1} \\
{-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1\ {-1}{-1}\ 1\ 1 \\
1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1\ 1\ 1\ {-1}{-1}{-1}{-1}\ 1\ 1 \\
{-1}{-1}{-1}{-1}\ 1\ 1\ 1\ 1\ {-1}{-1}{-1}{-1}\ 1\ 1\ {-1}{-1}\ 1\ 1\ 1\ 1\ {-1}{-1}{-1}{-1}\ 1\ 1\ 1\ 1\ {-1}{-1} \\
1\ 1\ 1\ 1\ 1\ 1\ {-1}{-1}{-1}{-1}{-1}{-1}{-1}{-1}{-1}{-1}{-1}{-1}{-1}{-1}{-1}{-1}\ 1\ 1\ 1\ 1\ 1\ 1\ 1\ 1 \\
{-1}{-1}\ 1\ 1\ {-1}{-1}{-1}{-1}\ 1\ 1\ {-1}{-1}\ 1\ 1\ {-1}{-1}\ 1\ 1\ 1\ 1\ {-1}{-1}\ 1\ 1\ {-1}{-1} \\
1\ 1\ {-1}{-1}{-1}{-1}{-1}{-1}{-1}{-1}{-1}{-1}\ 1\ 1\ 1\ 1\ {-1}{-1}{-1}{-1}\ 1\ 1\ 1\ 1\ 1\ 1\ 1\ 1\ {-1}{-1}{-1}{-1} \\
{-1}{-1}{-1}{-1}\ 1\ 1\ {-1}{-1}\ 1\ 1\ 1\ 1\ {-1}{-1}{-1}{-1}\ 1\ 1\ 1\ 1\ {-1}{-1}\ 1\ 1\ {-1}{-1}{-1}{-1}\ 1\ 1
\end{bmatrix}$$

$$G_{-}^{30} = \begin{bmatrix}
1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 \\
-1 & 1 & 1 & -1 & 1 & 1 & 1 & -1 & 1 & 1 & 1 & -1 & 1 & 1 & 1 & -1 & 1 & 1 & 1 & -1 & 1 & 1 & 1 & -1 & 1 & 1 & 1 & -1 & 1 & 1 \\
1 & -1 & 1 & 1 & -1 & 1 & 1 & -1 & 1 & -1 & 1 & 1 & -1 & 1 & 1 & -1 & 1 & -1 & 1 & 1 & -1 & 1 & 1 & -1 & 1 & -1 & 1 & 1 & -1 & 1 \\
-1 & 1 & -1 & 1 & 1 & -1 & 1 & 1 & -1 & 1 & -1 & 1 & 1 & -1 & 1 & 1 & -1 & 1 & 1 & -1 & 1 & 1 & -1 & 1 & -1 & 1 & 1 & -1 & 1 & 1 \\
1 & -1 & 1 & -1 & 1 & 1 & -1 & -1 & 1 & 1 & -1 & 1 & -1 & 1 & 1 & -1 & 1 & 1 & -1 & 1 & -1 & 1 & -1 & -1 & 1 & 1 & -1 & 1 & -1 & 1 \\
-1 & 1 & 1 & -1 & 1 & 1 & -1 & 1 & 1 & -1 & 1 & 1 & -1 & 1 & -1 & 1 & 1 & -1 & 1 & 1 & -1 & 1 & 1 & -1 & 1 & 1 & -1 & 1 & 1 & -1 \\
1 & -1 & 1 & 1 & -1 & 1 & 1 & -1 & 1 & -1 & 1 & 1 & -1 & 1 & 1 & -1 & 1 & 1 & -1 & 1 & -1 & 1 & 1 & -1 & 1 & 1 & -1 & 1 & -1 & -1 \\
-1 & 1 & 1 & -1 & 1 & 1 & -1 & -1 & 1 & 1 & -1 & 1 & -1 & -1 & 1 & 1 & -1 & 1 & 1 & -1 & 1 & 1 & -1 & 1 & 1 & -1 & 1 & -1 & -1 & 1 \\
1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & -1 & 1 & 1 \\
-1 & 1 & 1 & -1 & 1 & 1 & 1 & -1 & 1 & 1 & 1 & -1 & 1 & 1 & 1 & -1 & 1 & 1 & 1 & -1 & 1 & 1 & 1 & -1 & 1 & 1 & 1 & -1 & 1 & -1 \\
1 & -1 & 1 & 1 & -1 & 1 & 1 & -1 & 1 & -1 & 1 & 1 & -1 & 1 & 1 & -1 & 1 & -1 & 1 & 1 & -1 & 1 & 1 & -1 & 1 & -1 & 1 & 1 & -1 & 1 \\
-1 & 1 & -1 & 1 & 1 & -1 & 1 & 1 & -1 & 1 & -1 & 1 & 1 & -1 & 1 & 1 & -1 & 1 & 1 & -1 & 1 & 1 & -1 & 1 & -1 & 1 & 1 & -1 & -1 & 1 \\
1 & -1 & 1 & -1 & 1 & 1 & -1 & -1 & 1 & 1 & -1 & 1 & -1 & 1 & 1 & -1 & 1 & 1 & -1 & 1 & -1 & 1 & -1 & -1 & 1 & 1 & -1 & 1 & -1 & 1 \\
-1 & 1 & 1 & -1 & 1 & 1 & -1 & 1 & 1 & -1 & 1 & 1 & -1 & 1 & 1 & -1 & 1 & -1 & 1 & 1 & -1 & 1 & 1 & -1 & 1 & 1 & -1 & 1 & -1 & -1 \\
1 & -1 & -1 & 1 & 1 & -1 & 1 & 1 & -1 & 1 & -1 & 1 & 1 & -1 & 1 & 1 & -1 & 1 & 1 & -1 & 1 & -1 & 1 & -1 & 1 & -1 & 1 & -1 & 1 & 1 \\
-1 & 1 & -1 & 1 & 1 & -1 & 1 & 1 & -1 & 1 & -1 & 1 & 1 & -1 & 1 & 1 & -1 & 1 & -1 & 1 & -1 & 1 & -1 & 1 & -1 & 1 & 1 & -1 & 1 & -1
\end{bmatrix}$$

In this case, a Hamming distance between any two rows of elements in $G_{+}^{30}$ is 16, a Hamming distance between any two rows of elements in $G_{-}^{30}$ is also 16, and a Hamming distance between any row of elements in $G_{+}^{30}$ and any row of elements in $\overline{G_{-}^{30}}$ is 15. A size of $G_{+}^{30}$ is 16 rows and 30 columns, and a size of $G_{-}^{30}$ is also 16 rows and 30 columns. Therefore, 16 rows of elements may be selected from $G_{-}^{30}$ or $G_{+}^{30}$ (in the following Table 3, for example, 16 rows of elements are selected from $G_{-}^{30}$ ), an element 1 is mapped to 0, and an element -1 is mapped to 1, to obtain codewords shown in the following Table 3.

It can be understood that a mapping relationship between elements 1 and -1 in a matrix, and 1 and 0 is not limited in this embodiment of this application. It can be further understood that, in the following Table 3, a Hamming distance between any two codewords is 16. Based on FIG. 6, this reaches a theoretical bound in unequal coding in a case in which the code length L is equal to 30.

Table 3 Example 1 of a codebook with a code length (L) of 30

| First PHR information (PHR1) | | |
|---|---|---|
| Data rate (data rate) (three bits) | LDPC indication (LDPC indication) (one bit) | Codeword (codeword) |
| 000 | 0 | 0 1 0 1 0 1 0 1 0 1 0 1 0 1 0 1 0 1 0 1 0 1 0 1 0 1 0 1 0 1 |
| 000 | 1 | 1 0 0 1 1 0 0 1 1 0 0 1 1 0 0 1 1 0 0 1 1 0 0 1 1 0 0 1 1 0 |
| 001 | 0 | 0 1 1 0 1 0 0 1 0 1 1 0 1 0 0 1 0 1 1 0 1 0 0 1 0 1 1 0 1 0 |
| 001 | 1 | 1 0 1 0 0 1 0 1 1 0 1 0 0 1 0 1 1 0 1 0 0 1 0 1 1 0 1 0 0 1 |
| 010 | 0 | 0 1 0 1 0 1 1 0 1 0 1 0 1 0 0 1 0 1 0 1 0 1 1 0 1 0 1 0 1 0 |
| 010 | 1 | 1 0 0 1 1 0 1 0 0 1 1 0 0 1 0 1 1 0 0 1 1 0 1 0 0 1 1 0 0 1 |
| 011 | 0 | 0 1 1 0 1 0 1 0 1 0 0 1 0 1 0 1 0 1 1 0 1 0 1 0 1 0 0 1 0 1 |
| 011 | 1 | 1 0 1 0 0 1 1 0 0 1 0 1 1 0 0 1 1 0 1 0 0 1 1 0 0 1 0 1 1 0 |
| 100 | 0 | 0 1 0 1 0 1 0 1 0 1 0 1 0 1 1 0 1 0 1 0 1 0 1 0 1 0 1 0 1 0 |
| 100 | 1 | 1 0 0 1 1 0 0 1 1 0 0 1 1 0 1 0 0 1 1 0 0 1 1 0 0 1 1 0 0 1 |
| 101 | 0 | 0 1 1 0 1 0 0 1 0 1 1 0 1 0 1 0 1 0 0 1 0 1 1 0 1 0 0 1 0 1 |
| 101 | 1 | 1 0 1 0 0 1 0 1 1 0 1 0 0 1 1 0 0 1 0 1 1 0 1 0 0 1 0 1 1 0 |
| 110 | 0 | 0 1 0 1 0 1 1 0 1 0 1 0 1 0 1 0 1 0 1 0 1 0 0 1 0 1 0 1 0 1 |
| 110 | 1 | 1 0 0 1 1 0 1 0 0 1 1 0 0 1 1 0 0 1 1 0 0 1 0 1 1 0 0 1 1 0 |
| 111 | 0 | 0 1 1 0 1 0 1 0 1 0 0 1 0 1 1 0 1 0 0 1 0 1 0 1 0 1 0 1 1 0 1 0 |
| 111 | 1 | 1 0 1 0 0 1 1 0 0 1 0 1 1 0 1 0 0 1 0 1 1 0 0 1 1 0 0 1 1 0 1 0 0 1 |

In addition, when $L \geq 2^{(K+1)}-2$, the code length may be split into two parts: $L=L_1+L_2$. A codebook matrix with a code

length of $L_1$ and a codebook matrix with a code length of $L_2$ are separately designed in the foregoing codebook generation manner, and then the two codebook matrices are concatenated to form a codebook with a length of L.

For example, when L=18+18, a 20*20 normalized Hadamard matrix $H_{20}$ is as follows:

$$H_{20}=\begin{bmatrix} 1 & 1 & 1 & 1 & 1 & 1 & 1 & 1 & 1 & 1 & 1 & 1 & 1 & 1 & 1 & 1 & 1 & 1 & 1 & 1 \\ 1 & -1 & -1 & 1 & 1 & -1 & -1 & -1 & -1 & 1 & 1 & -1 & 1 & -1 & 1 & 1 & 1 & 1 & -1 & -1 & 1 \\ 1 & -1 & 1 & 1 & -1 & -1 & -1 & -1 & 1 & -1 & 1 & -1 & 1 & 1 & 1 & 1 & -1 & -1 & 1 & -1 \\ 1 & 1 & 1 & -1 & -1 & -1 & -1 & 1 & -1 & 1 & -1 & 1 & 1 & 1 & 1 & -1 & -1 & 1 & -1 & -1 \\ 1 & 1 & -1 & -1 & -1 & 1 & -1 & 1 & -1 & 1 & 1 & 1 & 1 & -1 & -1 & 1 & -1 & -1 & 1 \\ 1 & -1 & -1 & -1 & 1 & 1 & -1 & 1 & -1 & 1 & 1 & 1 & 1 & -1 & -1 & 1 & -1 & -1 & 1 & 1 \\ 1 & -1 & -1 & 1 & 1 & -1 & 1 & -1 & 1 & 1 & 1 & 1 & -1 & -1 & 1 & -1 & -1 & 1 & 1 & -1 \\ 1 & -1 & 1 & 1 & -1 & 1 & -1 & 1 & 1 & 1 & 1 & -1 & -1 & 1 & -1 & -1 & 1 & 1 & -1 & -1 \\ 1 & -1 & 1 & -1 & 1 & -1 & 1 & 1 & 1 & 1 & -1 & -1 & 1 & 1 & -1 & -1 & 1 & 1 & -1 & -1 & -1 \\ 1 & 1 & -1 & 1 & -1 & 1 & 1 & 1 & 1 & -1 & -1 & 1 & 1 & -1 & -1 & 1 & 1 & -1 & -1 & -1 & -1 \\ 1 & -1 & 1 & -1 & 1 & 1 & 1 & 1 & -1 & -1 & 1 & 1 & -1 & -1 & 1 & 1 & -1 & -1 & -1 & -1 & 1 \\ 1 & 1 & -1 & 1 & 1 & 1 & 1 & -1 & -1 & 1 & 1 & -1 & -1 & 1 & 1 & -1 & -1 & -1 & -1 & 1 & -1 \\ 1 & -1 & 1 & 1 & 1 & 1 & -1 & -1 & 1 & 1 & -1 & -1 & 1 & 1 & -1 & -1 & -1 & -1 & 1 & 1 & -1 \\ 1 & 1 & 1 & 1 & 1 & -1 & -1 & 1 & 1 & -1 & -1 & 1 & 1 & -1 & -1 & -1 & -1 & 1 & 1 & -1 & -1 \\ 1 & 1 & 1 & 1 & -1 & -1 & 1 & 1 & -1 & -1 & 1 & 1 & -1 & -1 & -1 & -1 & 1 & 1 & -1 & -1 & 1 \\ 1 & 1 & 1 & -1 & -1 & 1 & 1 & -1 & -1 & 1 & 1 & -1 & -1 & -1 & -1 & 1 & 1 & -1 & -1 & 1 & 1 \\ 1 & 1 & -1 & -1 & 1 & 1 & -1 & -1 & 1 & 1 & -1 & -1 & -1 & -1 & 1 & 1 & -1 & -1 & 1 & 1 & 1 \\ 1 & -1 & -1 & 1 & 1 & -1 & -1 & 1 & 1 & -1 & -1 & -1 & -1 & 1 & 1 & -1 & -1 & 1 & 1 & 1 & 1 \\ 1 & -1 & 1 & -1 & -1 & 1 & 1 & -1 & -1 & -1 & -1 & 1 & 1 & -1 & 1 & 1 & 1 & 1 & -1 \\ 1 & 1 & -1 & -1 & 1 & 1 & -1 & -1 & -1 & -1 & 1 & 1 & -1 & 1 & 1 & 1 & 1 & -1 & -1 \end{bmatrix}$$

After the 1st column of $H_{20}$ is removed, a matrix $H_{20*19}$ is obtained. Any column (for example, the 1st column herein) is selected from the matrix $H_{20*19}$ and is removed, and rows of a matrix obtained by removing the column are divided into the following two groups based on positive/negative properties of elements in the removed column:

$$G_+^{18}=\begin{bmatrix} 1 & 1 & 1 & 1 & 1 & 1 & 1 & 1 & 1 & 1 & 1 & 1 & 1 & 1 & 1 & 1 & 1 & 1 \\ 1 & -1 & -1 & -1 & 1 & 1 & -1 & 1 & 1 & -1 & 1 & 1 & 1 & 1 & -1 & -1 & 1 & 1 & -1 & -1 \\ -1 & -1 & -1 & -1 & 1 & 1 & -1 & 1 & -1 & 1 & 1 & 1 & 1 & -1 & -1 & 1 & 1 & -1 & -1 & 1 & 1 \\ -1 & 1 & 1 & -1 & 1 & 1 & 1 & 1 & -1 & -1 & 1 & 1 & -1 & -1 & 1 & 1 & -1 & -1 & -1 & -1 \\ -1 & 1 & 1 & 1 & 1 & 1 & -1 & -1 & 1 & 1 & -1 & -1 & 1 & 1 & 1 & 1 & -1 & -1 & -1 & -1 & 1 & -1 \\ 1 & 1 & 1 & -1 & -1 & 1 & 1 & -1 & -1 & 1 & 1 & -1 & -1 & -1 & -1 & 1 & 1 & -1 & 1 & -1 \\ 1 & 1 & -1 & -1 & 1 & 1 & -1 & -1 & 1 & 1 & -1 & -1 & -1 & -1 & 1 & 1 & -1 & 1 & -1 & 1 \\ 1 & -1 & -1 & 1 & 1 & -1 & -1 & 1 & 1 & -1 & -1 & -1 & -1 & 1 & 1 & -1 & 1 & 1 & 1 \\ -1 & -1 & 1 & 1 & -1 & -1 & 1 & 1 & -1 & -1 & -1 & -1 & 1 & 1 & -1 & 1 & 1 & 1 & 1 \\ -1 & -1 & 1 & 1 & 1 & -1 & -1 & -1 & -1 & 1 & 1 & -1 & 1 & 1 & 1 & 1 & -1 & -1 \end{bmatrix}$$

$$G_-^{18}=\begin{bmatrix} -1 & 1 & 1 & -1 & -1 & -1 & -1 & 1 & 1 & -1 & 1 & 1 & -1 & 1 & 1 & 1 & 1 & -1 & -1 & 1 & 1 \\ 1 & 1 & -1 & -1 & -1 & -1 & 1 & 1 & -1 & 1 & 1 & -1 & 1 & 1 & 1 & 1 & -1 & -1 & 1 & 1 & -1 \\ -1 & -1 & -1 & 1 & 1 & -1 & 1 & 1 & 1 & 1 & 1 & -1 & -1 & 1 & 1 & -1 & -1 & 1 & 1 & 1 \\ -1 & -1 & 1 & 1 & -1 & 1 & 1 & 1 & 1 & 1 & -1 & -1 & 1 & 1 & -1 & -1 & 1 & 1 & 1 & -1 \\ -1 & 1 & 1 & -1 & 1 & 1 & 1 & 1 & 1 & -1 & -1 & 1 & 1 & -1 & -1 & 1 & 1 & -1 & -1 \\ 1 & -1 & 1 & 1 & -1 & 1 & 1 & 1 & 1 & -1 & -1 & 1 & 1 & -1 & -1 & 1 & 1 & -1 & -1 & -1 \\ 1 & -1 & 1 & 1 & 1 & 1 & 1 & -1 & -1 & 1 & 1 & -1 & -1 & 1 & 1 & -1 & -1 & -1 & -1 & 1 & 1 \\ 1 & 1 & 1 & 1 & -1 & -1 & 1 & 1 & -1 & -1 & 1 & 1 & -1 & -1 & -1 & -1 & 1 & 1 & -1 & 1 & 1 \\ -1 & 1 & -1 & -1 & 1 & 1 & 1 & -1 & -1 & -1 & -1 & 1 & 1 & -1 & 1 & 1 & -1 & 1 & 1 & 1 & 1 \\ 1 & -1 & -1 & 1 & 1 & 1 & -1 & -1 & -1 & -1 & 1 & 1 & -1 & 1 & 1 & -1 & 1 & 1 & 1 & 1 & -1 \end{bmatrix}$$

10 rows of elements are selected from $G_-^{18}$, and the last six rows of elements are selected from $G_+^{18}$, to form a codebook matrix $C_{16 \times 18}$ with a code length L of 18.

$$C_{16\times18}=\begin{bmatrix}
-1 & 1 & 1 & 1 & 1 & -1 & -1 & 1 & -1 & -1 & 1 & 1 & -1 & -1 & -1 & -1 & 1 & -1 \\
1 & 1 & 1 & -1 & -1 & 1 & 1 & -1 & -1 & 1 & 1 & -1 & -1 & -1 & -1 & 1 & -1 & -1 \\
1 & 1 & -1 & -1 & 1 & 1 & -1 & -1 & 1 & 1 & -1 & -1 & -1 & -1 & 1 & 1 & -1 & 1 \\
1 & -1 & -1 & 1 & 1 & -1 & -1 & 1 & 1 & -1 & -1 & -1 & -1 & 1 & 1 & -1 & 1 & 1 \\
-1 & -1 & 1 & 1 & -1 & -1 & 1 & 1 & -1 & -1 & -1 & -1 & 1 & 1 & -1 & 1 & 1 & 1 \\
-1 & 1 & 1 & 1 & -1 & -1 & -1 & -1 & 1 & 1 & -1 & 1 & 1 & 1 & 1 & 1 & -1 & -1 \\
-1 & 1 & 1 & -1 & -1 & -1 & -1 & 1 & 1 & -1 & 1 & 1 & 1 & 1 & 1 & -1 & -1 & 1 \\
1 & 1 & -1 & -1 & -1 & 1 & 1 & -1 & 1 & -1 & 1 & 1 & 1 & 1 & -1 & -1 & 1 & -1 \\
-1 & -1 & 1 & 1 & -1 & 1 & -1 & 1 & 1 & 1 & 1 & -1 & 1 & 1 & -1 & -1 & 1 & 1 \\
-1 & -1 & 1 & -1 & 1 & -1 & 1 & 1 & 1 & 1 & 1 & -1 & -1 & 1 & 1 & -1 & 1 & 1 & -1 \\
-1 & 1 & -1 & 1 & -1 & 1 & 1 & 1 & 1 & -1 & -1 & 1 & 1 & -1 & -1 & 1 & 1 & -1 \\
1 & -1 & 1 & -1 & 1 & 1 & 1 & 1 & -1 & -1 & 1 & 1 & -1 & -1 & 1 & 1 & -1 & -1 \\
1 & -1 & 1 & 1 & 1 & 1 & -1 & -1 & 1 & 1 & -1 & 1 & 1 & -1 & -1 & -1 & -1 & 1 \\
1 & 1 & 1 & 1 & -1 & -1 & 1 & 1 & -1 & -1 & 1 & 1 & -1 & -1 & -1 & -1 & 1 & 1 \\
-1 & 1 & -1 & -1 & 1 & 1 & -1 & -1 & -1 & -1 & 1 & 1 & -1 & 1 & -1 & 1 & 1 & 1 \\
1 & -1 & -1 & 1 & 1 & -1 & -1 & -1 & -1 & 1 & 1 & -1 & 1 & -1 & 1 & 1 & 1 & -1
\end{bmatrix}$$

Then two matrices $C_{16\times18}$ are concatenated to form a codebook matrix $C_{16\times36}$ with a code length L of 36:

$$C_{16\times36}=[C_{16\times18},\ C^{p}_{16\times18}]$$

$C^{p}_{16\times18}$ represents a matrix obtained by rearranging rows of $C_{16\times18}$. Row arrangement does not affect a Hamming distance of $C_{16\times18}$. Therefore, a Hamming distance between any two rows of elements among the last 10 rows of elements in $C_{16\times18}$ is 10, and a Hamming distance between any two rows of elements among the first six rows of elements is also 10, but a Hamming distance between any row of elements among the first six rows of elements and any row of elements among the last 10 rows of elements is 9.

When $C^{p}_{16\times18}$ is the same as $C_{16\times18}$, an element 1 is mapped to 0, and an element -1 is mapped to 1, to obtain codewords shown in the following Table 4. It can be understood that a mapping relationship between elements 1 and -1 in a matrix, and 1 and 0 is not limited in this embodiment of this application. It can be further understood that, in the following Table 4, a Hamming distance between any two of the last 10 codewords is 20. This reaches a theoretical bound in unequal coding in a case in which the code length L is equal to 36. In addition, for all codewords shown in the following Table 4, a minimum Hamming distance is 18.

Table 4 Example 1 of a codebook with a code length (L) of 36

| First PHR information (PHR1) | | |
|---|---|---|
| Data rate (data rate) (three bits) | LDPC indication (LDPC indication) (one bit) | Codeword (codeword) |
| 000 | 0 | 1 0 0 0 0 1 1 0 1 1 0 0 1 1 1 1 0 1 1 0 0 0 0 1 1 0 1 1 0 0 1 1 1 1 0 1 |
| 000 | 1 | 0 0 0 1 1 0 1 1 0 0 1 1 1 1 0 1 0 1 0 0 0 1 1 0 1 1 0 0 1 1 1 1 0 1 0 1 |
| 001 | 0 | 0 0 1 1 0 1 1 0 0 1 1 1 1 0 1 0 1 0 0 0 1 1 0 1 1 0 0 1 1 1 1 0 1 0 1 0 |
| 001 | 1 | 0 1 1 0 1 1 0 0 1 1 1 1 0 1 0 1 0 0 0 1 1 0 1 1 0 0 1 1 1 1 0 1 0 1 0 0 |
| 010 | 0 | 1 1 0 1 1 0 0 1 1 1 1 0 1 0 1 0 0 0 1 1 0 1 1 0 0 1 1 1 1 0 1 0 1 0 0 0 |
| 010 | 1 | 1 1 0 0 1 1 1 1 0 1 0 1 0 0 0 0 1 1 1 1 0 0 1 1 1 1 0 1 0 1 0 0 0 0 1 1 |
| 011 | 0 | 1 0 0 1 1 1 1 0 1 0 1 0 0 0 0 1 1 0 1 0 0 1 1 1 1 0 1 0 1 0 0 0 0 1 1 0 |
| 011 | 1 | 0 0 1 1 1 1 0 1 0 1 0 0 0 0 1 1 0 1 0 0 1 1 1 1 0 1 0 1 0 0 0 0 1 1 0 1 |
| 100 | 0 | 1 1 1 0 1 0 1 0 0 0 0 1 1 0 1 1 0 0 1 1 1 0 1 0 1 0 0 0 0 1 1 0 1 1 0 0 |
| 100 | 1 | 1 1 0 1 0 1 0 0 0 0 1 1 0 1 1 0 0 1 1 1 0 1 0 1 0 0 0 0 1 1 0 1 1 0 0 1 |
| 101 | 0 | 1 0 1 0 1 0 0 0 0 1 1 0 1 1 0 0 1 1 1 0 1 0 1 0 0 0 0 1 1 0 1 1 0 0 1 1 |
| 101 | 1 | 0 1 0 1 0 0 0 0 1 1 0 1 1 0 0 1 1 1 0 1 0 1 0 0 0 0 1 1 0 1 1 0 0 1 1 1 |
| 110 | 0 | 0 1 0 0 0 0 1 1 0 1 1 0 0 1 1 1 1 0 0 1 0 0 0 0 1 1 0 1 1 0 0 1 1 1 1 0 |
| 110 | 1 | 0 0 0 0 1 1 0 1 1 0 0 1 1 1 1 0 1 0 0 0 0 0 1 1 0 1 1 0 0 1 1 1 1 0 1 0 |
| 111 | 0 | 1 0 1 1 0 0 1 1 1 1 0 1 0 1 0 0 0 0 1 0 1 1 0 0 1 1 1 1 0 1 0 1 0 0 0 0 |

(continued)

| First PHR information (PHR1) | | Codeword (codeword) |
|---|---|---|
| Data rate (data rate) (three bits) | LDPC indication (LDPC indication) (one bit) | |
| 111 | 1 | 0 1 1 0 0 1 1 1 1 0 1 0 1 0 0 0 0 1 0 1 1 0 0 1 1 1 1 0 1 0 1 0 0 0 0 1 |

For another example, when L=18+14, a 20*20 normalized Hadamard matrix $H_{20}$ is as follows:

$$H_{20}=\begin{bmatrix}
1 & 1 & 1 & 1 & 1 & 1 & 1 & 1 & 1 & 1 & 1 & 1 & 1 & 1 & 1 & 1 & 1 & 1 & 1 & 1 \\
1 & -1 & -1 & 1 & 1 & -1 & -1 & -1 & -1 & 1 & 1 & -1 & 1 & -1 & 1 & 1 & 1 & 1 & -1 & -1 & 1 \\
1 & -1 & 1 & 1 & 1 & -1 & -1 & -1 & -1 & 1 & 1 & -1 & 1 & -1 & 1 & 1 & 1 & 1 & -1 & -1 & 1 & -1 \\
1 & 1 & 1 & -1 & -1 & -1 & -1 & 1 & 1 & -1 & 1 & 1 & 1 & 1 & 1 & -1 & -1 & 1 & -1 \\
1 & 1 & -1 & -1 & -1 & -1 & 1 & 1 & -1 & 1 & -1 & 1 & 1 & 1 & 1 & -1 & -1 & 1 & 1 & -1 & -1 & 1 \\
1 & -1 & -1 & -1 & -1 & 1 & 1 & -1 & 1 & 1 & -1 & 1 & 1 & 1 & 1 & -1 & -1 & 1 & 1 & -1 & -1 & 1 & 1 \\
1 & -1 & -1 & -1 & 1 & 1 & -1 & 1 & 1 & -1 & 1 & 1 & 1 & 1 & -1 & -1 & 1 & 1 & -1 & -1 & 1 & 1 & -1 \\
1 & -1 & -1 & 1 & 1 & -1 & 1 & 1 & -1 & 1 & 1 & 1 & 1 & -1 & -1 & 1 & 1 & -1 & -1 & 1 & 1 & -1 \\
1 & -1 & 1 & 1 & -1 & 1 & 1 & -1 & 1 & 1 & 1 & 1 & -1 & -1 & 1 & 1 & -1 & -1 & 1 & 1 & -1 & -1 & -1 \\
1 & 1 & -1 & 1 & 1 & -1 & 1 & 1 & 1 & 1 & -1 & -1 & 1 & 1 & -1 & -1 & 1 & 1 & -1 & -1 & -1 \\
1 & -1 & 1 & 1 & -1 & 1 & 1 & 1 & 1 & -1 & -1 & 1 & 1 & -1 & -1 & 1 & 1 & -1 & -1 & -1 & 1 \\
1 & 1 & -1 & 1 & 1 & 1 & 1 & -1 & -1 & 1 & 1 & -1 & -1 & 1 & 1 & -1 & -1 & -1 & 1 & 1 & -1 \\
1 & -1 & 1 & 1 & 1 & 1 & -1 & -1 & 1 & 1 & -1 & -1 & 1 & 1 & -1 & -1 & -1 & 1 & 1 & -1 & 1 \\
1 & 1 & 1 & 1 & 1 & -1 & -1 & 1 & 1 & -1 & -1 & 1 & 1 & -1 & -1 & -1 & 1 & 1 & -1 & 1 & -1 \\
1 & 1 & 1 & 1 & -1 & -1 & 1 & 1 & -1 & -1 & 1 & 1 & -1 & -1 & -1 & 1 & 1 & -1 & 1 & -1 & -1 \\
1 & 1 & 1 & -1 & -1 & 1 & 1 & -1 & -1 & 1 & 1 & -1 & -1 & -1 & 1 & 1 & -1 & 1 & -1 & 1 & 1 \\
1 & 1 & -1 & -1 & 1 & 1 & -1 & -1 & 1 & 1 & -1 & -1 & -1 & 1 & 1 & -1 & 1 & -1 & 1 & 1 & 1 \\
1 & -1 & -1 & 1 & 1 & -1 & -1 & 1 & 1 & -1 & -1 & -1 & 1 & 1 & -1 & 1 & -1 & 1 & 1 & 1 & 1 \\
1 & -1 & 1 & -1 & -1 & 1 & 1 & -1 & -1 & -1 & 1 & 1 & -1 & 1 & -1 & 1 & 1 & 1 & 1 & -1 \\
1 & 1 & -1 & -1 & 1 & 1 & -1 & -1 & -1 & -1 & 1 & 1 & -1 & 1 & -1 & 1 & 1 & 1 & 1 & -1 & -1
\end{bmatrix}$$

After the 1st column of $H_{20}$ is removed, a matrix $H_{20*19}$ is obtained. Any column (for example, the 1st column herein) is selected from the matrix $H_{20*19}$ and is removed, and rows of a matrix obtained by removing the column are divided into the following two groups based on positive/negative properties of elements in the removed column:

$$G_{+}^{18}=\begin{bmatrix}
1 & 1 & 1 & 1 & 1 & 1 & 1 & 1 & 1 & 1 & 1 & 1 & 1 & 1 & 1 & 1 & 1 & 1 \\
1 & -1 & -1 & -1 & -1 & 1 & 1 & -1 & 1 & 1 & -1 & 1 & 1 & 1 & 1 & -1 & -1 & 1 & 1 & -1 & -1 \\
-1 & -1 & -1 & -1 & 1 & -1 & 1 & 1 & -1 & 1 & 1 & 1 & 1 & -1 & -1 & 1 & 1 & -1 & -1 & 1 & 1 \\
-1 & 1 & -1 & 1 & 1 & 1 & 1 & -1 & -1 & 1 & 1 & -1 & -1 & 1 & 1 & -1 & -1 & -1 \\
-1 & 1 & 1 & 1 & 1 & -1 & -1 & 1 & 1 & -1 & -1 & 1 & 1 & -1 & -1 & -1 & 1 & 1 & -1 \\
1 & 1 & 1 & -1 & -1 & 1 & 1 & -1 & -1 & 1 & 1 & -1 & -1 & -1 & 1 & 1 & -1 & 1 & -1 \\
1 & 1 & -1 & -1 & 1 & 1 & -1 & -1 & 1 & 1 & -1 & -1 & -1 & 1 & 1 & -1 & 1 & -1 & 1 \\
1 & -1 & -1 & 1 & 1 & -1 & -1 & 1 & 1 & -1 & -1 & -1 & 1 & 1 & -1 & 1 & -1 & 1 & 1 \\
-1 & -1 & 1 & 1 & -1 & -1 & 1 & 1 & -1 & -1 & -1 & 1 & 1 & -1 & 1 & -1 & 1 & 1 & 1 \\
-1 & 1 & 1 & 1 & -1 & -1 & -1 & -1 & 1 & 1 & -1 & 1 & -1 & 1 & 1 & 1 & 1 & -1 & -1
\end{bmatrix}$$

$$G_{-}^{18}=\begin{bmatrix}
-1 & 1 & 1 & -1 & -1 & -1 & -1 & 1 & 1 & -1 & 1 & -1 & 1 & 1 & 1 & 1 & -1 & -1 & 1 & 1 \\
1 & 1 & -1 & -1 & -1 & -1 & 1 & 1 & -1 & 1 & 1 & -1 & 1 & 1 & 1 & 1 & -1 & -1 & 1 & 1 & -1 \\
-1 & -1 & -1 & 1 & 1 & -1 & 1 & 1 & -1 & 1 & 1 & 1 & 1 & -1 & -1 & 1 & 1 & -1 & -1 & 1 & 1 \\
-1 & -1 & 1 & 1 & -1 & 1 & 1 & -1 & 1 & 1 & 1 & 1 & -1 & -1 & 1 & 1 & -1 & -1 & 1 & 1 & -1 \\
-1 & 1 & 1 & -1 & 1 & 1 & -1 & 1 & 1 & 1 & 1 & -1 & -1 & 1 & 1 & -1 & -1 & 1 & 1 & -1 & -1 \\
1 & 1 & -1 & 1 & 1 & -1 & 1 & 1 & 1 & 1 & -1 & -1 & 1 & 1 & -1 & -1 & 1 & 1 & -1 & -1 & -1 \\
1 & -1 & 1 & 1 & -1 & 1 & 1 & 1 & 1 & -1 & -1 & 1 & 1 & -1 & -1 & 1 & 1 & -1 & -1 & -1 & 1 \\
1 & -1 & 1 & 1 & 1 & 1 & -1 & -1 & 1 & 1 & -1 & -1 & 1 & 1 & -1 & -1 & -1 & 1 & 1 & -1 \\
1 & 1 & 1 & 1 & -1 & -1 & 1 & 1 & -1 & -1 & 1 & 1 & -1 & -1 & -1 & 1 & 1 & -1 & 1 & -1 \\
-1 & 1 & -1 & -1 & 1 & 1 & -1 & -1 & -1 & -1 & 1 & 1 & -1 & 1 & -1 & 1 & 1 & 1 & 1 \\
1 & -1 & -1 & 1 & 1 & -1 & -1 & -1 & -1 & 1 & 1 & -1 & 1 & -1 & 1 & 1 & 1 & 1 & -1
\end{bmatrix}$$

10 rows of elements are selected from $G_{-}^{18}$, and any six rows of elements are selected from $G_{+}^{18}$ (for example, the last six rows of elements are selected from $G_{+}^{18}$ herein), to form a codebook matrix $C_{16\times18}$ with a code length L of 18.

$$C_{16\times18}=\begin{bmatrix} -1 & 1 & 1 & 1 & 1 & -1 & -1 & 1 & -1 & -1 & 1 & 1 & -1 & -1 & -1 & -1 & 1 & 1 & -1 \\ 1 & 1 & 1 & -1 & -1 & 1 & -1 & -1 & 1 & 1 & 1 & -1 & -1 & -1 & -1 & 1 & 1 & -1 & 1 & -1 \\ 1 & 1 & -1 & -1 & 1 & 1 & -1 & -1 & 1 & 1 & 1 & -1 & -1 & -1 & -1 & 1 & 1 & -1 & 1 & -1 & 1 \\ 1 & -1 & -1 & 1 & 1 & -1 & -1 & 1 & 1 & 1 & -1 & -1 & -1 & -1 & 1 & 1 & -1 & -1 & 1 & 1 & 1 \\ -1 & -1 & 1 & 1 & -1 & -1 & 1 & 1 & 1 & -1 & -1 & -1 & -1 & 1 & 1 & -1 & -1 & 1 & 1 & 1 \\ -1 & -1 & 1 & 1 & -1 & -1 & -1 & -1 & 1 & 1 & -1 & 1 & 1 & -1 & 1 & 1 & 1 & 1 & 1 & -1 & -1 \\ -1 & 1 & 1 & -1 & -1 & -1 & -1 & 1 & 1 & -1 & 1 & 1 & -1 & 1 & 1 & 1 & 1 & 1 & -1 & 1 \\ 1 & 1 & -1 & -1 & -1 & -1 & 1 & 1 & -1 & 1 & 1 & -1 & 1 & 1 & 1 & 1 & -1 & 1 & 1 & -1 \\ -1 & -1 & -1 & 1 & -1 & 1 & 1 & -1 & 1 & 1 & 1 & 1 & -1 & 1 & 1 & -1 & 1 & 1 & 1 \\ -1 & -1 & 1 & 1 & -1 & 1 & -1 & 1 & 1 & 1 & 1 & -1 & 1 & 1 & -1 & 1 & 1 & 1 & -1 \\ -1 & 1 & -1 & 1 & -1 & 1 & 1 & 1 & 1 & 1 & -1 & 1 & 1 & -1 & 1 & 1 & 1 & -1 \\ 1 & -1 & 1 & -1 & 1 & 1 & 1 & 1 & 1 & -1 & 1 & 1 & -1 & 1 & 1 & 1 & -1 & -1 & -1 \\ 1 & -1 & 1 & 1 & 1 & 1 & -1 & -1 & 1 & -1 & -1 & 1 & 1 & -1 & -1 & -1 & -1 & 1 & 1 \\ 1 & 1 & 1 & 1 & -1 & -1 & 1 & 1 & -1 & -1 & 1 & 1 & -1 & -1 & -1 & -1 & 1 & 1 & -1 & 1 \\ -1 & 1 & 1 & -1 & 1 & 1 & 1 & -1 & -1 & -1 & -1 & 1 & 1 & -1 & 1 & 1 & -1 & 1 & 1 & 1 & 1 \\ 1 & -1 & -1 & 1 & 1 & 1 & -1 & -1 & -1 & -1 & 1 & 1 & -1 & 1 & 1 & -1 & 1 & 1 & 1 & 1 & -1 \end{bmatrix}$$

Then a 16*16 normalized Hadamard matrix $H_{16}$ shown below is used:

$$H_{16}=\begin{bmatrix} 1 & 1 & 1 & 1 & 1 & 1 & 1 & 1 & 1 & 1 & 1 & 1 & 1 & 1 & 1 & 1 \\ 1 & -1 & 1 & -1 & 1 & -1 & 1 & -1 & 1 & -1 & 1 & -1 & 1 & -1 & 1 & -1 \\ 1 & 1 & -1 & -1 & 1 & 1 & -1 & -1 & 1 & 1 & -1 & -1 & 1 & 1 & -1 & -1 \\ 1 & -1 & -1 & 1 & 1 & -1 & -1 & 1 & 1 & -1 & -1 & 1 & 1 & -1 & -1 & 1 \\ 1 & 1 & 1 & 1 & -1 & -1 & -1 & -1 & 1 & 1 & 1 & 1 & -1 & -1 & -1 & -1 \\ 1 & -1 & 1 & -1 & -1 & 1 & -1 & 1 & 1 & -1 & 1 & -1 & -1 & 1 & -1 & 1 \\ 1 & 1 & -1 & -1 & -1 & -1 & 1 & 1 & 1 & 1 & -1 & -1 & -1 & -1 & 1 & 1 \\ 1 & -1 & -1 & 1 & -1 & 1 & 1 & -1 & 1 & -1 & -1 & 1 & -1 & 1 & 1 & -1 \\ 1 & 1 & 1 & 1 & 1 & 1 & 1 & 1 & -1 & -1 & -1 & -1 & -1 & -1 & -1 & -1 \\ 1 & -1 & 1 & -1 & 1 & -1 & 1 & -1 & -1 & 1 & -1 & 1 & -1 & 1 & -1 & 1 \\ 1 & 1 & -1 & -1 & 1 & 1 & -1 & -1 & -1 & -1 & 1 & 1 & -1 & -1 & 1 & 1 \\ 1 & -1 & -1 & 1 & 1 & -1 & -1 & 1 & -1 & 1 & 1 & -1 & -1 & 1 & 1 & -1 \\ 1 & 1 & 1 & 1 & -1 & -1 & -1 & -1 & -1 & -1 & -1 & -1 & 1 & 1 & 1 & 1 \\ 1 & -1 & 1 & -1 & -1 & 1 & -1 & 1 & -1 & 1 & -1 & 1 & 1 & -1 & 1 & -1 \\ 1 & 1 & -1 & -1 & -1 & -1 & 1 & 1 & -1 & -1 & 1 & 1 & 1 & 1 & -1 & -1 \\ 1 & -1 & -1 & 1 & -1 & 1 & 1 & -1 & -1 & 1 & 1 & -1 & 1 & -1 & -1 & 1 \end{bmatrix}$$

After the 1st column of $H_{16}$ is removed, a matrix $H_{16*15}$ is obtained. Any column (for example, the 1st column herein) is selected from the matrix $H_{16*15}$ and is removed, and rows of a matrix obtained by removing the column are divided into the following two groups based on positive/negative properties of elements in the removed column:

$$G_{+}^{14}=\begin{bmatrix} 1 & 1 & 1 & 1 & 1 & 1 & 1 & 1 & 1 & 1 & 1 & 1 & 1 & 1 \\ -1 & -1 & 1 & 1 & -1 & -1 & 1 & 1 & -1 & -1 & 1 & 1 & -1 & -1 \\ 1 & 1 & -1 & -1 & -1 & -1 & 1 & 1 & 1 & 1 & -1 & -1 & -1 & -1 \\ -1 & -1 & -1 & -1 & 1 & 1 & 1 & 1 & -1 & -1 & -1 & -1 & 1 & 1 \\ 1 & 1 & 1 & 1 & 1 & 1 & -1 & -1 & -1 & -1 & -1 & -1 & -1 & -1 \\ -1 & -1 & 1 & 1 & -1 & -1 & -1 & -1 & 1 & 1 & -1 & -1 & 1 & 1 \\ 1 & 1 & -1 & -1 & -1 & -1 & -1 & -1 & -1 & -1 & 1 & 1 & 1 & 1 \\ -1 & -1 & -1 & -1 & 1 & 1 & -1 & -1 & 1 & 1 & 1 & 1 & -1 & -1 \end{bmatrix}$$

$$G_{-}^{14}=\begin{bmatrix} 1 & -1 & 1 & -1 & 1 & -1 & 1 & -1 & 1 & -1 & 1 & -1 & 1 & -1 \\ -1 & 1 & 1 & -1 & -1 & 1 & 1 & -1 & -1 & 1 & 1 & -1 & -1 & 1 \\ 1 & -1 & -1 & 1 & -1 & 1 & 1 & -1 & 1 & -1 & -1 & 1 & -1 & 1 \\ -1 & 1 & -1 & 1 & 1 & -1 & 1 & -1 & -1 & 1 & -1 & 1 & 1 & -1 \\ 1 & -1 & 1 & -1 & 1 & -1 & -1 & 1 & -1 & 1 & -1 & 1 & -1 & 1 \\ -1 & 1 & 1 & -1 & -1 & 1 & -1 & 1 & 1 & -1 & -1 & 1 & 1 & -1 \\ 1 & -1 & -1 & 1 & -1 & 1 & -1 & 1 & -1 & 1 & 1 & -1 & 1 & -1 \\ -1 & 1 & -1 & 1 & 1 & -1 & -1 & 1 & 1 & -1 & 1 & -1 & -1 & 1 \end{bmatrix}$$

Eight rows of elements are selected from $G_{+}^{14}$, and eight rows of elements are selected from $G_{-}^{14}$, to form a codebook matrix $C_{16\times14}$ with a code length L of 14.

$$C_{16\times14} = \begin{bmatrix} G_+^{14} \\ G_-^{14} \end{bmatrix}$$

Then $C_{16\times18}$ is concatenated with $C_{16\times14}$ to form a codebook matrix $C_{16\times32}$ with a code length L of 32.

$$C_{16\times32} = [C_{16\times18}, C^p_{16\times14}]$$

$C^p_{16\times14}$ is a matrix obtained by rearranging rows of $C_{16\times14}$. Row arrangement does not affect a Hamming distance distribution of $C_{16\times14}$. Herein, $C^p_{16\times14} = C_{16\times14}$. Therefore, a Hamming distance between any two rows of elements among the first eight rows of elements in $C_{16\times32}$ is 18, a Hamming distance between any two rows of elements among the first 10 rows of elements is 18 or 17, and a Hamming distance between any two rows of elements among all the 16 rows of elements is at least 16.

When $C^p_{16\times14}$ is the same as $C_{16\times14}$, an element 1 is mapped to 0, and an element -1 is mapped to 1, to obtain codewords shown in the following Table 5a. It can be understood that a mapping relationship between elements 1 and -1 in a matrix, and 1 and 0 is not limited in this embodiment of this application.

Table 5a Example 1 of a codebook with a code length (L) of 32

| Value combinations of the first PHR information (PHR1) | Codeword (codeword) |
|---|---|
| Combination 1 | 1 0 0 1 1 1 1 0 1 0 1 0 0 0 0 1 1 0 0 0 0 0 0 0 0 0 0 0 0 0 0 0 |
| Combination 2 | 0 0 1 1 1 1 0 1 0 1 0 0 0 0 1 1 0 1 1 1 0 0 1 1 0 0 1 1 0 0 1 1 |
| Combination 3 | 1 1 1 0 1 0 1 0 0 0 0 1 1 0 1 1 0 0 0 0 1 1 1 1 0 0 0 0 1 1 1 1 |
| Combination 4 | 1 1 0 1 0 1 0 0 0 0 1 1 0 1 1 0 0 1 1 1 1 1 0 0 0 0 1 1 1 1 0 0 |
| Combination 5 | 1 0 1 0 1 0 0 0 0 1 1 0 1 1 0 0 1 1 0 0 0 0 0 0 1 1 1 1 1 1 1 1 |
| Combination 6 | 0 1 0 1 0 0 0 0 1 1 0 1 1 0 0 1 1 1 1 1 0 0 1 1 1 1 0 0 1 1 0 0 |
| Combination 7 | 0 1 0 0 0 0 1 1 0 1 1 0 0 1 1 1 1 0 0 0 1 1 1 1 1 1 1 1 0 0 0 0 |
| Combination 8 | 0 0 0 0 1 1 0 1 1 0 0 1 1 1 1 0 1 0 1 1 1 1 0 0 1 1 0 0 0 0 1 1 |
| Combination 9 | 1 0 1 1 0 0 1 1 1 1 0 1 0 1 0 0 0 0 0 1 0 1 0 1 0 1 0 1 0 1 0 1 |
| Combination 10 | 0 1 1 0 0 1 1 1 1 0 1 0 1 0 0 0 0 1 1 0 0 1 1 0 0 1 1 0 0 1 1 0 |
| Combination 11 | 1 0 0 0 0 1 1 0 1 1 0 0 1 1 1 1 0 1 0 1 1 0 1 0 0 1 0 1 1 0 1 0 |
| Combination 12 | 0 0 0 1 1 0 1 1 0 0 1 1 1 1 0 1 0 1 1 0 1 0 0 1 0 1 1 0 1 0 0 1 |
| Combination 13 | 0 0 1 1 0 1 1 0 0 1 1 1 1 0 1 0 1 0 0 1 0 1 0 1 1 0 1 0 1 0 1 0 |
| Combination 14 | 0 1 1 0 1 1 0 0 1 1 1 1 0 1 0 1 0 0 1 0 0 1 1 0 1 0 0 1 1 0 0 1 |
| Combination 15 | 1 1 0 1 1 0 0 1 1 1 1 0 1 0 1 0 0 0 0 1 1 0 1 0 1 0 1 0 0 1 0 1 |
| Combination 16 | 1 1 0 0 1 1 1 1 0 1 0 1 0 0 0 0 1 1 1 0 1 0 0 1 1 0 0 1 0 1 1 0 |

For still another example, when L=22+10, a 24*24 normalized Hadamard matrix $H_{24}$ is as follows:

$$H_{24}=\begin{bmatrix}
1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 \\
1 & -1 & 1 & -1 & 1 & 1 & 1 & -1 & -1 & -1 & 1 & 1 & -1 & 1 & 1 & -1 & 1 & 1 & -1 & 1 & 1 & -1 & -1 & -1 \\
1 & -1 & -1 & 1 & 1 & -1 & 1 & 1 & 1 & -1 & -1 & -1 & 1 & 1 & 1 & -1 & -1 & 1 & 1 & -1 & 1 & 1 & 1 & -1 \\
1 & 1 & -1 & -1 & 1 & 1 & -1 & 1 & 1 & 1 & -1 & -1 & -1 & 1 & 1 & 1 & -1 & -1 & 1 & 1 & -1 & 1 & 1 & 1 \\
1 & -1 & 1 & -1 & -1 & 1 & 1 & -1 & 1 & 1 & 1 & -1 & -1 & 1 & 1 & -1 & 1 & -1 & 1 & 1 & 1 & 1 & 1 & -1 \\
1 & -1 & -1 & 1 & 1 & -1 & 1 & 1 & -1 & 1 & 1 & 1 & -1 & 1 & 1 & -1 & 1 & -1 & -1 & 1 & 1 & -1 & 1 & 1 \\
1 & -1 & -1 & -1 & 1 & 1 & -1 & 1 & 1 & -1 & 1 & 1 & 1 & 1 & 1 & -1 & -1 & -1 & 1 & 1 & -1 & -1 & 1 & 1 \\
1 & 1 & -1 & -1 & -1 & 1 & 1 & -1 & 1 & 1 & -1 & 1 & 1 & 1 & 1 & -1 & -1 & -1 & 1 & 1 & -1 & 1 & 1 & 1 \\
1 & 1 & 1 & -1 & -1 & -1 & 1 & 1 & -1 & 1 & 1 & -1 & 1 & 1 & 1 & 1 & 1 & -1 & -1 & 1 & 1 & -1 & 1 & -1 \\
1 & 1 & 1 & 1 & -1 & -1 & -1 & 1 & 1 & -1 & 1 & 1 & -1 & 1 & 1 & 1 & 1 & 1 & -1 & -1 & 1 & 1 & -1 & -1 \\
1 & -1 & 1 & 1 & 1 & -1 & -1 & -1 & 1 & 1 & -1 & 1 & 1 & -1 & 1 & 1 & 1 & 1 & 1 & -1 & -1 & 1 & 1 & -1 \\
1 & 1 & -1 & 1 & 1 & 1 & -1 & -1 & -1 & 1 & 1 & -1 & 1 & 1 & -1 & 1 & 1 & 1 & 1 & 1 & -1 & -1 & 1 & -1 \\
1 & 1 & 1 & 1 & 1 & 1 & 1 & 1 & 1 & 1 & 1 & 1 & -1 & -1 & -1 & -1 & -1 & -1 & -1 & -1 & -1 & -1 & -1 & -1 \\
1 & -1 & 1 & -1 & 1 & 1 & 1 & -1 & -1 & -1 & 1 & 1 & -1 & -1 & 1 & 1 & -1 & 1 & 1 & -1 & 1 & 1 & 1 & -1 \\
1 & -1 & -1 & 1 & -1 & 1 & 1 & 1 & -1 & -1 & -1 & 1 & 1 & -1 & 1 & 1 & 1 & -1 & 1 & 1 & -1 & 1 & 1 & -1 \\
1 & 1 & -1 & -1 & 1 & -1 & 1 & 1 & 1 & -1 & -1 & -1 & -1 & 1 & 1 & 1 & -1 & 1 & 1 & -1 & 1 & 1 & 1 & 1 \\
1 & -1 & 1 & -1 & -1 & 1 & -1 & 1 & 1 & 1 & -1 & -1 & 1 & 1 & -1 & 1 & 1 & -1 & 1 & 1 & -1 & 1 & 1 & 1 \\
1 & -1 & -1 & 1 & -1 & -1 & 1 & -1 & 1 & 1 & 1 & -1 & 1 & 1 & 1 & -1 & 1 & 1 & -1 & 1 & 1 & -1 & 1 & 1 \\
1 & -1 & -1 & -1 & 1 & -1 & -1 & 1 & -1 & 1 & 1 & 1 & 1 & 1 & 1 & 1 & -1 & 1 & 1 & -1 & 1 & 1 & -1 & -1 \\
1 & 1 & -1 & -1 & -1 & 1 & -1 & -1 & 1 & -1 & 1 & 1 & 1 & 1 & 1 & -1 & 1 & 1 & -1 & 1 & -1 & 1 & -1 \\
1 & 1 & 1 & -1 & -1 & -1 & 1 & -1 & -1 & 1 & -1 & 1 & 1 & -1 & 1 & 1 & 1 & -1 & 1 & 1 & -1 & 1 & -1 \\
1 & 1 & 1 & 1 & -1 & -1 & -1 & 1 & -1 & -1 & 1 & -1 & 1 & -1 & -1 & -1 & 1 & 1 & 1 & -1 & 1 & 1 & -1 & 1 \\
1 & -1 & 1 & 1 & 1 & -1 & -1 & -1 & 1 & -1 & 1 & -1 & 1 & 1 & 1 & -1 & -1 & 1 & 1 & 1 & -1 & 1 & 1 & -1 \\
1 & 1 & -1 & 1 & 1 & 1 & -1 & -1 & -1 & 1 & -1 & 1 & -1 & 1 & 1 & -1 & -1 & -1 & 1 & 1 & 1 & -1 & 1 & 1
\end{bmatrix}$$

After the 1st column of $H_{24}$ is removed, a matrix $H_{24*23}$ is obtained. The 1st column of the matrix $H_{24\times23}$ is selected, the 1st column of the matrix $H_{24\times23}$ is removed, and rows of a matrix obtained by removing the column are divided into the following two groups based on positive/negative properties of elements in the removed column:

$$G_+^{22}=\begin{bmatrix}
1 & 1 & 1 & 1 & 1 & 1 & 1 & 1 & 1 & 1 & 1 & 1 & 1 & 1 & 1 & 1 & 1 & 1 & 1 & 1 & 1 & 1 \\
-1 & -1 & 1 & 1 & -1 & 1 & 1 & 1 & -1 & -1 & -1 & 1 & 1 & -1 & -1 & 1 & 1 & -1 & 1 & 1 & 1 & 1 & -1 & -1 & -1 \\
-1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 & 1 & 1 \\
1 & -1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 & 1 \\
1 & 1 & -1 & -1 & -1 & 1 & 1 & -1 & -1 & 1 & 1 & -1 & 1 & 1 & 1 & 1 & 1 & -1 & -1 & -1 & 1 & 1 & -1 & -1 & 1 & 1 & -1 \\
-1 & 1 & 1 & 1 & 1 & -1 & -1 & -1 & 1 & 1 & -1 & -1 & 1 & 1 & 1 & -1 & 1 & 1 & 1 & 1 & -1 & -1 & -1 & 1 & 1 & -1 & -1 \\
1 & 1 & 1 & 1 & 1 & 1 & 1 & 1 & 1 & 1 & -1 & -1 & -1 & -1 & -1 & -1 & -1 & -1 & -1 & -1 & -1 & -1 \\
-1 & -1 & 1 & 1 & -1 & 1 & 1 & 1 & -1 & -1 & -1 & -1 & 1 & 1 & 1 & 1 & -1 & 1 & 1 & -1 & -1 & -1 & 1 & 1 & 1 & 1 \\
-1 & -1 & -1 & 1 & 1 & -1 & -1 & 1 & 1 & -1 & 1 & 1 & 1 & 1 & 1 & -1 & 1 & 1 & 1 & -1 & 1 & 1 & -1 & -1 & -1 \\
1 & -1 & -1 & -1 & 1 & 1 & -1 & -1 & 1 & 1 & -1 & 1 & 1 & -1 & 1 & 1 & 1 & -1 & 1 & 1 & 1 & -1 & 1 & 1 & -1 \\
1 & 1 & -1 & -1 & -1 & 1 & 1 & -1 & -1 & 1 & 1 & -1 & -1 & -1 & -1 & -1 & -1 & 1 & 1 & 1 & 1 & -1 & 1 & 1 & -1 & 1 & 1 \\
-1 & 1 & 1 & 1 & 1 & -1 & -1 & -1 & 1 & 1 & -1 & -1 & -1 & -1 & 1 & 1 & -1 & -1 & -1 & 1 & 1 & 1 & 1 & -1 & 1 & 1
\end{bmatrix}$$

$$G_-^{22}=\begin{bmatrix}
1 & -1 & 1 & 1 & 1 & -1 & -1 & -1 & 1 & -1 & 1 & -1 & 1 & -1 & 1 & 1 & 1 & -1 & -1 & -1 & 1 & 1 & -1 \\
-1 & 1 & -1 & 1 & 1 & 1 & 1 & -1 & -1 & -1 & 1 & 1 & 1 & -1 & 1 & 1 & -1 & 1 & 1 & 1 & 1 & -1 & -1 & -1 & 1 & 1 \\
1 & -1 & -1 & 1 & -1 & 1 & 1 & 1 & 1 & -1 & -1 & 1 & 1 & -1 & 1 & 1 & -1 & -1 & 1 & 1 & 1 & 1 & -1 & -1 \\
-1 & 1 & -1 & -1 & 1 & -1 & 1 & 1 & 1 & 1 & 1 & -1 & -1 & -1 & 1 & 1 & -1 & 1 & 1 & -1 & 1 & 1 & -1 & 1 \\
-1 & 1 & 1 & -1 & -1 & 1 & -1 & 1 & 1 & 1 & 1 & 1 & -1 & -1 & -1 & 1 & 1 & -1 & 1 & 1 & -1 & 1 & 1 & 1 \\
1 & 1 & 1 & -1 & -1 & -1 & 1 & 1 & -1 & -1 & 1 & 1 & 1 & -1 & 1 & 1 & 1 & 1 & -1 & -1 & -1 & 1 & 1 & -1 & 1 & 1 \\
1 & -1 & 1 & 1 & 1 & -1 & -1 & -1 & 1 & 1 & -1 & -1 & 1 & 1 & -1 & -1 & -1 & 1 & 1 & 1 & 1 & -1 & 1 & 1 \\
-1 & 1 & -1 & 1 & 1 & 1 & 1 & -1 & -1 & -1 & 1 & -1 & 1 & 1 & 1 & -1 & 1 & 1 & -1 & -1 & -1 & 1 & 1 & 1 & 1 & -1 \\
1 & -1 & 1 & 1 & -1 & 1 & 1 & 1 & -1 & -1 & -1 & 1 & 1 & -1 & 1 & 1 & 1 & -1 & 1 & 1 & -1 & -1 & -1 & 1 & 1 \\
-1 & 1 & -1 & -1 & 1 & 1 & -1 & 1 & 1 & 1 & -1 & 1 & 1 & 1 & -1 & 1 & 1 & -1 & 1 & 1 & -1 & -1 & -1 & 1 & 1 \\
-1 & 1 & 1 & -1 & -1 & 1 & 1 & -1 & 1 & 1 & 1 & -1 & 1 & 1 & 1 & -1 & 1 & 1 & -1 & 1 & 1 & -1 & -1 & -1 \\
1 & 1 & 1 & -1 & -1 & -1 & 1 & 1 & -1 & -1 & 1 & 1 & -1 & 1 & 1 & -1 & -1 & -1 & 1 & 1 & 1 & 1 & -1 & 1 & 1 & 1 & -1
\end{bmatrix}$$

In this case, a Hamming distance between any two rows of elements in $G_+^{22}$ is 12, a Hamming distance between any two rows of elements in $G_-^{22}$ is also 12, and a Hamming distance between any row of elements in $G_+^{22}$ and any row of elements in $G_-^{22}$ is 11.

Then a 12*12 normalized Hadamard matrix $H_{12}$ shown below is used:

$$H_{12}=\begin{bmatrix} 1 & 1 & 1 & 1 & 1 & 1 & 1 & 1 & 1 & 1 & 1 & 1 \\ 1 & -1 & 1 & -1 & 1 & 1 & 1 & -1 & -1 & -1 & 1 & -1 \\ 1 & -1 & -1 & 1 & -1 & 1 & 1 & 1 & -1 & -1 & -1 & 1 \\ 1 & 1 & -1 & -1 & 1 & -1 & 1 & 1 & 1 & -1 & -1 & -1 \\ 1 & -1 & 1 & -1 & -1 & 1 & -1 & 1 & 1 & 1 & -1 & -1 \\ 1 & -1 & -1 & 1 & -1 & -1 & 1 & -1 & 1 & 1 & 1 & -1 \\ 1 & -1 & -1 & -1 & 1 & -1 & -1 & 1 & -1 & 1 & 1 & 1 \\ 1 & 1 & -1 & -1 & -1 & 1 & -1 & -1 & 1 & -1 & 1 & 1 \\ 1 & 1 & 1 & -1 & -1 & -1 & 1 & -1 & -1 & 1 & -1 & 1 \\ 1 & 1 & 1 & 1 & -1 & -1 & -1 & 1 & -1 & -1 & 1 & -1 \\ 1 & -1 & 1 & 1 & 1 & -1 & -1 & -1 & 1 & -1 & -1 & 1 \\ 1 & 1 & -1 & 1 & 1 & 1 & -1 & -1 & -1 & 1 & -1 & -1 \end{bmatrix}$$

After the 1st column of $H_{12}$ is removed, a matrix $H_{12*11}$ is obtained. Any column (for example, the 1st column herein) is selected from the matrix $H_{12*11}$ and is removed, and rows of a matrix obtained by removing the column are divided into the following two groups based on positive/negative properties of elements in the removed column:

$$G_{+}^{10}=\begin{bmatrix} 1 & 1 & 1 & 1 & 1 & 1 & 1 & 1 & 1 & 1 \\ -1 & -1 & 1 & -1 & 1 & 1 & 1 & -1 & -1 & -1 \\ -1 & -1 & -1 & 1 & -1 & -1 & 1 & -1 & 1 & 1 \\ 1 & -1 & -1 & -1 & 1 & -1 & -1 & 1 & -1 & 1 \\ 1 & 1 & -1 & -1 & -1 & 1 & -1 & -1 & 1 & -1 \\ -1 & 1 & 1 & 1 & -1 & -1 & -1 & 1 & -1 & -1 \end{bmatrix}$$

$$G_{-}^{10}=\begin{bmatrix} 1 & -1 & 1 & 1 & 1 & -1 & -1 & -1 & 1 & -1 \\ -1 & 1 & -1 & 1 & 1 & 1 & -1 & -1 & -1 & 1 \\ 1 & -1 & -1 & 1 & -1 & 1 & 1 & 1 & -1 & -1 \\ -1 & 1 & -1 & -1 & 1 & -1 & 1 & 1 & 1 & -1 \\ -1 & -1 & 1 & -1 & -1 & 1 & -1 & 1 & 1 & 1 \\ 1 & 1 & 1 & -1 & -1 & -1 & 1 & -1 & -1 & 1 \end{bmatrix}$$

In this case, a Hamming distance between any two rows of elements in $G_{+}^{10}$ is 6, a Hamming distance between any two rows of elements in $G_{-}^{10}$ is also 6, and a Hamming distance between any row of elements in $G_{+}^{10}$ and any row of elements in $G_{-}^{10}$ is 5. Then all rows in $G_{+}^{10}$ and $G_{-}^{10}$ are combined to form a codebook matrix $C_{12\times10}$ with a code length L of 10.

$$C_{12\times10}=\begin{bmatrix} G_{+}^{10} \\ G_{-}^{12} \end{bmatrix}$$

$G_{+}^{22}$ or $G_{-}^{22}$ is concatenated with $C_{12\times10}$ to form a codebook matrix $C_{12\times32}$ with a code length L of 32.

$$C_{12\times32}=[G_{+}^{22}, C_{12\times10}], \text{ or } C_{12\times32}=[G_{-}^{22}, C_{12\times10}]$$

In $C_{12\times32}$, a Hamming distance between any two rows of elements among the first six rows of elements is 18, a Hamming distance between any two rows of elements among the last six rows of elements is also 18, and a Hamming distance between any row of elements among the first six rows of elements and any row of elements among the last six rows of elements is 17.

For example, $G_{-}^{22}$ is concatenated with $C_{12\times10}$. An element 1 in $C_{12\times32}$ is mapped to 0, and an element -1 is mapped to 1, to obtain codewords shown in the following Table 5b. It can be understood that a mapping relationship between elements 1 and -1 in a matrix, and 1 and 0 is not limited in this embodiment of this application.

Table 5b Example 2 of a codebook with a code length (L) of 32

| Value combinations of the first PHR information (PHR1) | Codeword (codeword) |
| --- | --- |
| Combination 1 | 0 1 0 0 0 1 1 1 0 1 0 1 0 1 0 0 0 1 1 1 0 1 0 0 0 0 0 0 0 0 0 0 |

(continued)

| Value combinations of the first PHR information (PHR1) | Codeword (codeword) |
|---|---|
| Combination 2 | 1 0 1 0 0 0 1 1 1 0 0 1 1 0 1 0 0 0 1 1 1 0 1 1 0 1 0 0 0 1 1 1 |
| Combination 3 | 0 1 1 0 1 0 0 0 1 1 0 1 0 1 1 0 1 0 0 0 1 1 1 1 1 0 1 1 0 1 0 0 |
| Combination 4 | 1 0 1 1 0 1 0 0 0 1 0 1 1 0 1 1 0 1 0 0 0 1 0 1 1 1 0 1 1 0 1 0 |
| Combination 5 | 1 1 0 1 1 0 1 0 0 0 0 1 1 1 0 1 1 0 1 0 0 0 0 0 1 1 1 0 1 1 0 1 |
| Combination 6 | 0 0 0 1 1 1 0 1 1 0 0 1 0 0 0 1 1 1 0 1 1 0 1 0 0 0 1 1 1 0 1 1 |
| Combination 7 | 0 1 0 0 0 1 1 1 0 1 1 0 1 0 1 1 1 0 0 0 1 0 0 1 0 0 0 1 1 1 0 1 |
| Combination 8 | 1 0 1 0 0 0 1 1 1 0 1 0 0 1 0 1 1 1 0 0 0 1 1 0 1 0 0 0 1 1 1 0 |
| Combination 9 | 0 1 1 0 1 0 0 0 1 1 1 0 1 0 0 1 0 1 1 1 0 0 0 1 1 0 1 0 0 0 1 1 |
| Combination 10 | 1 0 1 1 0 1 0 0 0 1 1 0 0 1 0 0 1 0 1 1 1 0 1 0 1 1 0 1 0 0 0 1 |
| Combination 11 | 1 1 0 1 1 0 1 0 0 0 1 0 0 0 1 0 0 1 0 1 1 1 1 1 0 1 1 0 1 0 0 0 |
| Combination 12 | 0 0 0 1 1 1 0 1 1 0 1 0 1 1 1 0 0 0 1 0 0 1 0 0 0 1 1 1 0 1 1 0 |

It can be understood that Table 1 to Table 4 are merely examples, and a mapping relationship between a data rate (date rate) and a codeword and a mapping relationship between an LDPC indication (LDPC indication) and a codeword in Table 1 to Table 4 are not fixed. It only needs to be ensured that different combinations of data rates and LDPC indications are mapped to different codewords, in other words, different values of the first PHR information (PHR1) are mapped to different codewords.

For example, the first codeword set may include one or more of the following codewords: one or more codewords in Table 1, one or more codewords in Table 2, one or more codewords in Table 3, one or more codewords in Table 4, one or more codewords in Table 5a, or one or more codewords in Table 5b.

To better describe beneficial effect of mapping and encoding the first PHR information (namely, the PHR1) by using the first codeword set designed in this embodiment of this application, the following describes performance of this embodiment of this application by using simulated packet error rates of the first PHR information (namely, the PHR1) in different coding schemes as examples. In addition, an advantage of this embodiment of this application in terms of transmission duration is further described by using an example in which transmission time of the first PHR information (namely, the PHR1) is calculated.

For example, FIG. 7 is a diagram of a simulation result of packet error rates of the PHR1 in different coding schemes according to an embodiment of this application. As shown in FIG. 7, a horizontal coordinate represents a signal-to-noise ratio (signal-to-noise ratio, SNR), measured in decibel (decibel, dB); and a vertical coordinate represents a packet error rate (packet error rate, PER) of the first PHR information (namely, the PHR1). It can be understood that, for precision of illustration, FIG. 7 shows only a part of the simulation result. To be specific, an SNR range represented by horizontal coordinates is -5 dB to 0, and a packet error rate range represented by vertical coordinates is greater than $10^{-3}$. In FIG. 7, BCC represents a packet error rate in a case in which convolutional coding is performed on four bits of the PHR1, Equal, L=22 represents a packet error rate in a case in which the PHR1 is mapped and encoded by using all the codewords in Table 1, Unequal, L=22 represents a packet error rate in a case in which the PHR1 is mapped and encoded by using the first 10 codewords (namely, the first codeword set) in Table 1, Equal, L=26 represents a packet error rate in a case in which the PHR1 is mapped and encoded by using all the codewords in Table 2, and Unequal, L=26 represents a packet error rate in a case in which the PHR1 is mapped and encoded by using the first 10 codewords (namely, the first codeword set) in Table 2.

It can be learned from FIG. 7 that, with an increase in a codeword length, a packet error rate of the PHR1 is continuously reduced.

In addition, transmission duration of the PHR1 in a case in which codebooks with different codeword lengths are used is shown in Table 6.

Table 6

| Codeword length | Transmission duration of the PHR1 ($\mu$s) |
|---|---|
| 20 | 5 |
| 22 | 5.5 |

(continued)

| Codeword length | Transmission duration of the PHR1 ($\mu$s) |
|---|---|
| 26 | 6.5 |

It can be learned from Table 6 that transmission time in a case in which the first PHR information (namely, the PHR1) is mapped and encoded by using the codebook designed in this embodiment of this application is shorter than transmission time in the solution 3 (the PHR1 is transmitted at a rate of 0.975 Mbps) of the conventional technology.

Therefore, in this embodiment of this application, a requirement for demodulation performance can be met, and transmission duration of the PHR field (mainly the PHR1) can also be reduced, to achieve a good compromise between the demodulation performance and the transmission duration of the PHR field (mainly the PHR1).

This application further provides another implementation of the first codeword set.

Currently, the PHY payload field supports a total of five data rates. Even if whether the PHY payload field is encoded by using the LDPC is indicated, only a maximum of 10 values are needed for indication. In this case, at least 10 (subsequent standard extension is considered) different codeword sequences may be used to indicate modulation and coding rate information of a UWB system. A Hamming distance between a codeword sequence corresponding to a low data rate and another codeword sequence may be large, and a Hamming distance between a codeword sequence corresponding to a high data rate and another codeword sequence may be small, so that performance of a codeword sequence matches a data modulation and coding rate.

For example, another possible codebook generation manner is as follows:

When L=16, a 12*12 normalized Hadamard matrix $H_{12}$ is as follows:

$$H_{12}=\begin{bmatrix} 1 & 1 & 1 & 1 & 1 & 1 & 1 & 1 & 1 & 1 & 1 & 1 \\ 1 & -1 & 1 & -1 & 1 & 1 & 1 & -1 & -1 & -1 & 1 & -1 \\ 1 & -1 & -1 & 1 & -1 & 1 & 1 & 1 & -1 & -1 & -1 & 1 \\ 1 & 1 & -1 & -1 & 1 & -1 & 1 & 1 & 1 & -1 & -1 & -1 \\ 1 & -1 & 1 & -1 & -1 & 1 & -1 & 1 & 1 & 1 & -1 & -1 \\ 1 & -1 & -1 & 1 & -1 & -1 & 1 & -1 & 1 & 1 & 1 & -1 \\ 1 & -1 & -1 & -1 & 1 & -1 & -1 & 1 & -1 & 1 & 1 & 1 \\ 1 & 1 & -1 & -1 & -1 & 1 & -1 & -1 & 1 & -1 & 1 & 1 \\ 1 & 1 & 1 & -1 & -1 & -1 & 1 & -1 & -1 & 1 & -1 & 1 \\ 1 & 1 & 1 & 1 & -1 & -1 & -1 & 1 & -1 & -1 & 1 & -1 \\ 1 & -1 & 1 & 1 & 1 & -1 & -1 & -1 & 1 & -1 & -1 & 1 \\ 1 & 1 & -1 & 1 & 1 & 1 & -1 & -1 & -1 & 1 & -1 & -1 \end{bmatrix}$$

After the 1$^{st}$ column of $H_{12}$ is removed, a matrix $H_{12\times11}$ is obtained.

$$H_{12\times11}=\begin{bmatrix} 1 & 1 & 1 & 1 & 1 & 1 & 1 & 1 & 1 & 1 & 1 \\ -1 & 1 & -1 & 1 & 1 & 1 & -1 & -1 & -1 & 1 & -1 \\ -1 & -1 & 1 & -1 & 1 & 1 & 1 & -1 & -1 & -1 & 1 \\ 1 & -1 & -1 & 1 & -1 & 1 & 1 & 1 & -1 & -1 & -1 \\ -1 & 1 & -1 & -1 & 1 & -1 & 1 & 1 & 1 & -1 & -1 \\ -1 & -1 & 1 & -1 & -1 & 1 & -1 & 1 & 1 & 1 & -1 \\ -1 & -1 & -1 & 1 & -1 & -1 & 1 & -1 & 1 & 1 & 1 \\ 1 & -1 & -1 & -1 & 1 & -1 & -1 & 1 & -1 & 1 & 1 \\ 1 & 1 & -1 & -1 & -1 & 1 & -1 & -1 & 1 & -1 & 1 \\ 1 & 1 & 1 & -1 & -1 & -1 & 1 & -1 & -1 & 1 & -1 \\ -1 & 1 & 1 & 1 & -1 & -1 & -1 & 1 & -1 & -1 & 1 \\ 1 & -1 & 1 & 1 & 1 & -1 & -1 & -1 & 1 & -1 & -1 \end{bmatrix}$$

In this case, a Hamming distance between any two rows of elements in $H_{12\times11}$ is 6. Then a matrix $P_{12\times5}$ is constructed, where the 1$^{st}$ row of elements in $P_{12\times5}$ are all -1, and all other elements are 1:

$$P_{12\times5}=\begin{bmatrix} -1 & -1 & -1 & -1 & -1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \end{bmatrix}$$

In this case, in $P_{12\times5}$, a Hamming distance between the 1st row of elements and another row of elements is 5, and a Hamming distance between any two rows of elements other than the 1st row of elements is 0. Therefore, a codebook matrix with a length of 16 may be constructed: $C_{12\times16}=[P_{12\times5}, H_{12\times11}]$. $C_{12\times16}$ may be understood as concatenation of two matrices. Before the concatenation, rows of the matrix $H_{12\times11}$ on the right may be rearranged, and a codebook matrix obtained through concatenation after the rearrangement does not affect Hamming distance distribution of the original codebook matrix $C_{12\times16}$. In the codebook matrix $C_{12\times16}$, a Hamming distance between the 1st row of elements and any other row of elements is 11, and a Hamming distance between any other two rows of elements is 6.

An element 1 in the codebook matrix $C_{12\times16}$ is mapped to 0, and an element -1 is mapped to 1, to obtain codewords shown in Table 7.

Table 7 Example of a codebook with a code length (L) of 16

| Modulation and coding rate combination (a combination indicating a data rate of the PHY payload field and whether the PHY payload field is encoded by using the LDPC) | Codeword (codeword) |
|---|---|
| Combination 1 | 1 1 1 1 1 0 0 0 0 0 0 0 0 0 0 0 |
| Combination 2 | 0 0 0 0 0 1 0 1 0 0 0 1 1 1 0 1 |
| Combination 3 | 0 0 0 0 0 1 1 0 1 0 0 0 1 1 1 0 |
| Combination 4 | 0 0 0 0 0 0 1 1 0 1 0 0 0 1 1 1 |
| Combination 5 | 0 0 0 0 0 1 0 1 1 0 1 0 0 0 1 1 |
| Combination 6 | 0 0 0 0 0 1 1 0 1 1 0 1 0 0 0 1 |
| Combination 7 | 0 0 0 0 0 1 1 1 0 1 1 0 1 0 0 0 |
| Combination 8 | 0 0 0 0 0 0 1 1 1 0 1 1 0 1 0 0 |
| Combination 9 | 0 0 0 0 0 0 0 1 1 1 0 1 1 0 1 0 |
| Combination 10 | 0 0 0 0 0 0 0 0 1 1 1 0 1 1 0 1 |
| Combination 11 | 0 0 0 0 0 1 0 0 0 1 1 1 0 1 1 0 |
| Combination 12 | 0 0 0 0 0 0 1 0 0 0 1 1 1 0 1 1 |

When L=18, a 12*12 normalized Hadamard matrix $H_{12}$ is shown above. Details are not described herein again. After the 1st column of $H_{12}$ is removed, a matrix $H_{12\times11}$ is obtained. This is described above, and details are not described herein again. A Hamming distance between any two rows of elements in $H_{12\times11}$ is 6.

Then a matrix $P_{12x7}$ is constructed, where the 1st row of elements in $P_{12\times7}$ are all -1, and all other elements are 1:

$$P_{12\times7}=\begin{bmatrix} -1 & -1 & -1 & -1 & -1 & -1 & -1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \end{bmatrix}$$

In this case, in $P_{12\times7}$, a Hamming distance between the 1st row of elements and another row of elements is 7, and a Hamming distance between any two rows of elements other than the 1st row of elements is 0. Therefore, a codebook matrix with a length of 18 may be constructed: $C_{12\times18}=[P_{12\times7}, H_{12\times11}]$. $C_{12\times18}$ may be understood as concatenation of two matrices. Before the concatenation, rows of the matrix $H_{12\times11}$ on the right may be rearranged, and a codebook matrix obtained through concatenation after the rearrangement does not affect Hamming distance distribution of the original codebook matrix $C_{12\times18}$. In the codebook matrix $C_{12\times18}$, a Hamming distance between the 1st row of elements and any other row of elements is 13, and a Hamming distance between any other two rows of elements is 6.

An element 1 in the codebook matrix $C_{12\times18}$ is mapped to 0, and an element -1 is mapped to 1, to obtain codewords shown in Table 8.

Table 8 Example 1 of a codebook with a code length (L) of 18

| Modulation and coding rate combination (a combination indicating a data rate of the PHY payload field and whether the PHY payload field is encoded by using the LDPC) | Codeword (codeword) |
| --- | --- |
| Combination 1 | 1 1 1 1 1 1 1 0 0 0 0 0 0 0 0 0 0 0 |
| Combination 2 | 0 0 0 0 0 0 0 1 0 1 0 0 0 1 1 1 0 1 |
| Combination 3 | 0 0 0 0 0 0 0 1 1 0 1 0 0 0 1 1 1 0 |
| Combination 4 | 0 0 0 0 0 0 0 0 1 1 0 1 0 0 0 1 1 1 |
| Combination 5 | 0 0 0 0 0 0 0 1 0 1 1 0 1 0 0 0 1 1 |
| Combination 6 | 0 0 0 0 0 0 0 1 1 0 1 1 0 1 0 0 0 1 |
| Combination 7 | 0 0 0 0 0 0 0 1 1 1 0 1 1 0 1 0 0 0 |
| Combination 8 | 0 0 0 0 0 0 0 0 1 1 1 0 1 1 0 1 0 0 |
| Combination 9 | 0 0 0 0 0 0 0 0 0 1 1 1 0 1 1 0 1 0 |
| Combination 10 | 0 0 0 0 0 0 0 0 0 0 1 1 1 0 1 1 0 1 |
| Combination 11 | 0 0 0 0 0 0 0 1 0 0 0 1 1 1 0 1 1 0 |
| Combination 12 | 0 0 0 0 0 0 0 0 1 0 0 0 1 1 1 0 1 1 |

Alternatively, when L=18, a 16*16 normalized Hadamard matrix $H_{16}$ is as follows:

$$H_{16}=\begin{bmatrix}
1 & 1 & 1 & 1 & 1 & 1 & 1 & 1 & 1 & 1 & 1 & 1 & 1 & 1 & 1 & 1 \\
1 & -1 & 1 & -1 & 1 & -1 & 1 & -1 & 1 & -1 & 1 & -1 & 1 & -1 & 1 & -1 \\
1 & 1 & -1 & -1 & 1 & 1 & -1 & -1 & 1 & 1 & -1 & -1 & 1 & 1 & -1 & -1 \\
1 & -1 & -1 & 1 & 1 & -1 & -1 & 1 & 1 & -1 & -1 & 1 & 1 & -1 & -1 & 1 \\
1 & 1 & 1 & 1 & -1 & -1 & -1 & -1 & 1 & 1 & 1 & 1 & -1 & -1 & -1 & -1 \\
1 & -1 & 1 & -1 & -1 & 1 & -1 & 1 & 1 & -1 & 1 & -1 & -1 & 1 & -1 & 1 \\
1 & 1 & -1 & -1 & -1 & -1 & 1 & 1 & 1 & 1 & -1 & -1 & -1 & -1 & 1 & 1 \\
1 & -1 & -1 & 1 & -1 & 1 & 1 & -1 & 1 & -1 & -1 & 1 & -1 & 1 & 1 & -1 \\
1 & 1 & 1 & 1 & 1 & 1 & 1 & 1 & -1 & -1 & -1 & -1 & -1 & -1 & -1 & -1 \\
1 & -1 & 1 & -1 & 1 & -1 & 1 & -1 & -1 & 1 & -1 & 1 & -1 & 1 & -1 & 1 \\
1 & 1 & -1 & -1 & 1 & 1 & -1 & -1 & -1 & -1 & 1 & 1 & -1 & -1 & 1 & 1 \\
1 & -1 & -1 & 1 & 1 & -1 & -1 & 1 & -1 & 1 & 1 & -1 & -1 & 1 & 1 & -1 \\
1 & 1 & 1 & 1 & -1 & -1 & -1 & -1 & -1 & -1 & -1 & -1 & 1 & 1 & 1 & 1 \\
1 & -1 & 1 & -1 & -1 & 1 & -1 & 1 & -1 & 1 & -1 & 1 & 1 & -1 & 1 & -1 \\
1 & 1 & -1 & -1 & -1 & -1 & 1 & 1 & -1 & -1 & 1 & 1 & 1 & 1 & -1 & -1 \\
1 & -1 & -1 & 1 & -1 & 1 & 1 & -1 & -1 & 1 & 1 & -1 & 1 & -1 & -1 & 1
\end{bmatrix}$$

After the 1st column of $H_{16}$ is removed, a matrix $H_{16\times15}$ is obtained.

$$H_{16\times15}=\begin{bmatrix}
1 & 1 & 1 & 1 & 1 & 1 & 1 & 1 & 1 & 1 & 1 & 1 & 1 & 1 & 1 \\
-1 & 1 & -1 & 1 & -1 & 1 & -1 & 1 & -1 & 1 & -1 & 1 & -1 & 1 & -1 \\
1 & -1 & -1 & 1 & 1 & -1 & -1 & 1 & 1 & -1 & -1 & 1 & 1 & -1 & -1 \\
-1 & -1 & 1 & 1 & -1 & -1 & 1 & 1 & -1 & -1 & 1 & 1 & -1 & -1 & 1 \\
1 & 1 & 1 & -1 & -1 & -1 & -1 & 1 & 1 & 1 & 1 & -1 & -1 & -1 & -1 \\
-1 & 1 & -1 & -1 & 1 & -1 & 1 & 1 & -1 & 1 & -1 & -1 & 1 & -1 & 1 \\
1 & -1 & -1 & -1 & -1 & 1 & 1 & 1 & 1 & -1 & -1 & -1 & -1 & 1 & 1 \\
-1 & -1 & 1 & -1 & 1 & 1 & -1 & 1 & -1 & -1 & 1 & -1 & 1 & 1 & -1 \\
1 & 1 & 1 & 1 & 1 & 1 & 1 & -1 & -1 & -1 & -1 & -1 & -1 & -1 & -1 \\
-1 & 1 & -1 & 1 & -1 & 1 & -1 & -1 & 1 & -1 & 1 & -1 & 1 & -1 & 1 \\
1 & -1 & -1 & 1 & 1 & -1 & -1 & -1 & -1 & 1 & 1 & -1 & -1 & 1 & 1 \\
-1 & -1 & 1 & 1 & -1 & -1 & 1 & -1 & 1 & 1 & -1 & -1 & 1 & 1 & -1 \\
1 & 1 & 1 & -1 & -1 & -1 & -1 & -1 & -1 & -1 & -1 & 1 & 1 & 1 & 1 \\
-1 & 1 & -1 & -1 & 1 & -1 & 1 & -1 & 1 & -1 & 1 & 1 & -1 & 1 & -1 \\
1 & -1 & -1 & -1 & -1 & 1 & 1 & -1 & -1 & 1 & 1 & 1 & 1 & -1 & -1 \\
-1 & -1 & 1 & -1 & 1 & 1 & -1 & -1 & 1 & 1 & -1 & 1 & -1 & -1 & 1
\end{bmatrix}$$

In this case, a Hamming distance between any two rows of elements in $H_{16\times15}$ is 8. Then a matrix $P_{16\times3}$ is constructed, where the 1st row of elements in $P_{16\times3}$ are all -1, and all other elements are 1:

$$P_{16\times3}=\begin{bmatrix}
-1 & -1 & -1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1 \\
1 & 1 & 1
\end{bmatrix}$$

In this case, in $P_{16\times3}$, a Hamming distance between the 1st row of elements and another row of elements is 3, and a Hamming distance between any two rows of elements other than the 1st row of elements is 0. Therefore, a codebook matrix with a length of 18 may be constructed: $C_{16\times18}=[P_{16\times13}, H_{16\times15}]$. $C_{16\times18}$ may be understood as concatenation of two matrices. Before the concatenation, rows of the matrix $H_{16\times15}$ on the right may be rearranged, and a codebook matrix obtained through concatenation after the rearrangement does not affect Hamming distance distribution of the original codebook matrix $C_{16\times18}$. In the codebook matrix $C_{16\times18}$, a Hamming distance between the 1st row of elements and any other row of elements is 11, and a Hamming distance between any other two rows of elements is 8.

An element 1 in the codebook matrix $C_{16\times18}$ is mapped to 0, and an element -1 is mapped to 1, to obtain codewords shown in Table 9.

Table 9 Example 2 of a codebook with a code length (L) of 18

| Modulation and coding rate combination (a combination indicating a data rate of the PHY payload field and whether the PHY payload field is encoded by using the LDPC) | Codeword (codeword) |
|---|---|
| Combination 1 | 1 1 1 0 0 0 0 0 0 0 0 0 0 0 0 0 0 0 |
| Combination 2 | 0 0 0 1 0 1 0 1 0 1 0 1 0 1 0 1 0 1 |
| Combination 3 | 0 0 0 0 1 1 0 0 1 1 0 0 1 1 0 0 1 1 |
| Combination 4 | 0 0 0 1 1 0 0 1 1 0 0 1 1 0 0 1 1 0 |
| Combination 5 | 0 0 0 0 0 0 1 1 1 1 0 0 0 0 1 1 1 1 |
| Combination 6 | 0 0 0 1 0 1 1 0 1 0 0 0 1 0 1 1 0 1 0 |
| Combination 7 | 0 0 0 0 1 1 1 1 0 0 0 0 1 1 1 1 0 0 |
| Combination 8 | 0 0 0 1 1 0 1 0 0 1 0 1 1 0 1 0 0 1 |
| Combination 9 | 0 0 0 0 0 0 0 0 0 1 1 1 1 1 1 1 1 |
| Combination 10 | 0 0 0 1 0 1 0 1 1 0 1 0 1 0 1 0 1 0 |
| Combination 11 | 0 0 0 0 1 1 0 0 1 1 1 1 0 0 1 1 0 0 |
| Combination 12 | 0 0 0 1 1 0 0 1 1 0 1 0 0 1 1 0 0 1 |
| Combination 13 | 0 0 0 0 0 0 1 1 1 1 1 1 1 0 0 0 0 |
| Combination 14 | 0 0 0 1 0 1 1 0 1 0 1 0 1 0 0 1 0 1 |
| Combination 15 | 0 0 0 0 1 1 1 1 0 0 1 1 0 0 0 0 1 1 |
| Combination 16 | 0 0 0 1 1 0 1 0 0 1 1 0 0 1 0 1 1 0 |

When L=20, a 12*12 normalized Hadamard matrix $H_{12}$ is shown above. Details are not described herein again. After the 1st column of $H_{12}$ is removed, a matrix $H_{12\times11}$ is obtained. This is described above, and details are not described herein again. A Hamming distance between any two rows of elements in $H_{12\times11}$ is 6.

Then a matrix $P_{12\times9}$ is constructed, where the first three rows of $P_{12\times9}$ are repetitions of the following matrix:

$$H_3 = \begin{bmatrix} -1 & 1 & -1 \\ 1 & -1 & -1 \\ -1 & -1 & 1 \end{bmatrix}$$

To be specific, the first three rows of $P_{12\times9}$ are obtained by repeating the matrix $H_3$ three times:

$$P_{12\times9} = \begin{bmatrix} -1 & 1 & -1 & -1 & 1 & -1 & -1 & 1 & -1 \\ 1 & -1 & -1 & 1 & -1 & -1 & 1 & -1 & -1 \\ -1 & -1 & 1 & -1 & -1 & 1 & -1 & -1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \\ 1 & 1 & 1 & 1 & 1 & 1 & 1 & 1 & 1 \end{bmatrix}$$

In this case, in $P_{12\times9}$, a Hamming distance between any row of elements among the first three rows of elements and any other row of elements is 6, and a Hamming distance between any two rows of elements other than the first three rows of elements is 0. Therefore, a codebook matrix with a length of 20 may be constructed: $C_{12\times20}=[P_{12\times9}, H_{12\times11}]$. $C_{12\times20}$ may be understood as concatenation of two matrices. Before the concatenation, rows of the matrix $H_{12\times11}$ on the right may be rearranged, and a codebook matrix obtained through concatenation after the rearrangement does not affect Hamming distance distribution of the original codebook matrix $C_{12\times20}$. In the codebook matrix $C_{12\times20}$, a Hamming

distance between any row of elements among the first three rows of elements and any other row of elements is 12, and a Hamming distance between any other two rows of elements is 6.

An element 1 in the codebook matrix $C_{12\times20}$ is mapped to 0, and an element -1 is mapped to 1, to obtain codewords shown in Table 10.

Table 10 Example 1 of a codebook with a code length (L) of 20

| Modulation and coding rate combination (a combination indicating a data rate of the PHY payload field and whether the PHY payload field is encoded by using the LDPC) | Codeword (codeword) |
|---|---|
| Combination 1 | 1 0 1 1 0 1 1 0 1 0 0 0 0 0 0 0 0 0 0 0 |
| Combination 2 | 0 1 1 0 1 1 0 1 1 1 0 1 0 0 0 1 1 1 0 1 |
| Combination 3 | 1 1 0 1 1 0 1 1 0 1 1 0 1 0 0 0 1 1 1 0 |
| Combination 4 | 0 0 0 0 0 0 0 0 0 0 1 1 0 1 0 0 0 1 1 1 |
| Combination 5 | 0 0 0 0 0 0 0 0 0 1 0 1 1 0 1 0 0 0 1 1 |
| Combination 6 | 0 0 0 0 0 0 0 0 0 1 1 0 1 1 0 1 0 0 0 1 |
| Combination 7 | 0 0 0 0 0 0 0 0 0 1 1 1 0 1 1 0 1 0 0 0 |
| Combination 8 | 0 0 0 0 0 0 0 0 0 0 1 1 1 0 1 1 0 1 0 0 |
| Combination 9 | 0 0 0 0 0 0 0 0 0 0 0 1 1 1 0 1 1 0 1 0 |
| Combination 10 | 0 0 0 0 0 0 0 0 0 0 0 0 1 1 1 0 1 1 0 1 |
| Combination 11 | 0 0 0 0 0 0 0 0 0 1 0 0 0 1 1 1 0 1 1 0 |
| Combination 12 | 0 0 0 0 0 0 0 0 0 0 1 0 0 0 1 1 1 0 1 1 |

Alternatively, a 16*16 normalized Hadamard matrix $H_{16}$ is shown above, and details are not described herein again. After the 1st column of $H_{16}$ is removed, a matrix $H_{16\times15}$ is obtained. This is described above, and details are not described herein again. A Hamming distance between any two rows of elements in $H_{16\times15}$ is 8.

Then a matrix $P_{16\times5}$ is constructed, where $P_{16\times5}$ is shown below:

$$P_{16\times5}=\begin{bmatrix} -1 & -1 & -1 & -1 & -1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \end{bmatrix} \text{(case 1);}$$

or

$$P_{16\times5}=\begin{bmatrix} 1 & -1 & -1 & -1 & -1 \\ -1 & 1 & -1 & 1 & -1 \\ -1 & -1 & 1 & -1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \end{bmatrix} \quad \text{(case 2)}$$

(case 2)

In $P_{16\times5}$ in the case 1, a Hamming distance between the 1st row of elements and another row of elements is 5, and a Hamming distance between any two rows of elements other than the 1st row of elements is 0. Therefore, a codebook matrix with a length of 20 may be constructed: $C_{16\times20}=[P_{16\times5}, H_{16\times15}]$. $C_{16\times20}$ may be understood as concatenation of two matrices. Before the concatenation, rows of the matrix $H_{16\times15}$ on the right may be rearranged, and a codebook matrix obtained through concatenation after the rearrangement does not affect Hamming distance distribution of the original codebook matrix $C_{16\times20}$. In the codebook matrix $C_{16\times20}$, a Hamming distance between the 1st row of elements and any other row of elements is 13, and a Hamming distance between any other two rows of elements is 8. An element 1 in the codebook matrix $C_{16\times20}$ is mapped to 0, and an element -1 is mapped to 1, to obtain codewords shown in Table 11.

Table 11 Example 2 of a codebook with a code length (L) of 20

| Modulation and coding rate combination (a combination indicating a data rate of the PHY payload field and whether the PHY payload field is encoded by using the LDPC) | Codeword (codeword) |
|---|---|
| Combination 1 | 1 1 1 1 1 0 0 0 0 0 0 0 0 0 0 0 0 0 0 0 |
| Combination 2 | 0 0 0 0 0 1 0 1 0 1 0 1 0 1 0 1 0 1 0 1 |
| Combination 3 | 0 0 0 0 0 0 1 1 0 0 1 1 0 0 1 1 0 0 1 1 |
| Combination 4 | 0 0 0 0 0 1 1 0 0 1 1 0 0 1 1 0 0 1 1 0 |
| Combination 5 | 0 0 0 0 0 0 0 0 1 1 1 1 0 0 0 0 1 1 1 1 |
| Combination 6 | 0 0 0 0 0 1 0 1 1 0 1 0 0 1 0 1 1 0 1 0 |
| Combination 7 | 0 0 0 0 0 0 1 1 1 1 0 0 0 0 1 1 1 1 0 0 |
| Combination 8 | 0 0 0 0 0 1 1 0 1 0 0 1 0 1 1 0 1 0 0 1 |
| Combination 9 | 0 0 0 0 0 0 0 0 0 0 0 0 1 1 1 1 1 1 1 1 |
| Combination 10 | 0 0 0 0 0 1 0 1 0 1 0 1 1 0 1 0 1 0 1 0 |
| Combination 11 | 0 0 0 0 0 0 1 1 0 0 1 1 1 1 0 0 1 1 0 0 |
| Combination 12 | 0 0 0 0 0 1 1 0 0 1 1 0 1 0 0 1 1 0 0 1 |
| Combination 13 | 0 0 0 0 0 0 0 0 1 1 1 1 1 1 1 0 0 0 0 0 |
| Combination 14 | 0 0 0 0 0 1 0 1 1 0 1 0 1 0 1 0 0 1 0 1 |
| Combination 15 | 0 0 0 0 0 0 1 1 1 1 0 0 1 1 0 0 0 0 1 1 |
| Combination 16 | 0 0 0 0 0 1 1 0 1 0 0 1 1 0 0 1 0 1 1 0 |

In $P_{16\times5}$ in the case 2, a Hamming distance between any row of elements among the first three rows of elements and another row of elements is 3, and a Hamming distance between any two rows of elements other than the first three rows of elements is 0. Therefore, a codebook matrix with a length of 20 may be constructed: $C_{16\times20}=[P_{16\times5}, H_{16\times51}]$. $C_{16\times20}$ may be understood as concatenation of two matrices. Before the concatenation, rows of the matrix $H_{16\times15}$ on the

right may be rearranged, and a codebook matrix obtained through concatenation after the rearrangement does not affect Hamming distance distribution of the original codebook matrix $C_{16\times20}$. In the codebook matrix $C_{16\times20}$, a Hamming distance between any row of elements among the first three rows of elements and any other row of elements is 11, and a Hamming distance between any other two rows of elements is 8. An element 1 in the codebook matrix $C_{16\times20}$ is mapped to 0, and an element -1 is mapped to 1, to obtain codewords shown in Table 12.

Table 12 Example 3 of a codebook with a code length (L) of 20

| Modulation and coding rate combination (a combination indicating a data rate of the PHY payload field and whether the PHY payload field is encoded by using the LDPC) | Codeword (codeword) |
|---|---|
| Combination 1 | 0 1 1 1 1 0 0 0 0 0 0 0 0 0 0 0 0 0 0 0 |
| Combination 2 | 1 0 1 0 1 1 0 1 0 1 0 1 0 1 0 1 0 1 0 1 |
| Combination 3 | 1 1 0 1 0 0 1 1 0 0 1 1 0 0 1 1 0 0 1 1 |
| Combination 4 | 0 0 0 0 0 1 1 0 0 1 1 0 0 1 1 0 0 1 1 0 |
| Combination 5 | 0 0 0 0 0 0 0 0 1 1 1 1 0 0 0 0 1 1 1 1 |
| Combination 6 | 0 0 0 0 0 1 0 1 1 0 1 0 0 1 0 1 1 0 1 0 |
| Combination 7 | 0 0 0 0 0 0 1 1 1 1 0 0 0 0 1 1 1 1 0 0 |
| Combination 8 | 0 0 0 0 0 1 1 0 1 0 0 1 0 1 1 0 1 0 0 1 |
| Combination 9 | 0 0 0 0 0 0 0 0 0 0 0 1 1 1 1 1 1 1 1 |
| Combination 10 | 0 0 0 0 0 1 0 1 0 1 0 1 1 0 1 0 1 0 1 0 |
| Combination 11 | 0 0 0 0 0 0 1 1 0 0 1 1 1 1 0 0 1 1 0 0 |
| Combination 12 | 0 0 0 0 0 1 1 0 0 1 1 0 1 0 0 1 1 0 0 1 |
| Combination 13 | 0 0 0 0 0 0 0 0 1 1 1 1 1 1 1 0 0 0 0 |
| Combination 14 | 0 0 0 0 0 1 0 1 1 0 1 0 1 0 0 1 0 0 1 0 1 |
| Combination 15 | 0 0 0 0 0 0 1 1 1 1 0 0 1 1 0 0 0 0 1 1 |
| Combination 16 | 0 0 0 0 0 1 1 0 1 0 0 1 1 0 0 1 0 1 1 0 |

Alternatively, a 20*20 normalized Hadamard matrix $H_{20}$ shown below is used:

$$H_{20}=\begin{bmatrix}
1 & 1 & 1 & 1 & 1 & 1 & 1 & 1 & 1 & 1 & 1 & 1 & 1 & 1 & 1 & 1 & 1 & 1 & 1 & 1 \\
1 & -1 & -1 & 1 & 1 & -1 & -1 & -1 & -1 & 1 & -1 & 1 & -1 & 1 & 1 & 1 & 1 & -1 & -1 & 1 \\
1 & -1 & 1 & 1 & -1 & -1 & -1 & -1 & 1 & -1 & 1 & -1 & 1 & 1 & 1 & 1 & -1 & -1 & 1 & -1 \\
1 & 1 & 1 & -1 & -1 & -1 & -1 & 1 & -1 & 1 & -1 & 1 & 1 & 1 & 1 & -1 & -1 & 1 & -1 & -1 \\
1 & 1 & -1 & -1 & -1 & -1 & 1 & -1 & 1 & -1 & 1 & 1 & 1 & 1 & -1 & -1 & 1 & -1 & -1 & 1 \\
1 & -1 & -1 & -1 & -1 & 1 & -1 & 1 & -1 & 1 & 1 & 1 & 1 & -1 & -1 & 1 & -1 & -1 & 1 & 1 \\
1 & -1 & -1 & -1 & 1 & -1 & 1 & -1 & 1 & 1 & 1 & 1 & -1 & -1 & 1 & -1 & -1 & 1 & 1 & -1 \\
1 & -1 & -1 & 1 & -1 & 1 & -1 & 1 & 1 & 1 & 1 & -1 & -1 & 1 & -1 & -1 & 1 & 1 & -1 & -1 \\
1 & -1 & 1 & -1 & 1 & -1 & 1 & 1 & 1 & 1 & -1 & -1 & 1 & -1 & -1 & 1 & 1 & -1 & -1 & -1 \\
1 & 1 & -1 & 1 & -1 & 1 & 1 & 1 & 1 & -1 & -1 & 1 & -1 & -1 & 1 & 1 & -1 & -1 & -1 & -1 \\
1 & -1 & 1 & -1 & 1 & 1 & 1 & 1 & -1 & -1 & 1 & -1 & -1 & 1 & 1 & -1 & -1 & -1 & -1 & 1 \\
1 & 1 & -1 & 1 & 1 & 1 & 1 & -1 & -1 & 1 & -1 & -1 & 1 & 1 & -1 & -1 & -1 & -1 & 1 & -1 \\
1 & -1 & 1 & 1 & 1 & 1 & -1 & -1 & 1 & -1 & -1 & 1 & 1 & -1 & -1 & -1 & -1 & 1 & -1 & 1 \\
1 & 1 & 1 & 1 & 1 & -1 & -1 & 1 & -1 & -1 & 1 & 1 & -1 & -1 & -1 & -1 & 1 & -1 & 1 & -1 \\
1 & 1 & 1 & 1 & -1 & -1 & 1 & -1 & -1 & 1 & 1 & -1 & -1 & -1 & -1 & 1 & -1 & 1 & -1 & 1 \\
1 & 1 & 1 & -1 & -1 & 1 & -1 & -1 & 1 & 1 & -1 & -1 & -1 & -1 & 1 & -1 & 1 & -1 & 1 & 1 \\
1 & 1 & -1 & -1 & 1 & -1 & -1 & 1 & 1 & -1 & -1 & -1 & -1 & 1 & -1 & 1 & -1 & 1 & 1 & 1 \\
1 & -1 & -1 & 1 & -1 & -1 & 1 & 1 & -1 & -1 & -1 & -1 & 1 & -1 & 1 & -1 & 1 & 1 & 1 & 1 \\
1 & -1 & 1 & -1 & -1 & 1 & 1 & -1 & -1 & -1 & -1 & 1 & -1 & 1 & -1 & 1 & 1 & 1 & 1 & -1 \\
1 & 1 & -1 & -1 & 1 & 1 & -1 & -1 & -1 & -1 & 1 & -1 & 1 & -1 & 1 & 1 & 1 & 1 & -1 & -1
\end{bmatrix}$$

After the 1st column of $H_{20}$ is removed, a matrix $H_{20*19}$ is obtained. It is assumed that the 1st column of $H_{20*19}$ is selected, and when the 1st column of $H_{20*19}$ is removed, all rows are divided into the following two groups based on positive/negative properties of the 1st column of elements in $H_{20*19}$:

$$G_{+}^{18}=\begin{bmatrix} 1 & 1 & 1 & 1 & 1 & 1 & 1 & 1 & 1 & 1 & 1 & 1 & 1 & 1 & 1 & 1 & 1 & 1 \\ 1 & -1 & -1 & -1 & -1 & 1 & -1 & 1 & -1 & 1 & 1 & 1 & 1 & -1 & -1 & 1 & -1 & -1 \\ -1 & -1 & -1 & -1 & 1 & -1 & 1 & -1 & 1 & 1 & 1 & 1 & -1 & -1 & 1 & -1 & -1 & 1 \\ -1 & 1 & -1 & 1 & 1 & 1 & 1 & -1 & -1 & 1 & -1 & -1 & 1 & 1 & -1 & -1 & -1 & -1 \\ -1 & 1 & 1 & 1 & 1 & -1 & -1 & 1 & -1 & -1 & 1 & 1 & -1 & -1 & -1 & -1 & 1 & -1 \\ 1 & 1 & 1 & -1 & -1 & 1 & -1 & -1 & 1 & 1 & -1 & -1 & -1 & -1 & 1 & -1 & 1 & -1 \\ 1 & 1 & -1 & -1 & 1 & -1 & -1 & 1 & 1 & -1 & -1 & -1 & -1 & 1 & -1 & 1 & -1 & 1 \\ 1 & -1 & -1 & 1 & -1 & -1 & 1 & 1 & -1 & -1 & -1 & -1 & 1 & -1 & 1 & -1 & 1 & 1 \\ -1 & -1 & 1 & -1 & -1 & 1 & 1 & -1 & -1 & -1 & -1 & 1 & -1 & 1 & -1 & 1 & 1 & 1 \\ -1 & -1 & 1 & 1 & -1 & -1 & -1 & -1 & 1 & -1 & 1 & -1 & 1 & 1 & 1 & 1 & -1 & -1 \end{bmatrix}$$

$$G_{-}^{18}=\begin{bmatrix} -1 & 1 & 1 & -1 & -1 & -1 & -1 & 1 & -1 & 1 & -1 & 1 & 1 & 1 & 1 & -1 & -1 & 1 \\ 1 & 1 & -1 & -1 & -1 & -1 & 1 & -1 & 1 & -1 & 1 & 1 & 1 & 1 & -1 & -1 & 1 & -1 \\ -1 & -1 & -1 & 1 & -1 & 1 & -1 & 1 & 1 & 1 & 1 & -1 & -1 & 1 & -1 & -1 & 1 & 1 \\ -1 & -1 & 1 & -1 & 1 & -1 & 1 & 1 & 1 & 1 & -1 & -1 & 1 & -1 & -1 & 1 & 1 & -1 \\ -1 & 1 & -1 & 1 & -1 & 1 & 1 & 1 & 1 & -1 & -1 & 1 & -1 & -1 & 1 & 1 & -1 & -1 \\ 1 & -1 & 1 & -1 & 1 & 1 & 1 & 1 & -1 & -1 & 1 & -1 & -1 & 1 & 1 & -1 & -1 & -1 \\ 1 & -1 & 1 & 1 & 1 & 1 & -1 & -1 & 1 & -1 & -1 & 1 & 1 & -1 & -1 & -1 & -1 & 1 \\ 1 & 1 & 1 & 1 & -1 & -1 & 1 & -1 & -1 & 1 & 1 & -1 & -1 & -1 & -1 & 1 & -1 & 1 \\ -1 & 1 & -1 & -1 & 1 & 1 & -1 & -1 & -1 & -1 & 1 & -1 & 1 & -1 & 1 & 1 & 1 & 1 \\ 1 & -1 & -1 & 1 & 1 & -1 & -1 & -1 & -1 & 1 & -1 & 1 & -1 & 1 & 1 & 1 & 1 & -1 \end{bmatrix}$$

In this case, a Hamming distance between any two rows of elements in $G_{+}^{18}$ is 10, a Hamming distance between any two rows of elements in $G_{-}^{18}$ is also 10, and a Hamming distance between any row of elements in $G_{+}^{18}$ and any row of elements in $G_{-}^{18}$ is 9.

Then a matrix $P_{10\times2}$ is constructed, where $P_{10\times2}$ is shown below:

$$P_{10\times2}=\begin{bmatrix} -1 & -1 \\ 1 & -1 \\ 1 & 1 \\ 1 & 1 \\ 1 & 1 \\ 1 & 1 \\ 1 & 1 \\ 1 & 1 \\ 1 & 1 \\ 1 & 1 \end{bmatrix}$$

Therefore, a codebook matrix with a length of 20 may be constructed: $C_{10\times20}=[P_{10\times2},\ G_{-}^{18}]$. $C_{10\times20}$ may be understood as concatenation of two matrices. Before the concatenation, rows of the matrix $G_{-}^{18}$ on the right may be rearranged, and a codebook matrix obtained through concatenation after the rearrangement does not affect Hamming distance distribution of the original codebook matrix $C_{10\times20}$. In the codebook matrix $C_{10\times20}$, a Hamming distance between any row of elements among the first two rows of elements and any other row of elements is 11, and a Hamming distance between any other two rows of elements is 10.

An element 1 in the codebook matrix $C_{10\times20}$ is mapped to 0, and an element -1 is mapped to 1, to obtain codewords shown in Table 13.

Table 13 Example 4 of a codebook with a code length (L) of 20

| Modulation and coding rate combination (a combination indicating a data rate of the PHY payload field and whether the PHY payload field is encoded by using the LDPC) | Codeword (codeword) |
|---|---|
| Combination 1 | 1 1 1 0 0 1 1 1 1 0 1 0 1 0 0 0 0 1 1 0 |
| Combination 2 | 0 1 0 0 1 1 1 1 0 1 0 1 0 0 0 0 1 1 0 1 |
| Combination 3 | 0 0 1 1 1 0 1 0 1 0 0 0 0 1 1 0 1 1 0 0 |

(continued)

| Modulation and coding rate combination (a combination indicating a data rate of the PHY payload field and whether the PHY payload field is encoded by using the LDPC) | Codeword (codeword) |
|---|---|
| Combination 4 | 0 0 1 1 0 1 0 1 0 0 0 0 1 1 0 1 1 0 0 1 |
| Combination 5 | 0 0 1 0 1 0 1 0 0 0 0 1 1 0 1 1 0 0 1 1 |
| Combination 6 | 0 0 0 1 0 1 0 0 0 0 1 1 0 1 1 0 0 1 1 1 |
| Combination 7 | 0 0 0 1 0 0 0 0 1 1 0 1 1 0 0 1 1 1 1 0 |
| Combination 8 | 0 0 0 0 0 0 1 1 0 1 1 0 0 1 1 1 1 0 1 0 |
| Combination 9 | 0 0 1 0 1 1 0 0 1 1 1 1 0 1 0 1 0 0 0 0 |
| Combination 10 | 0 0 0 1 1 0 0 1 1 1 1 0 1 0 1 0 1 0 0 0 0 1 |

It can be understood that Table 7 to Table 13 are merely examples, and a mapping relationship between a modulation and coding rate combination and a codeword in Table 7 to Table 13 is not fixed, as long as it is ensured that different combinations of data rates and LDPC indications are mapped to different codewords.

For example, the first codeword set may include one or more of the following codewords: one or more codewords in Table 7 to Table 13.

It can be understood that negation of one or more columns of elements (for example, the element negation herein means that an element 1 is changed to an element 0, and an element 0 is changed to an element 1), row rearrangement, column rearrangement, or another operation in all or some of the codeword sequences in Table 7 to Table 13 does not affect Hamming distance distribution, and all the cases fall within the protection scope of this application.

This application further provides still another implementation of the first codeword set.

For example, currently, the PHY payload field supports a total of five data rates. Even if whether the PHY payload field is encoded by using the LDPC is indicated, only a maximum of 10 values are needed for indication. In this case, at least 10 (subsequent standard extension is considered) different codeword sequences may be used to indicate modulation and coding rate information of a UWB system. A Hamming distance between a codeword sequence corresponding to a low data rate and another codeword sequence may be large, and a Hamming distance between a codeword sequence corresponding to a high data rate and another codeword sequence may be small, so that performance of a codeword sequence matches a data modulation and coding rate.

It can be understood that, in an extended binary Golay code (extended binary Golay code) with a code rate of 0.5 and a length of 24, a Hamming distance between any two codewords is at least 8. Therefore, in this application, a sequence set (namely, a codebook) may be designed based on the extended binary Golay code with a code rate of 0.5 and a length of 24, to ensure a Hamming distance between codewords in the sequence set (namely, the codebook).

For example, a generator matrix G of the extended binary Golay code with a code rate of 0.5 and a length of 24 is as follows:

$$G = \begin{bmatrix} 1 & 0 & 0 & 0 & 0 & 0 & 0 & 0 & 0 & 0 & 0 & 0 & 1 & 0 & 0 & 1 & 1 & 1 & 1 & 1 & 0 & 0 & 0 & 1 \\ 0 & 1 & 0 & 0 & 0 & 0 & 0 & 0 & 0 & 0 & 0 & 0 & 0 & 1 & 0 & 0 & 1 & 1 & 1 & 1 & 1 & 0 & 1 & 0 \\ 0 & 0 & 1 & 0 & 0 & 0 & 0 & 0 & 0 & 0 & 0 & 0 & 0 & 0 & 1 & 0 & 0 & 1 & 1 & 1 & 1 & 1 & 0 & 1 \\ 0 & 0 & 0 & 1 & 0 & 0 & 0 & 0 & 0 & 0 & 0 & 1 & 0 & 0 & 1 & 0 & 0 & 1 & 1 & 1 & 1 & 1 & 0 \\ 0 & 0 & 0 & 0 & 1 & 0 & 0 & 0 & 0 & 0 & 0 & 1 & 1 & 0 & 0 & 1 & 0 & 0 & 1 & 1 & 1 & 0 & 1 \\ 0 & 0 & 0 & 0 & 0 & 1 & 0 & 0 & 0 & 0 & 0 & 1 & 1 & 1 & 0 & 0 & 1 & 0 & 0 & 1 & 1 & 1 & 0 \\ 0 & 0 & 0 & 0 & 0 & 0 & 1 & 0 & 0 & 0 & 0 & 1 & 1 & 1 & 1 & 0 & 0 & 1 & 0 & 0 & 1 & 0 & 1 \\ 0 & 0 & 0 & 0 & 0 & 0 & 0 & 1 & 0 & 0 & 0 & 0 & 1 & 1 & 1 & 1 & 0 & 0 & 1 & 0 & 0 & 1 & 0 \\ 0 & 0 & 0 & 0 & 0 & 0 & 0 & 0 & 1 & 0 & 0 & 0 & 0 & 1 & 1 & 1 & 1 & 0 & 0 & 1 & 0 & 0 & 1 \\ 0 & 0 & 0 & 0 & 0 & 0 & 0 & 0 & 0 & 1 & 0 & 0 & 0 & 0 & 1 & 1 & 1 & 1 & 0 & 0 & 1 & 1 & 0 \\ 0 & 0 & 0 & 0 & 0 & 0 & 0 & 0 & 0 & 0 & 1 & 0 & 0 & 1 & 0 & 1 & 0 & 1 & 0 & 1 & 0 & 1 & 1 \\ 0 & 0 & 0 & 0 & 0 & 0 & 0 & 0 & 0 & 0 & 0 & 1 & 1 & 0 & 1 & 0 & 1 & 0 & 1 & 0 & 1 & 0 & 1 & 1 \end{bmatrix}$$

An extended binary Golay code $\vec{c}$ may be obtained by multiplying any binary information bit sequence $\vec{s}$ with a length of 12 (namely, a binary vector with one row and 12 columns) by the generator matrix G (herein, binary multiplication is performed, and a multiplication result is in a binary form including 0 and 1): $\vec{c} = \vec{s}G$.

It can be understood that different extended binary Golay codes $\vec{c}$ may be generated by using different binary information bit sequences $\vec{s}$. One extended binary Golay code $\vec{c}$ serves as one codeword sequence. Because an information bit length is 12, $2^{12}$=4096 different codeword sequences may be constructed. According to a coding theory, the extended binary Golay code with a code rate of 0.5 and a length of 24 may be shortened (shorting). To be specific, some information bits and check bits corresponding to the information bits may be removed. This corresponds to reducing a quantity of dimensions of the generator matrix G, and this operation (namely, the shortening operation) does not reduce a Hamming distance between codewords.

Therefore, the extended binary Golay code with a code rate of 0.5 and a length of 24 may be shortened by k bits. In this case, a generator matrix of a shortened extended binary Golay code may be expressed as follows: $G_{short}=G((k+1):12, (k+1):24)$. The generator matrix $G_{short}$ includes the $(k+1)^{th}$ row to the $12^{th}$ row and the $(k+1)^{th}$ column to the $24^{th}$ column in the generator matrix G. It can be understood that $2^{(12-k)}$ codeword sequences may be constructed based on the generator matrix $G_{short}$.

For example, a possible codebook generation manner is as follows:

When the code length L=18, the extended binary Golay code with a code rate of 0.5 and a length of 24 may be shortened by five bits, to obtain 128 codeword sequences with a length of 19. Any bit in the 128 codeword sequences is deleted, for example, the $1^{st}$ bit in the 128 codeword sequences is deleted, to obtain 128 codeword sequences with a length of 18. Then a codeword sequence including twelve 1s is selected from the 128 codeword sequences with a length of 18. There are a total of 18 codeword sequences including twelve 1s, and there is also an all-0 codeword sequence, so that 19 codewords shown in the following Table 14 can be obtained.

Table 14 Example 3 of a codebook with a code length (L) of 18

| Modulation and coding rate combination (a combination indicating a data rate of the PHY payload field and whether the PHY payload field is encoded by using the LDPC) | Codeword (codeword) |
|---|---|
| Combination 1 | 0 0 0 0 0 0 0 0 0 0 0 0 0 0 0 0 0 0 |
| Combination 2 | 1 1 1 0 0 0 0 1 1 1 0 1 1 1 1 1 1 0 |
| Combination 3 | 0 1 1 1 0 0 1 0 1 1 1 0 1 1 1 1 0 1 |
| Combination 4 | 1 0 1 0 1 0 1 1 0 1 1 0 1 1 1 0 1 1 |
| Combination 5 | 1 0 1 1 1 0 1 1 1 0 0 1 0 1 1 1 0 1 |
| Combination 6 | 0 1 1 1 1 0 1 1 1 0 1 1 1 0 1 0 1 0 |
| Combination 7 | 1 1 1 1 1 0 0 0 0 1 1 1 0 0 1 1 1 1 |
| Combination 8 | 1 1 1 0 0 1 1 1 0 1 1 1 0 1 0 1 0 1 |
| Combination 9 | 0 1 0 1 0 1 0 1 1 0 1 1 0 1 1 1 1 1 |
| Combination 10 | 1 1 0 1 0 1 1 0 0 1 1 1 1 1 1 0 1 0 |
| Combination 11 | 1 1 1 1 0 1 1 1 1 0 0 0 1 1 0 0 1 1 |
| Combination 12 | 0 0 0 0 1 1 1 1 1 1 1 1 1 1 1 1 0 0 |
| Combination 13 | 1 1 0 0 1 1 1 1 1 1 0 1 0 0 1 0 1 1 |
| Combination 14 | 0 1 1 0 1 1 0 1 1 1 1 0 1 0 0 1 1 1 |
| Combination 15 | 1 0 0 1 1 1 0 0 1 1 0 0 1 1 1 1 1 1 |
| Combination 16 | 1 1 0 1 1 1 1 1 0 0 1 0 1 0 1 1 0 1 |
| Combination 17 | 0 0 1 1 1 1 1 0 1 1 1 1 0 1 0 0 1 1 |
| Combination 18 | 1 0 1 1 1 1 0 1 0 0 1 1 1 1 0 1 1 0 |
| Combination 19 | 1 1 1 1 1 1 1 0 1 1 0 1 1 0 0 1 0 0 |

Among the 19 codewords shown in Table 14, a Hamming distance between the $1^{st}$ codeword (to be specific, a codeword in which all elements are 0) and another codeword is 12, and a Hamming distance between any two codewords other than the $1^{st}$ codeword is at least 8.

In some scenarios, the $1^{st}$ codeword (to be specific, the codeword in which all the elements are 0) in Table 14 may indicate a low rate, and other codewords indicate a high rate. In some scenarios, a transmit end may select a corresponding codeword sequence based on a load rate, map the selected codeword sequence to 1 and -1, and then send a codeword sequence obtained through mapping. For example, an element 0 is mapped to an element 1, and an element 1 is mapped to an element -1. Certainly, an element 0 may alternatively be mapped to an element -1, and an element 1 is mapped to an element 0. This is not limited in this embodiment of this application.

It can be understood that Table 14 is merely an example, and a mapping relationship between a modulation and coding rate combination and a codeword in Table 14 is not fixed. It only needs to be ensured that different combinations of data rates and LDPC indications are mapped to different codewords.

For example, the first codeword set may include one or more of the following codewords: one or more codewords in Table 14. During actual application, only some of the codewords in Table 14 may be used, in other words, some of the codewords in Table 14 may be reserved.

It can be understood that negation of one or more columns of elements (for example, the element negation herein means that an element 1 is changed to an element 0, and an element 0 is changed to an element 1), row rearrangement, column rearrangement, or another operation in all the codewords in Table 14 does not affect Hamming distance distribution, and all the cases fall within the protection scope of this application.

This application further provides still another implementation of the first codeword set.

For example, currently, the PHY payload field supports a total of five data rates. Even if whether the PHY payload field is encoded by using the LDPC is indicated, only a maximum of 10 values are needed for indication. In this case, at least 10 (subsequent standard extension is considered) different codeword sequences may be used to indicate modulation and coding rate information of a UWB system. A Hamming distance between a codeword sequence corresponding to a low data rate and another codeword sequence may be large, and a Hamming distance between a codeword sequence corresponding to a high data rate and another codeword sequence may be small, so that performance of a codeword sequence matches a data modulation and coding rate.

For example, a possible codebook generation manner is as follows:

When the code length L=18, the code length may be split into two parts: L=12+6. A codebook with a code length of 12 and a codebook with a code length of 6 are separately designed, and the designed two codebooks are concatenated to form a codebook with a code length of 18.

12 sequences are selected from sequences that have a length of 12 and that include five 1s and seven 0s, where a Hamming distance between any two of the 12 sequences is at least 6. For example, a codebook matrix $P_1$ with a code length of 12 is as follows:

$$P_1=\begin{bmatrix} 1 & 1 & 0 & 0 & 0 & 1 & 1 & 0 & 0 & 0 & 0 & 1 \\ 0 & 0 & 1 & 1 & 0 & 0 & 1 & 0 & 1 & 0 & 1 & 0 \\ 1 & 0 & 0 & 0 & 1 & 0 & 1 & 1 & 1 & 0 & 0 & 0 \\ 0 & 1 & 0 & 1 & 0 & 0 & 0 & 0 & 0 & 1 & 1 & 1 \\ 0 & 0 & 1 & 1 & 1 & 0 & 0 & 1 & 0 & 0 & 0 & 1 \\ 1 & 0 & 0 & 0 & 0 & 1 & 0 & 1 & 0 & 1 & 1 & 0 \\ 1 & 0 & 1 & 0 & 0 & 0 & 0 & 0 & 1 & 1 & 0 & 1 \\ 0 & 0 & 0 & 1 & 1 & 1 & 1 & 0 & 0 & 1 & 0 & 0 \\ 0 & 1 & 0 & 1 & 0 & 1 & 0 & 1 & 1 & 0 & 0 & 0 \\ 1 & 1 & 1 & 0 & 1 & 0 & 0 & 0 & 0 & 0 & 1 & 0 \\ 0 & 0 & 0 & 0 & 1 & 1 & 0 & 0 & 1 & 0 & 1 & 1 \\ 0 & 1 & 1 & 0 & 0 & 0 & 1 & 1 & 0 & 1 & 0 & 0 \end{bmatrix}$$

A Hamming distance between any two rows of elements in the codebook matrix $P_1$ with a code length of 12 is at least 6.

For example, a codebook matrix $P_2$ with a code length of 6 is as follows:

$$P_2=\begin{bmatrix} 1 & 0 & 0 & 0 & 0 & 0 \\ 1 & 0 & 0 & 0 & 0 & 0 \\ 0 & 1 & 0 & 0 & 0 & 0 \\ 0 & 1 & 0 & 0 & 0 & 0 \\ 0 & 0 & 1 & 0 & 0 & 0 \\ 0 & 0 & 1 & 0 & 0 & 0 \\ 0 & 0 & 0 & 1 & 0 & 0 \\ 0 & 0 & 0 & 1 & 0 & 0 \\ 0 & 0 & 0 & 0 & 1 & 0 \\ 0 & 0 & 0 & 0 & 1 & 0 \\ 0 & 0 & 0 & 0 & 0 & 1 \\ 0 & 0 & 0 & 0 & 0 & 1 \end{bmatrix}$$

Then the codebook matrix $P_1$ with a code length of 12 is concatenated with the codebook matrix $P_2$ with a code length of 6 to obtain a sequence set $[P_1, P_2]$ with a code length of 18. A Hamming distance between any two sequences in

the sequence set [$P_1$, $P_2$] is 8 or 10. In addition, a Hamming distance between an all-1 sequence (to be specific, all 18 elements are 1) and any sequence in the sequence set [$P_1$, $P_2$] is 12, and a Hamming distance between a sequence [$0_{12}$, $1_6$] (to be specific, a sequence including 12 elements 0 and six elements 1) and any sequence in the sequence set [$P_1$, $P_2$] is 10. Therefore, the two sequences (that is, the all-1 sequence and the sequence [$0_{12}$, $1_6$]) and the sequence set [$P_1$, $P_2$] with a code length of 18 may be used as a codebook, to obtain 14 codewords shown in the following Table 15.

Table 15 Example 4 of a codebook with a code length (L) of 18

| Modulation and coding rate combination (a combination indicating a data rate of the PHY payload field and whether the PHY payload field is encoded by using the LDPC) | Codeword (codeword) |
|---|---|
| Combination 1 | 1 1 1 1 1 1 1 1 1 1 1 1 1 1 1 1 1 1 |
| Combination 2 | 0 0 0 0 0 0 0 0 0 0 0 0 1 1 1 1 1 1 |
| Combination 3 | 1 1 0 0 0 1 1 0 0 0 0 1 1 0 0 0 0 0 |
| Combination 4 | 0 0 1 1 0 0 1 0 1 0 1 0 1 0 0 0 0 0 |
| Combination 5 | 1 0 0 0 1 0 1 1 1 0 0 0 0 1 0 0 0 0 |
| Combination 6 | 0 1 0 1 0 0 0 0 0 1 1 1 0 1 0 0 0 0 |
| Combination 7 | 0 0 1 1 1 0 0 1 0 0 0 1 0 0 1 0 0 0 |
| Combination 8 | 1 0 0 0 0 1 0 1 0 1 1 0 0 0 1 0 0 0 |
| Combination 9 | 1 0 1 0 0 0 0 0 1 1 0 1 0 0 0 1 0 0 |
| Combination 10 | 0 0 0 1 1 1 1 0 0 1 0 0 0 0 0 1 0 0 |
| Combination 11 | 0 1 0 1 0 1 0 1 1 0 0 0 0 0 0 0 1 0 |
| Combination 12 | 1 1 1 0 1 0 0 0 0 0 1 0 0 0 0 0 1 0 |
| Combination 13 | 0 0 0 0 1 1 0 0 1 0 1 1 0 0 0 0 0 1 |
| Combination 14 | 0 1 1 0 0 0 1 1 0 1 0 0 0 0 0 0 0 1 |

Among the 14 codewords shown in Table 15, a Hamming distance between the 1st codeword (to be specific, a codeword in which all elements are 1) and another codeword is 12, a Hamming distance between the 2nd codeword (to be specific, a codeword in which all the first 12 elements are 0 and all the last six elements are 1) and another codeword is 10, and a Hamming distance between any two codewords other than the 1st codeword and the 2nd codeword is at least 8.

In some scenarios, the 1st codeword (to be specific, the codeword in which all the elements are 1) and the 2nd codeword (to be specific, the codeword in which all the first 12 elements are 0 and all the last six elements are 1) in Table 15 may indicate a low rate, and other codewords indicate a high rate. In some scenarios, a transmit end may select a corresponding codeword sequence based on a load rate, map the selected codeword sequence to 1 and -1, and then send a codeword sequence obtained through mapping. For example, an element 0 is mapped to an element 1, and an element 1 is mapped to an element -1. Certainly, an element 0 may alternatively be mapped to an element -1, and an element 1 is mapped to an element 0. This is not limited in this embodiment of this application.

It can be understood that Table 15 is merely an example, and a mapping relationship between a modulation and coding rate combination and a codeword in Table 15 is not fixed. It only needs to be ensured that different combinations of data rates and LDPC indications are mapped to different codewords.

For example, the first codeword set may include one or more of the following codewords: one or more codewords in Table 15. During actual application, only some of the codewords in Table 15 may be used, in other words, some of the codewords in Table 15 may be reserved.

It can be understood that negation of one or more columns of elements (for example, the element negation herein means that an element 1 is changed to an element 0, and an element 0 is changed to an element 1), row rearrangement, column rearrangement, or another operation in all the codewords in Table 15 does not affect Hamming distance distribution, and all the cases fall within the protection scope of this application.

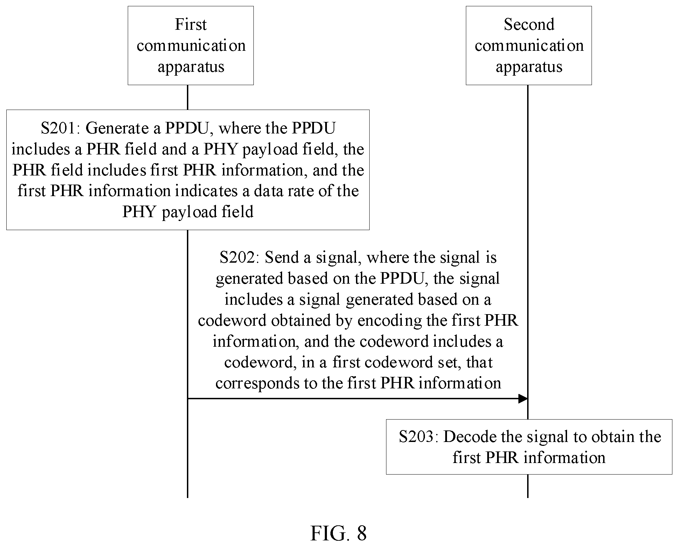

FIG. 8 is another schematic flowchart of an ultra-wideband-based signal transmission method according to an embodiment of this application. As shown in FIG. 8, the ultra-wideband-based signal transmission method includes but is not limited to the following steps.

S201: A first communication apparatus generates a PPDU, where the PPDU includes a PHR field and a PHY payload field, the PHR field includes first PHR information, and the first PHR information indicates a data rate of the PHY payload field.

S202: The first communication apparatus sends a signal, where the signal is generated based on the PPDU, the signal includes a signal generated based on a codeword obtained by encoding the first PHR information, and the codeword includes a codeword, in a first codeword set, that corresponds to the first PHR information.

Correspondingly, a second communication apparatus receives the signal.

S203: The second communication apparatus decodes the signal to obtain the first PHR information.

Optionally, the PPDU may be a PPDU used in a UWB WPAN standard, for example, a PPDU in the 802.15.4ab protocol.

Optionally, the PPDU may include but is not limited to the PHR field and the PHY payload field. The PHR field may include the first PHR information and second PHR information. The first PHR information may indicate the data rate of the PHY payload field. The second PHR information may indicate whether the PHY payload field is encoded by using a first coding scheme, and a length of the PHY payload field, and optionally, further indicates one or more of the following: whether the PPDU is used for sensing measurement, or a CRC code.

For example, the first PHR information in this embodiment of this application may be understood as three bits, in a PHR1, that indicate the data rate of the PHY payload field; and the second PHR information may be understood as a PHR2 and one bit, in the PHR1, that indicates whether the PHY payload field is encoded by using the first coding scheme. To be specific, the first PHR information has a total of three bits that indicate the data rate of the PHY payload field; and the second PHR information has a total of 24 bits, where one bit indicates whether the PHY payload field is encoded by using the first coding scheme, 12 bits indicate the length of the PHY payload field, one bit indicates whether the PPDU is used for sensing measurement, two bits are reserved, and eight bits indicate the CRC code.

For example, the first coding scheme may be any one of the following: LDPC, a convolutional code, a polar (Polar) code, a turbo (Turbo) code, and the like. This is not limited in this embodiment of this application. For ease of description, an example in which the first coding scheme is the LDPC is used for description. Certainly, with development of a standard, the LDPC below may alternatively be replaced with any coding scheme (for example, the convolutional code, the polar code, or the turbo code) specified in a future standard.

Optionally, the first communication apparatus may encode the generated PPDU, and then may modulate a codeword obtained through encoding into a UWB impulse (namely, a signal) and send the UWB impulse. Correspondingly, after receiving the signal (namely, the UWB impulse), the second communication apparatus demodulates the signal to obtain the codeword obtained by encoding the PPDU, and then decodes, based on the first codeword set, the codeword obtained by encoding the first PHR information, to obtain the first PHR information. The first codeword set may be predefined, pre-negotiated-upon, preconfigured, or the like. The encoding herein may include the convolutional code, the LDPC, a specific codebook, a repetition code, or the like. It can be understood that different fields in the PPDU may be encoded by using different coding schemes. For example, the PHY payload field in the PPDU is encoded by using the LDPC or the convolutional code, and an SFD field is mapped and encoded by using the codebook. For another example, the first PHR information in the PPDU is mapped and encoded by using the codebook, and the second PHR information is encoded by using the convolutional code.

Therefore, the signal may be generated based on the PPDU. In this case, the signal includes at least the signal generated based on the codeword obtained by encoding the first PHR information, and the codeword may include a codeword, in the first codeword set, to which the first PHR information is mapped. In some scenarios, a Hamming distance between any two codewords in the first codeword set is greater than or equal to a theoretical minimum Hamming distance bound (bound) of the first codeword set. For example, if the first codeword set has a total of M codewords and a length of each codeword is L, a Hamming distance d between any two codewords in the first codeword set may meet the foregoing formula (1-1) or the foregoing formula (1-2). For another example, M is less than or equal to $2^K$.

Optionally, the length L of the codeword in the first codeword set may be an even quantity of bits, and may be further greater than or equal to $2^K$ bits, where K is the bit length of the first PHR information. For example, K is equal to 3. For another example, the length L of the codeword is any one of the following: 20 bits, 22 bits, 24 bits, 26 bits, 28 bits, 30 bits, 32 bits, 34 bits, 36 bits, 38 bits, or 40 bits.

Optionally, the codeword in the first codeword set may be generated based on a $2^K$-order (8*8 herein when K is 3) Hadamard (Hadamard) matrix. For a manner of generating the first codeword set and specific content of the codeword, refer to the following descriptions. Details are not described herein.

In this embodiment of this application, a new codeword set (namely, a codebook) is designed, and the first PHR information is mapped and encoded by using a codeword in the codeword set. A minimum Hamming distance in the codeword set may reach a theoretical bound, so that coding performance of the PHR field (mainly the first PHR information) can be improved.

The following describes in detail a design idea of the first codeword set in this embodiment of this application, and describes, by using examples, the first codeword set provided in this embodiment of this application and a manner of generating the first codeword set.

In this embodiment of this application, one bit indicating whether the PHY payload field is encoded by using the LDPC is placed in the PHR2. In this case, the first PHR information in this embodiment of this application has a total of three bits. In addition, in this embodiment of this application, because the PHY payload field currently supports a total of five data rates, at least five values are needed in the first PHR information (three bits) to indicate the data rate of the PHY payload field. Correspondingly, at least five codewords are needed for mapping and encoding the first PHR information.

It can be understood that coding performance is related to a minimum Hamming distance between codewords. A larger minimum Hamming distance between codewords indicates a greater difference between different codewords, better coding performance, and a higher probability of correct decoding.

When the first PHR information is three bits, if mappings between all values of the three bits and codewords are considered, there are a total of eight codewords. When the code length is L, a bound of a theoretical minimum Hamming distance between the eight codewords is as follows:

$$\left\lfloor \frac{8*L}{2(8-1)} \right\rfloor = \left\lfloor \frac{4*L}{7} \right\rfloor.$$

If only five codewords are considered, when the code length is L, a bound of a theoretical minimum Hamming distance between the five codewords is as follows:

$$\left\lfloor \frac{3*L}{5} \right\rfloor.$$

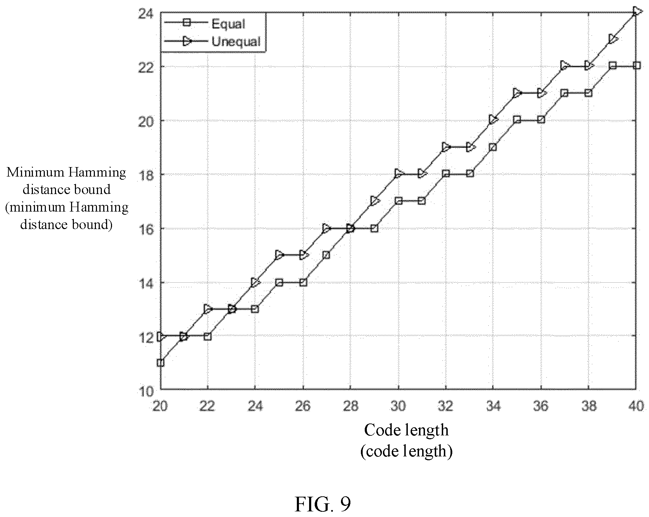

FIG. 9 is another diagram of theoretical minimum Hamming distance bounds at different code lengths according to an embodiment of this application. As shown in FIG. 9, a horizontal coordinate represents a code length (code length), and a vertical coordinate represents a theoretical minimum Hamming distance bound (minimum Hamming distance bound). It can be understood that, for precision of illustration, FIG. 9 shows only theoretical minimum Hamming distance bounds for some of code lengths. To be specific, a code length range represented by horizontal coordinates is 20 bits to 40 bits. In FIG. 9, Equal (equal) represents equal coding, and Unequal (unequal) represents unequal coding. The equal coding is a case in which 8 codewords are considered. The unequal coding is a case in which only 5 codewords are considered.

It can be learned from FIG. 9 that, when the first PHR information is three bits, at different code lengths, a case in which only five codewords (unequal coding) are considered has a specific advantage in terms of a theoretical minimum Hamming distance compared with a case in which eight codewords (equal coding) are considered.

Examples are used below to describe how to design the first codeword set, to make a Hamming distance between any two codewords in the first codeword set be greater than or equal to a theoretical minimum Hamming distance bound of the first codeword set.

For example, a possible codebook generation manner is as follows:

It is assumed that K represents the bit length of the first PHR information, where in this embodiment of this application, K is equal to 3; L represents the length of the codeword, where $L \geq 2^K$; and a quantity of codewords included in the first codeword set is $2^K$.

When L=7n+m (both n and m are positive integers), the first codeword set may be generated based on an 8*8 normalized Hadamard matrix $H_8$.

$$H_8 = \begin{bmatrix} 1 & 1 & 1 & 1 & 1 & 1 & 1 & 1 \\ 1 & -1 & 1 & -1 & 1 & -1 & 1 & -1 \\ 1 & 1 & -1 & -1 & 1 & 1 & -1 & -1 \\ 1 & -1 & -1 & 1 & 1 & -1 & -1 & 1 \\ 1 & 1 & 1 & 1 & -1 & -1 & -1 & -1 \\ 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{bmatrix}$$

Because the 1st column of elements in $H_8$ are all 1, the elements have no contribution to a Hamming distance between different rows. The 1st column of elements in $H_8$ may be removed to obtain the following matrix $H_{(8\times7)}$.

$$H_{(8\times7)}=\begin{bmatrix} 1 & 1 & 1 & 1 & 1 & 1 & 1 \\ -1 & 1 & -1 & 1 & -1 & 1 & -1 \\ 1 & -1 & -1 & 1 & 1 & -1 & -1 \\ -1 & -1 & 1 & 1 & -1 & -1 & 1 \\ 1 & 1 & 1 & -1 & -1 & -1 & -1 \\ -1 & 1 & -1 & -1 & 1 & -1 & 1 \\ 1 & -1 & -1 & -1 & -1 & 1 & 1 \\ -1 & -1 & 1 & -1 & 1 & 1 & -1 \end{bmatrix}$$

Then it can be learned, based on characteristics of the Hadamard matrix, that a Hamming distance between any two rows of elements in $H_{(8\times7)}$ is as follows: (8/2)=4.

If m=0, L=7n. The matrix $H_{(8\times7)}$ may be repeated n times to obtain n matrices $H_{(8\times7)}$. Then rows of the n matrices $H_{(8\times7)}$ may be separately rearranged (or an arrangement process may be skipped), and then the n matrices $H_{(8\times7)}$ are arranged side by side based on rows to obtain a matrix $C_{8\times7n}$.

$$C_{8\times7n}=[H_{(8\times7)},\ H_{8\times7}^{P_1},\ ...,\ H_{8\times7}^{P_{n-1}}]$$

$H_{8\times7}^{p_i}$  represents a matrix obtained by rearranging rows of $H_{(8\times7)}$ A same expression in the following descriptions indicates a same meaning, and details are not described below again. A Hamming distance between any two rows of elements in $H_{(8\times7)}$ is 4, and n times of repetitions and row rearrangement of $H_{(8\times7)}$ do not affect a Hamming distance in each $H_{(8\times7)}$. Therefore, a Hamming distance between any two rows of elements in $C_{8\times7n}$ is 4n. Then elements 1 and **-1** in $C_{8\times7n}$ are mapped to 0 and 1 respectively, to obtain a codebook with a code length of 7n. It can be understood that a mapping relationship between elements 1 and -1 in a matrix, and 1 and 0 is not limited in this embodiment of this application.

For example, when L=28, a codebook with a code length of 28 is shown in the following Table 16. A Hamming distance between any two codewords in the following Table 16 is 16. Optionally, the first codeword set may include all or some of codewords in the following Table 16.

Table 16 Example of a codebook with a code length (L) of 28

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 |
| 010 | 0 1 1 0 0 1 1 0 1 1 0 0 1 1 0 1 1 0 0 1 1 0 1 1 0 0 1 1 |
| 011 | 1 1 0 0 1 1 0 1 1 0 0 1 1 0 1 1 0 0 1 1 0 1 1 0 0 1 1 0 |
| 100 | 0 0 0 1 1 1 1 0 0 0 1 1 1 1 0 0 0 1 1 1 1 0 0 0 1 1 1 1 |
| 101 | 1 0 1 1 0 1 0 1 0 1 1 0 1 0 1 0 1 1 0 1 0 1 0 1 0 1 1 0 1 0 |
| 110 | 0 1 1 1 1 0 0 0 1 1 1 1 0 0 0 1 1 1 1 0 0 0 1 1 1 1 0 0 |
| 111 | 1 1 0 1 0 0 1 1 1 0 1 0 0 1 1 1 0 1 0 0 1 1 1 0 1 0 0 1 |

If m=1, 2, 5 or 6 and L=7n+m, the matrix $H_{(8\times7)}$ may be repeated n times to obtain n matrices $H_{(8\times7)}$. Then rows of the n matrices $H_{(8\times7)}$ may be separately rearranged (or an arrangement process may be skipped). Then the n matrices $H_{(8\times7)}$ are arranged side by side based on rows, any m columns are selected from $H_{(8\times7)}$ to form a matrix $H_{(8\times m)}$, and $H_{(8\times m)}$ and a matrix obtained through n times of repetitions are arranged side by side based on rows to obtain a matrix $C_{8\times(7n+m)}$.

$$C_{8\times(7n+m)}=[H_{(8\times7)},\ H_{8\times7}^{P_1},\ ...,\ H_{8\times7}^{P_{n-1}}, H_{(8\times m)}]$$

$H_{8\times7}^{p_i}$  represents a matrix obtained by rearranging rows of $H_{(8\times7)}$. When m is 1, 2, 5, and 6, minimum Hamming distances between different rows of elements in the matrix $H_{(8\times m)}$ are 0, 0, 2, and 3 respectively. When m is equal to 1 or 2, a minimum Hamming distance between different rows of elements in $C_{8\times(7n+m)}$ is 4n. When m is equal to 5, a minimum Hamming distance between different rows of elements in $C_{8\times(7n+m)}$ is 4n+2. When m is equal to 6, a minimum Hamming distance between different rows of elements in $C_{8\times(7n+m)}$ is 4n+3. Then elements 1 and -1 in $C_{8\times(7n+m)}$ are mapped to 0 and 1 respectively, to obtain a codebook with a code length L of 7n+m. It can be understood that a mapping relationship between elements 1 and -1 in a matrix, and 1 and 0 is not limited in this embodiment of this application.

For example, when L=22, a codebook with a code length of 22 is shown in the following Table 17. A minimum Hamming distance between eight codewords in the following Table 17 is 12. Optionally, the first codeword set may include all or some of codewords in the following Table 17.

Table 17 Example 2 of a codebook with a code length (L) of 22

| Value of the first PHR information (three bits) | Codeword (codeword) |
|---|---|
| 000 | 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 |
| 010 | 0 1 1 0 0 1 1 0 1 1 0 0 1 1 0 1 1 0 0 1 1 0 |
| 011 | 1 1 0 0 1 1 0 1 1 0 0 1 1 0 1 1 0 0 1 1 0 1 |
| 100 | 0 0 0 1 1 1 1 0 0 0 1 1 1 1 0 0 0 1 1 1 1 0 |
| 101 | 1 0 1 1 0 1 0 1 0 1 1 0 1 0 1 0 1 1 0 1 0 1 |
| 110 | 0 1 1 1 1 0 0 0 1 1 1 1 0 0 0 1 1 1 1 0 0 0 |
| 111 | 1 1 0 1 0 0 1 1 1 0 1 0 0 1 1 1 0 1 0 0 1 1 |

For another example, when L=26, a codebook with a code length of 26 is shown in the following Table 18. A minimum Hamming distance between eight codewords in the following Table 18 is 14. Optionally, the first codeword set may include all or some of codewords in the following Table 18.

Table 18 Example 2 of a codebook with a code length (L) of 26

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 |
| 010 | 0 1 1 0 0 1 1 0 1 1 0 0 1 1 0 1 1 0 0 1 1 0 1 1 0 0 |
| 011 | 1 1 0 0 1 1 0 1 1 0 0 1 1 0 1 1 0 0 1 1 0 1 1 0 0 1 |
| 100 | 0 0 0 1 1 1 1 0 0 0 1 1 1 1 0 0 0 1 1 1 1 0 0 0 1 1 |
| 101 | 1 0 1 1 0 1 0 1 0 1 1 0 1 0 1 0 1 1 0 1 0 1 0 1 1 0 |
| 110 | 0 1 1 1 1 0 0 0 1 1 1 1 0 0 0 1 1 1 1 0 0 0 1 1 1 1 |
| 111 | 1 1 0 1 0 0 1 1 1 0 1 0 0 1 1 1 0 1 0 0 1 1 1 0 1 0 |

For still another example, when L=30, a codebook with a code length of 30 is shown in the following Table 19. A minimum Hamming distance between eight codewords in the following Table 19 is 16. Optionally, the first codeword set may include all or some of codewords in the following Table 19.

Table 19 Example 2 of a codebook with a code length (L) of 30

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 1 0 |
| 010 | 0 1 1 0 0 1 1 0 1 1 0 0 1 1 0 1 1 0 0 1 1 0 1 1 0 0 1 1 0 1 |
| 011 | 1 1 0 0 1 1 0 1 1 0 0 1 1 0 1 1 0 0 1 1 0 1 1 0 0 1 1 0 1 1 |
| 100 | 0 0 0 1 1 1 1 0 0 0 1 1 1 1 0 0 0 1 1 1 1 0 0 0 1 1 1 1 0 0 |
| 101 | 1 0 1 1 0 1 0 1 0 1 1 0 1 0 1 0 1 1 0 1 0 1 0 1 1 0 1 0 1 0 |
| 110 | 0 1 1 1 1 0 0 0 1 1 1 1 0 0 0 1 1 1 1 0 0 0 1 1 1 1 0 0 0 1 |
| 111 | 1 1 0 1 0 0 1 1 1 0 1 0 0 1 1 1 0 1 0 0 1 1 1 0 1 0 0 1 1 1 |

For still another example, when L=34, a codebook with a code length of 34 is shown in the following Table 20. A minimum Hamming distance between eight codewords in the following Table 20 is 19. Optionally, the first codeword set may include all or some of codewords in the following Table 20.

Table 20 Example of a codebook with a code length (L) of 34

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 1 0 1 0 1 0 |
| 010 | 0 1 1 0 0 1 1 0 1 1 0 0 1 1 0 1 1 0 0 1 1 0 1 1 0 0 1 1 0 1 1 0 0 1 |
| 011 | 1 1 0 0 1 1 0 1 1 0 0 1 1 0 1 1 0 0 1 1 0 1 1 0 0 1 1 0 1 1 0 0 1 1 |
| 100 | 0 0 0 1 1 1 1 0 0 0 1 1 1 1 0 0 0 1 1 1 1 0 0 0 1 1 1 1 0 0 0 1 1 1 |
| 101 | 1 0 1 1 0 1 0 1 0 1 1 0 1 0 1 0 1 1 0 1 0 1 0 1 1 0 1 0 1 0 1 1 0 1 |
| 110 | 0 1 1 1 1 0 0 0 1 1 1 1 0 0 0 1 1 1 1 0 0 0 1 1 1 1 0 0 0 1 1 1 1 0 |
| 111 | 1 1 0 1 0 0 1 1 1 0 1 0 0 1 1 1 0 1 0 0 1 1 1 0 1 0 0 1 1 1 0 1 0 0 |

For still another example, when L=36, a codebook with a code length of 36 is shown in the following Table 21. A minimum Hamming distance between eight codewords in the following Table 21 is 20. Optionally, the first codeword set may include all or some of codewords in the following Table 21.

Table 21 Example 2 of a codebook with a code length (L) of 36

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 1 0 1 0 1 0 1 1 |
| 010 | 0 1 1 0 0 1 1 0 1 1 0 0 1 1 0 1 1 0 0 1 1 0 1 1 0 0 1 1 0 1 1 0 0 1 1 0 |
| 011 | 1 1 0 0 1 1 0 1 1 0 0 1 1 0 1 1 0 0 1 1 0 1 1 0 0 1 1 0 1 1 0 0 1 1 0 1 |
| 100 | 0 0 0 1 1 1 1 0 0 0 1 1 1 1 0 0 0 1 1 1 1 0 0 0 1 1 1 1 0 0 0 1 1 1 1 0 |
| 101 | 1 0 1 1 0 1 0 1 0 1 1 0 1 0 1 0 1 1 0 1 0 1 0 1 1 0 1 0 1 0 1 1 0 1 0 1 |
| 110 | 0 1 1 1 1 0 0 0 1 1 1 1 0 0 0 1 1 1 1 0 0 0 1 1 1 1 0 0 0 1 1 1 1 0 0 0 |
| 111 | 1 1 0 1 0 0 1 1 1 0 1 0 0 1 1 1 0 1 0 0 1 1 1 0 1 0 0 1 1 1 0 1 0 0 1 1 |

For still another example, when L=40, a codebook with a code length of 40 is shown in the following Table 22. A minimum Hamming distance between eight codewords in the following Table 22 is 22. Optionally, the first codeword set may include all or some of codewords in the following Table 22.

Table 22 Example of a codebook with a code length (L) of 40

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 1 0 1 0 1 0 1 1 0 1 0 1 |
| 010 | 0 1 1 0 0 1 1 0 1 1 0 0 1 1 0 1 1 0 0 1 1 0 1 1 0 0 1 1 0 1 1 0 0 1 1 0 1 1 0 0 |
| 011 | 1 1 0 0 1 1 0 1 1 0 0 1 1 0 1 1 0 0 1 1 0 1 1 0 0 1 1 0 1 1 0 0 1 1 0 1 1 0 0 1 |
| 100 | 0 0 0 1 1 1 1 0 0 0 1 1 1 1 0 0 0 1 1 1 1 0 0 0 1 1 1 1 0 0 0 1 1 1 1 0 0 0 1 1 |
| 101 | 1 0 1 1 0 1 0 1 0 1 1 0 1 0 1 0 1 1 0 1 0 1 0 1 1 0 1 0 1 0 1 1 0 1 0 1 0 1 1 0 |
| 110 | 0 1 1 1 1 0 0 0 1 1 1 1 0 0 0 1 1 1 1 0 0 0 1 1 1 1 0 0 0 1 1 1 1 0 0 0 1 1 1 1 |

(continued)

| Value of the first PHR information (three bits) | Codeword (codeword) |
|---|---|
| 111 | 1 1 0 1 0 0 1 1 1 0 1 0 0 1 1 1 0 1 0 0 1 1 1 0 1 0 0 1 1 1 0 1 0 0 1 1 1 0 1 0 |

If m=3 and L=7n+3, a 12*12 normalized Hadamard matrix $H_{12}$ is selected.

$$H_{12}=\begin{bmatrix} 1 & 1 & 1 & 1 & 1 & 1 & 1 & 1 & 1 & 1 & 1 & 1 \\ 1 & -1 & 1 & -1 & 1 & 1 & 1 & -1 & -1 & -1 & 1 & -1 \\ 1 & -1 & -1 & 1 & -1 & 1 & 1 & 1 & -1 & -1 & -1 & 1 \\ 1 & 1 & -1 & -1 & 1 & -1 & 1 & 1 & 1 & -1 & -1 & -1 \\ 1 & -1 & 1 & -1 & -1 & 1 & -1 & 1 & 1 & 1 & -1 & -1 \\ 1 & -1 & 1 & 1 & -1 & -1 & 1 & -1 & 1 & 1 & 1 & -1 \\ 1 & -1 & -1 & 1 & 1 & -1 & -1 & 1 & -1 & 1 & 1 & 1 \\ 1 & 1 & -1 & -1 & 1 & 1 & -1 & -1 & 1 & -1 & 1 & 1 \\ 1 & 1 & 1 & -1 & -1 & 1 & 1 & -1 & -1 & 1 & -1 & 1 \\ 1 & 1 & 1 & 1 & -1 & -1 & 1 & 1 & -1 & -1 & 1 & -1 \\ 1 & -1 & 1 & 1 & 1 & -1 & -1 & -1 & 1 & -1 & -1 & 1 \\ 1 & 1 & -1 & 1 & 1 & 1 & -1 & -1 & -1 & 1 & -1 & -1 \end{bmatrix}$$

Then the 1st column of elements in H12 are removed, to obtain a 12*11 matrix $H_{12*11}$. Then any column is selected from the matrix $H_{12*11}$ and removed. It is assumed that the 1st column of the matrix $H_{12*11}$ is selected. When the 1st column of the matrix $H_{12*11}$ is removed, rows of a matrix obtained by removing the column are divided into the following two groups based on positive/negative properties of elements in the removed column:

$$G_+^{10}=\begin{bmatrix} 1 & 1 & 1 & 1 & 1 & 1 & 1 & 1 & 1 & 1 \\ -1 & -1 & 1 & -1 & 1 & 1 & 1 & -1 & -1 & -1 \\ -1 & -1 & -1 & 1 & -1 & -1 & 1 & 1 & -1 & 1 & 1 \\ 1 & -1 & -1 & -1 & 1 & 1 & -1 & -1 & 1 & 1 & -1 & 1 \\ 1 & 1 & -1 & -1 & -1 & 1 & 1 & -1 & -1 & 1 & 1 & -1 \\ -1 & 1 & 1 & 1 & 1 & -1 & -1 & -1 & 1 & -1 & -1 \end{bmatrix}$$

$$G_-^{10}=\begin{bmatrix} 1 & -1 & 1 & 1 & 1 & -1 & -1 & -1 & 1 & -1 \\ -1 & 1 & 1 & -1 & 1 & 1 & 1 & -1 & -1 & -1 & 1 \\ 1 & -1 & -1 & 1 & 1 & -1 & 1 & 1 & 1 & 1 & -1 & -1 \\ -1 & 1 & 1 & -1 & -1 & 1 & 1 & -1 & 1 & 1 & 1 & -1 \\ -1 & -1 & 1 & 1 & -1 & -1 & 1 & 1 & -1 & 1 & 1 & 1 \\ 1 & 1 & 1 & -1 & -1 & -1 & 1 & 1 & -1 & -1 & 1 & 1 \end{bmatrix}$$

In this case, a Hamming distance between any two rows of elements in $G_+^{10}$ is 6, a Hamming distance between any two rows of elements in $G_-^{10}$ is also 6, and a Hamming distance between any row of elements in $G_+^{10}$ and any row of elements in $G_-^{10}$ is 5. Any q rows are selected from $G_+^{10}$, and any 8-q (for example, q is equal to 2 herein) rows are selected from $G_-^{10}$, to form a matrix $C_{8\times10}$.

$$C_{8\times10}=\begin{bmatrix} 1 & 1 & -1 & -1 & -1 & 1 & -1 & -1 & 1 & 1 & -1 \\ -1 & 1 & 1 & 1 & -1 & -1 & -1 & 1 & 1 & -1 & -1 \\ 1 & -1 & 1 & 1 & 1 & -1 & -1 & -1 & 1 & 1 & -1 \\ -1 & 1 & -1 & 1 & 1 & 1 & 1 & -1 & -1 & -1 & 1 & 1 \\ 1 & -1 & -1 & 1 & -1 & 1 & 1 & 1 & 1 & -1 & -1 & 1 \\ -1 & 1 & -1 & -1 & 1 & 1 & -1 & 1 & 1 & 1 & -1 \\ -1 & -1 & 1 & -1 & -1 & 1 & 1 & -1 & 1 & 1 & 1 & 1 \\ 1 & 1 & 1 & -1 & -1 & -1 & 1 & 1 & -1 & -1 & 1 & 1 \end{bmatrix}$$

Then the matrix $H_{(8\times7)}$ is repeated n-1 times to obtain n-1 matrices $H_{(8\times7)}$. Then rows of the n-1 $H_{(8\times7)}$ may be separately rearranged (or an arrangement process may be skipped). Then the matrix $C_{8\times10}$ and a matrix obtained by repeating $H_{(8\times7)}$ n-1 times are arranged side by side based on rows to obtain a matrix $C_{8\times(7n+3)}$.

**EP 4 614 846 A1**

$$C_{8\times(7n+3)}=[H_{(8\times7)},\ H_{8\times7}^{P_1},\ ...,\ H_{8\times7}^{P_{n-2}},\ C_{(8\times10)}]$$

$H_{8\times7}^{p_i}$ represents a matrix obtained by rearranging rows of $H_{(8\times7)}$. In this case, a Hamming distance between any two rows of elements in $C_{8\times(7n+3)}$ is as follows: 4(n-1)+5=4n+1, or 4(n-1)+6=4n+2. Therefore, a minimum Hamming distance between different rows of elements in $C_{8\times(7n+3)}$ is 4n+1. Then elements 1 and -1 in $C_{8\times(7n+3)}$ are mapped to 0 and 1 respectively, to obtain a codebook with a code length L of 7n+3. It can be understood that a mapping relationship between elements 1 and -1 in a matrix, and 1 and 0 is not limited in this embodiment of this application.

For example, when L=24, a codebook with a code length of 24 is shown in the following Table 23. A minimum Hamming distance between eight codewords in the following Table 23 is 13. Optionally, the first codeword set may include all or some of codewords in the following Table 23.

Table 23 Example of a codebook with a code length (L) of 24

| Value of the first PHR information (three bits) | Codeword (codeword) |
|---|---|
| 000 | 0 0 0 0 0 0 0 0 0 0 0 0 0 0 1 1 1 0 1 1 0 1 |
| 001 | 1 0 1 0 1 0 1 1 0 1 0 1 0 1 1 0 0 0 1 1 1 0 1 1 |
| 010 | 0 1 1 0 0 1 1 0 1 1 0 0 1 1 0 1 0 0 0 1 1 1 0 1 |
| 011 | 1 1 0 0 1 1 0 1 1 0 0 1 1 0 1 0 1 0 0 0 1 1 1 0 |
| 100 | 0 0 0 1 1 1 1 0 0 0 1 1 1 1 0 1 1 0 1 0 0 0 1 1 |
| 101 | 1 0 1 1 0 1 0 1 0 1 1 0 1 0 1 0 1 1 0 1 0 0 0 1 |
| 110 | 0 1 1 1 1 0 0 0 1 1 1 1 0 0 1 1 0 1 1 0 1 0 0 0 |
| 111 | 1 1 0 1 0 0 1 1 1 0 1 0 0 1 0 0 0 1 1 1 0 1 1 0 |

For example, when L=38, a codebook with a code length of 38 is shown in the following Table 24. A minimum Hamming distance between eight codewords in the following Table 24 is 21. Optionally, the first codeword set may include all or some of codewords in the following Table 24.

Table 24 Example of a codebook with a code length (L) of 38

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 1 1 1 0 1 1 0 1 |
| 001 | 1 0 1 0 1 0 1 1 0 1 0 1 0 1 1 0 1 0 1 0 1 1 0 1 0 1 0 1 1 0 0 0 1 1 1 0 1 1 |
| 010 | 0 1 1 0 0 1 1 0 1 1 0 0 1 1 0 1 1 0 0 1 1 0 1 1 0 0 1 1 0 1 0 0 0 1 1 1 0 1 |
| 011 | 1 1 0 0 1 1 0 1 1 0 0 1 1 0 1 1 0 0 1 1 0 1 1 0 0 1 1 0 1 0 1 0 0 0 1 1 1 0 |
| 100 | 0 0 0 1 1 1 1 0 0 0 1 1 1 1 0 0 0 1 1 1 1 0 0 0 1 1 1 1 0 1 1 0 1 0 0 0 1 1 |
| 101 | 1 0 1 1 0 1 0 1 0 1 1 0 1 0 1 0 1 1 0 1 0 1 0 1 1 0 1 0 1 0 1 1 0 1 0 0 0 1 |
| 110 | 0 1 1 1 1 0 0 0 1 1 1 1 0 0 0 1 1 1 1 0 0 0 1 1 1 1 0 0 1 1 0 1 1 0 1 0 0 0 |
| 111 | 1 1 0 1 0 0 1 1 1 0 1 0 0 1 1 1 0 1 0 0 1 1 1 0 1 0 0 1 0 0 0 1 1 1 0 1 1 0 |

In addition, when L=7n+3, a codebook may alternatively be generated by using the following method. The matrix $H_{(8\times7)}$ is repeated n times to obtain n matrices $H_{(8\times7)}$. Then rows of the n matrices $H_{(8\times7)}$ may be separately rearranged (or an arrangement process may be skipped). Then the n matrices $H_{(8\times7)}$ are arranged side by side based on rows, and any three columns other than the following seven combinations are selected from $H_{(8\times7)}$ to form a matrix $H_{(8\times3)}$: combinations of columns that are not to be selected= {1, 2, 3; 1, 4, 5; 1, 6, 7; 2, 4, 6; 2, 5, 7; 3, 4, 7; 3, 5, 6}. Then the matrix $H_{(8\times3)}$ and a matrix obtained by repeating the matrix $H_{(8\times7)}$ n times are arranged side by side based on rows to obtain a matrix $C_{8\times(7n+3)}$.

$$C_{8\times(7n+3)}=[H_{(8\times7)},\ H_{8\times7}^{P_1},\ ...,\ H_{8\times7}^{P_{n-1}},\ H_{(8\times3)}]$$

$H_{8\times7}^{p_i}$ represents a matrix obtained by rearranging rows of $H_{(8\times7)}$. Finally, elements 1 and -1 in $C_{8\times(7n+3)}$ are mapped to 0 and 1 respectively, to obtain a codebook with a code length L of 7n+3. Specific codebooks are not listed one by one herein. It can be understood that a mapping relationship between elements 1 and -1 in a matrix, and 1 and 0 is not limited in this embodiment of this application.

If m=4 and L=7n+4, a 12*12 normalized Hadamard matrix $H_{12}$ is selected. This is described above, and details are not described herein again. Then the 1st column of elements in H12 are removed, to obtain a 12*11 matrix $H_{12}*_{11}$. Then any eight rows, for example, the 5th to the 12th rows, are selected from the matrix $H_{12}*_{11}$ to obtain an 8*11 matrix $H_8*_{11}$. In this case, a Hamming distance between any two rows of elements in the matrix $H_8*_{11}$ is 6.

$$H_{8*11}=\begin{bmatrix} -1 & 1 & -1 & -1 & 1 & 1 & -1 & 1 & 1 & 1 & -1 & -1 \\ -1 & -1 & 1 & 1 & -1 & -1 & 1 & 1 & -1 & 1 & 1 & 1 & -1 \\ -1 & -1 & -1 & 1 & 1 & -1 & -1 & 1 & 1 & -1 & 1 & 1 & 1 \\ 1 & -1 & -1 & -1 & 1 & 1 & -1 & -1 & 1 & 1 & -1 & 1 & 1 \\ 1 & 1 & -1 & -1 & -1 & 1 & 1 & -1 & -1 & 1 & 1 & -1 & 1 \\ 1 & 1 & 1 & -1 & -1 & -1 & 1 & 1 & -1 & -1 & 1 & 1 & -1 \\ -1 & 1 & 1 & 1 & -1 & -1 & -1 & 1 & 1 & -1 & -1 & 1 & 1 \\ 1 & -1 & 1 & 1 & 1 & -1 & -1 & -1 & 1 & 1 & -1 & -1 \end{bmatrix}$$

Then the matrix $H_{(8\times7)}$ is repeated n-1 times to obtain n-1 matrices $H_{(8\times7)}$ Then rows of the n-1 $H_{(8\times7)}$ may be separately rearranged (or an arrangement process may be skipped). Then the matrix $H_{8\times11}$ and a matrix obtained by repeating $H_{(8\times7)}$ n-1 times are arranged side by side based on rows to obtain a matrix $C_{8x(7n+4)}$.

$$C_{8\times(7n+4)}=[H_{(8\times7)}, \ H_{8\times7}^{P_1}, \ ..., \ H_{8\times7}^{P_{n-2}}, \ H_{(8\times11)}]$$

$H_{8\times7}^{p_i}$ represents a matrix obtained by rearranging rows of $H_{(8\times17)}$. In this case, a Hamming distance between any two rows of elements in $C_{8x(7n+4)}$ is as follows: 4(n-1)+6=4n+2. Therefore, a minimum Hamming distance between different rows of elements in $C_{8x(7n+4)}$ is 4n+2. Then elements 1 and -1 in $C_{8x(7n+4)}$ are mapped to 0 and 1 respectively, to obtain a codebook with a code length L of 7n+4. It can be understood that a mapping relationship between elements 1 and -1 in a matrix, and 1 and 0 is not limited in this embodiment of this application.

For example, when L=32, a codebook with a code length of 32 is shown in the following Table 25. A minimum Hamming distance between eight codewords in the following Table 25 is 18. Optionally, the first codeword set may include all or some of codewords in the following Table 25.

Table 25 Example 3 of a codebook with a code length (L) of 32

| Value of the first PHR information (three bits) | Codeword (codeword) |
|---|---|
| 000 | 0 0 0 0 0 0 0 0 0 0 0 0 0 0 0 0 0 0 0 0 0 1 0 1 1 0 1 0 0 0 1 1 |
| 001 | 1 0 1 0 1 0 1 1 0 1 0 1 0 1 1 0 1 0 1 0 1 1 1 0 1 1 0 1 0 0 0 1 |
| 010 | 0 1 1 0 0 1 1 0 1 1 0 0 1 1 0 1 1 0 0 1 1 1 1 1 0 1 1 0 1 0 0 0 |
| 011 | 1 1 0 0 1 1 0 1 1 0 0 1 1 0 1 1 0 0 1 1 0 0 1 1 1 0 1 1 0 1 0 0 |
| 100 | 0 0 0 1 1 1 1 0 0 0 1 1 1 1 0 0 0 1 1 1 1 0 0 1 1 1 0 1 1 0 1 0 |
| 101 | 1 0 1 1 0 1 0 1 0 1 1 0 1 0 1 0 1 1 0 1 0 0 0 0 1 1 1 0 1 1 0 1 |
| 110 | 0 1 1 1 1 0 0 0 1 1 1 1 0 0 0 1 1 1 1 0 0 1 0 0 0 1 1 1 0 1 1 0 |
| 111 | 1 1 0 1 0 0 1 1 1 0 1 0 0 1 1 1 0 1 0 0 1 0 1 0 0 0 1 1 1 0 1 1 |

In addition, when L=7n+4, a codebook may alternatively be generated by using the following method. The matrix $H_{(8\times7)}$ is repeated n times to obtain n matrices $H_{(8\times7)}$. Then rows of the n matrices $H_{(8\times7)}$ may be separately rearranged (or an arrangement process may be skipped). Then the n matrices $H_{(8\times7)}$ are arranged side by side based on rows, and any four columns are selected from $H_{(8\times7)}$ to form a matrix $H_{(8\times4)}$. The four columns are any one of the following seven combinations: combinations of columns that may be selected={1, 2, 4, 7; 1, 2, 5, 6; 1, 3, 4, 6; 1, 3, 5, 7; 2, 3, 4, 5; 2, 3, 6, 7; 4, 5, 6, 7}. Then the matrix $H_{(8x4)}$ and a matrix obtained by repeating the matrix $H_{(8\times7)}$ n times are arranged side by side based on rows to obtain a matrix $C_{8\times(7n+4)}$.

$$C_{8\times(7n+4)}=[H_{(8\times7)},\ H_{8\times7}^{P_1},\ ...,\ H_{8\times7}^{P_{n-1}},\ H_{(8\times4)}]$$

$H_{8\times7}^{p_i}$ represents a matrix obtained by rearranging rows of $H_{(8\times7)}$. Finally, elements 1 and -1 in $C_{8x(7n+4)}$ are mapped to 0 and 1 respectively, to obtain a codebook with a code length L of 7n+4. It can be understood that a mapping relationship between elements 1 and -1 in a matrix, and 1 and 0 is not limited in this embodiment of this application.

For example, when L=32, $H_{(8\times7)}$ is duplicated four times, and the 1st, the 2nd, the 4th, and the 7th columns are selected from $H_{(8\times7)}$, to form a codebook with a code length of 32 in the following Table 26. A minimum Hamming distance between eight codewords in the following Table 26 is 18. Optionally, the first codeword set may include all or some of codewords in the following Table 26.

Table 26 Example 4 of a codebook with a code length (L) of 32

| Value of the first PHR information (three bits) | Codeword (codeword) |
|---|---|
| 000 | 0 0 0 0 0 0 0 0 0 0 0 0 0 0 0 0 0 0 0 0 0 0 0 0 0 0 0 0 0 0 0 0 |
| 001 | 1 0 1 0 1 0 1 1 0 1 0 1 0 1 1 0 1 0 1 0 1 1 0 1 0 1 0 1 1 0 0 1 |
| 010 | 0 1 1 0 0 1 1 0 1 1 0 0 1 1 0 1 1 0 0 1 1 0 1 1 0 0 1 1 0 1 0 1 |
| 011 | 1 1 0 0 1 1 0 1 1 0 0 1 1 0 1 1 0 0 1 1 0 1 1 0 0 1 1 0 1 1 0 0 |
| 100 | 0 0 0 1 1 1 1 0 0 0 1 1 1 1 0 0 0 1 1 1 1 0 0 0 1 1 1 1 0 0 1 1 |
| 101 | 1 0 1 1 0 1 0 1 0 1 1 0 1 0 1 0 1 1 0 1 0 1 0 1 1 0 1 0 1 0 1 0 |
| 110 | 0 1 1 1 1 0 0 0 1 1 1 1 0 0 0 1 1 1 1 0 0 0 1 1 1 1 0 0 0 1 1 0 |
| 111 | 1 1 0 1 0 0 1 1 1 0 1 0 0 1 1 1 0 1 0 0 1 1 1 0 1 0 0 1 1 1 1 1 |

It can be understood that Table 16 to Table 26 are merely examples, and a mapping relationship between different values of the first PHR information and codewords in Table 16 to Table 26 is not fixed. It only needs to be ensured that different values of the first PHR information are mapped to different codewords.

It can be understood that, in the foregoing codebook generation manners, different codebooks may be constructed by using different Hadamard matrices, but minimum Hamming distances of the codebooks remain the same. It can be further understood that another codebook may be obtained by performing column rearrangement, row rearrangement, entire-column element negation (the element negation means that an element -1 is changed to an element 1, and an element 1 is changed to an element -1), or another operation on any codebook in Table 16 to Table 26. The another codebook and the codebook have same Hamming distance distribution.

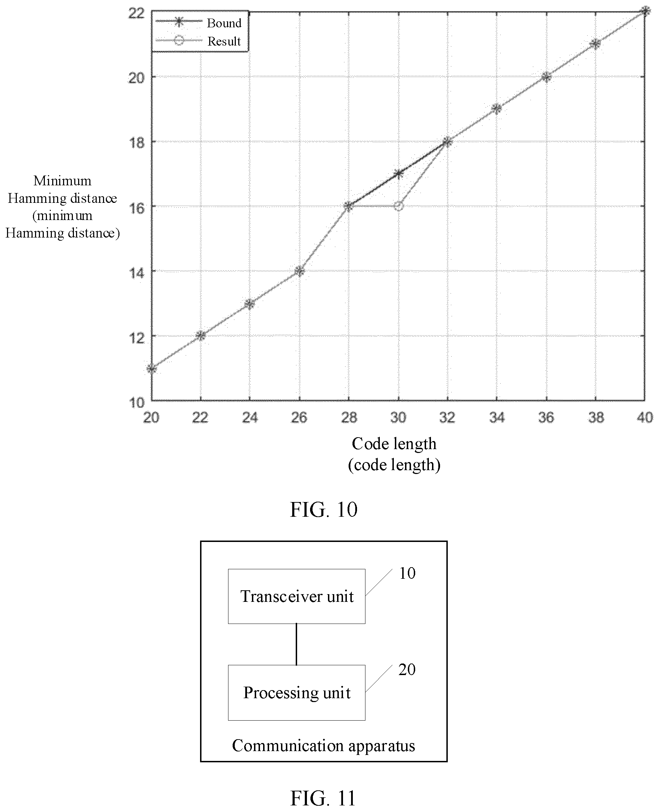

For more intuitive understanding of minimum Hamming distances between codewords in codebooks (namely, the first codeword set) with different code lengths that are designed in this embodiment of this application, the following provides descriptions by using a diagram. FIG. 10 is a diagram of minimum Hamming distances at different code lengths according to an embodiment of this application. As shown in FIG. 10, a horizontal coordinate represents a code length (code length), and a vertical coordinate represents a minimum Hamming distance (minimum Hamming distance). It can be understood that, for precision of illustration, FIG. 10 shows only minimum Hamming distances for some of code lengths. To be specific, a code length range represented by horizontal coordinates is 20 bits to 40 bits.

It can be learned from comparison and analysis of FIG. 9 and FIG. 10 that, for an even value with a code length ranging from 20 to 40, a minimum Hamming distance between codewords designed at a code length other than 30 may reach a theoretical minimum Hamming distance bound, to ensure a minimum bit error rate and improve coding performance.

Therefore, in this embodiment of this application, a Hamming distance between codewords is increased to improve coding performance.

The foregoing content describes in detail the method provided in this application. To facilitate implementation of the foregoing solutions in embodiments of this application, embodiments of this application further provide a corresponding apparatus or device.

In this application, a communication apparatus is divided into functional modules based on the method embodiments. For example, the functional modules may be divided based on functions, or two or more functions may be integrated into one processing module. The integrated module may be implemented in a form of hardware, or may be implemented in a form of a software functional module. It should be noted that, in this application, division into the modules is an example and is merely logical function division. During actual implementation, another division manner may be used. The following describes in detail a communication apparatus in embodiments of this application with reference to FIG. 11 to FIG. 13.

FIG. 11 is a diagram of a structure of a communication apparatus according to an embodiment of this application. As shown in FIG. 11, the communication apparatus includes a transceiver unit 10 and a processing unit 20.

In some embodiments of this application, the communication apparatus may be the first communication apparatus shown above or a chip in the first communication apparatus. To be specific, the communication apparatus shown in FIG. 11 may be configured to perform the steps, the functions, or the like performed by the first communication apparatus in the foregoing method embodiments.

The processing unit 20 is configured to generate a PPDU, where the PPDU includes a PHR field and a PHY payload field, the PHR field includes first PHR information, and the first PHR information indicates a data rate of the PHY payload field. The transceiver unit 10 is configured to send a signal, where the signal is generated based on the PPDU, the signal includes a signal generated based on a codeword obtained by encoding the first PHR information, and the codeword includes a codeword, in a first codeword set, that corresponds to the first PHR information.

For specific descriptions of the PPDU, the first PHR information, the first codeword set, and the like, refer to the foregoing method embodiments. Details are not described herein again.

It can be understood that the specific descriptions of the transceiver unit and the processing unit in this embodiment of this application are merely an example. For specific functions, steps, or the like performed by the transceiver unit and the processing unit, refer to the foregoing method embodiments. Details are not described herein again. For example, the transceiver unit 10 may be configured to perform step S102 shown in FIG. 5 or step S202 shown in FIG. 8, and the processing unit 20 may be configured to perform step S101 shown in FIG. 5 or step S201 shown in FIG. 8.

Still refer to FIG. 11. In some other embodiments of this application, the communication apparatus may be the second communication apparatus shown above or a chip in the second communication apparatus. To be specific, the communication apparatus shown in FIG. 11 may be configured to perform the steps, the functions, or the like performed by the second communication apparatus in the foregoing method embodiments.

The transceiver unit 10 is configured to receive a signal, where the signal is generated based on a PPDU, the PPDU includes a PHR field and a PHY payload field, the PHR field includes first PHR information, the signal includes a signal generated based on a codeword obtained by encoding the first PHR information, and the codeword includes a codeword, in a first codeword set, that corresponds to the first PHR information. The processing unit 20 is configured to decode the signal to obtain the first PHR information, where the first PHR information indicates a data rate of the PHY payload field.

For specific descriptions of the PPDU, the first PHR information, the first codeword set, and the like, refer to the foregoing method embodiments. Details are not described herein again.

It can be understood that the specific descriptions of the transceiver unit and the processing unit in this embodiment of this application are merely an example. For specific functions, steps, or the like performed by the transceiver unit and the processing unit, refer to the foregoing method embodiments. Details are not described herein again. For example, the transceiver unit 10 may be configured to receive a signal, and the processing unit 20 may be configured to perform step S103 shown in FIG. 5 or step S203 shown in FIG. 8.

The foregoing describes the communication apparatus in embodiments of this application. The following describes a possible product form of the communication apparatus. It should be understood that a product in any form that has a function of the communication apparatus in FIG. 11 falls within the protection scope of embodiments of this application. It should be further understood that the following descriptions are merely examples, and a product form of the communication apparatus in embodiments of this application is not limited thereto.

In a possible implementation, in the communication apparatus shown in FIG. 11, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information (for example, sending a signal) in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information (for example, receiving a signal) in the foregoing method may be understood as a process of receiving the input information by the processor. When the processor receives the input information, the transceiver receives the information, and inputs the information to the processor. Further, after the transceiver receives the information, other processing may need to be performed on the information before processed information is input to the processor.

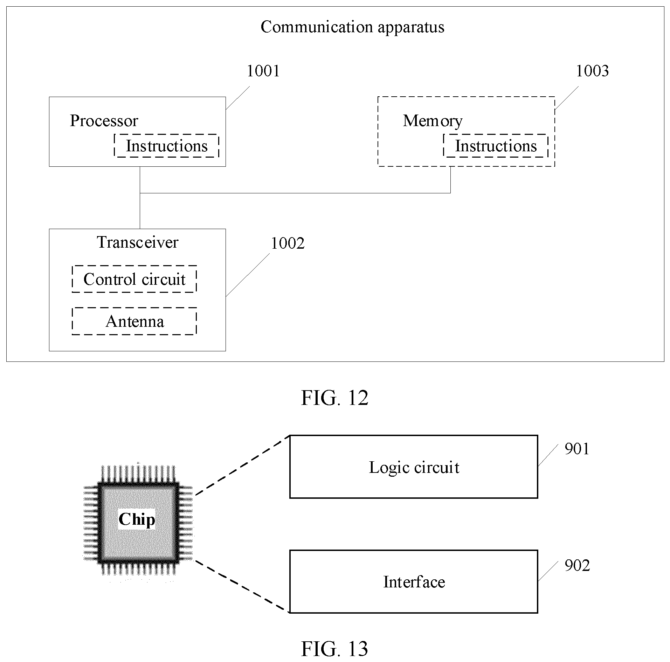

FIG. 12 is a diagram of another structure of a communication apparatus according to an embodiment of this application. The communication apparatus may be a first communication apparatus, a second communication apparatus, or a chip in the first communication apparatus or the second communication apparatus. FIG. 12 shows only main components of the communication apparatus. In addition to a processor 1001 and a transceiver 1002, the communication apparatus may further include a memory 1003 and an input/output apparatus (not shown in the figure).

The processor 1001 is mainly configured to process a communication protocol and communication data, control the entire communication apparatus, execute a software program, and process data of the software program. The memory 1003 is mainly configured to store the software program and data. The transceiver 1002 may include a control circuit and an antenna. For example, the control circuit is mainly configured to perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to receive data input by a user and output data to the user.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

In a design, the communication apparatus may be configured to perform the functions of the first communication apparatus in Embodiment 1. The processor 1001 may be configured to perform step S101 in FIG. 5 and/or another process of the technology described in this specification. The transceiver 1002 may be configured to perform step S102 in FIG. 5 and/or another process of the technology described in this specification.

In another design, the communication apparatus may be configured to perform the functions of the second communication apparatus in Embodiment 1. The processor 1001 may be configured to perform step S103 in FIG. 5 and/or another process of the technology described in this specification. The transceiver 1002 may be configured to receive a signal sent in step S102 in FIG. 5, and/or perform another process of the technology described in this specification.

In a design, the communication apparatus may be configured to perform the functions of the first communication apparatus in Embodiment 2. The processor 1001 may be configured to perform step S201 in FIG. 8 and/or another process of the technology described in this specification. The transceiver 1002 may be configured to perform step S202 in FIG. 8 and/or another process of the technology described in this specification.

In another design, the communication apparatus may be configured to perform the functions of the second communication apparatus in Embodiment 2. The processor 1001 may be configured to perform step S203 in FIG. 8 and/or another process of the technology described in this specification. The transceiver 1002 may be configured to receive a signal sent in step S202 in FIG. 8, and/or perform another process of the technology described in this specification.

In any one of the foregoing designs, the processor 1001 may include a transceiver for implementing sending and receiving functions. For example, the transceiver may be a transceiver circuit, an interface, or an interface circuit. The transceiver circuit, the interface, or the interface circuit for implementing the sending and receiving functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, to enable the communication apparatus to perform the method described in the foregoing method embodiments. The computer program may be fixed in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (N-channel metal-oxide-semiconductor, NMOS), a P-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited by FIG. 12. The communication apparatus may be an independent device, or may be a part of a large device. For example, the communication apparatus may be:

(1) an independent integrated circuit IC, a chip, or a chip system or subsystem;
(2) a set including one or more ICs, where optionally, the set of ICs may alternatively include a storage component for storing data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In another possible implementation, in the communication apparatus shown in FIG. 11, the processing unit 20 may be one or more logic circuits, and the transceiver unit 10 may be an input/output interface that is also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 13 is a diagram of still another structure of a communication apparatus according to an embodiment of this application. As shown in FIG. 13, the communication apparatus shown in FIG. 13 includes a logic circuit 901 and an interface 902. To be specific, the processing unit 20 may be implemented through the logic circuit 901, and the transceiver unit 10 may be implemented through the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 13 shows an example in which the communication apparatus is a chip. The chip includes the logic circuit 901 and the interface 902. It can be understood that the chip shown in this embodiment of this application may include a narrowband chip, an ultra-wideband chip, or the like. This is not limited in embodiments of this application. Alternatively, the narrowband chip and the ultra-wideband chip may be integrated into one apparatus or chip, or may be independent of each other. Implementations of the narrowband chip and the ultra-wideband chip in a device are not limited in embodiments of this application. A step of sending a signal in the foregoing descriptions may be performed by the ultra-wideband chip, and whether other steps are performed by the ultra-wideband chip is not limited in embodiments of this application.

In embodiments of this application, the logic circuit and the interface may be further coupled to each other. A specific manner of connection between the logic circuit and the interface is not limited in embodiments of this application.

For example, when the communication apparatus is configured to perform the method, the functions, or the steps performed by the first communication apparatus in the foregoing method embodiments, the logic circuit 901 is configured to generate a PPDU, where the PPDU includes a PHR field and a PHY payload field, the PHR field includes first PHR information, and the first PHR information indicates a data rate of the PHY payload field; and the interface 902 is configured to output a signal, where the signal is generated based on the PPDU, the signal includes a signal generated based on a codeword obtained by encoding the first PHR information, and the codeword includes a codeword, in a first codeword set, that corresponds to the first PHR information.

For example, when the communication apparatus is configured to perform the method, the functions, or the steps performed by the second communication apparatus in the foregoing method embodiments, the interface 902 is configured to input a signal, where the signal is generated based on a PPDU, the PPDU includes a PHR field and a PHY payload field, the PHR field includes first PHR information, the signal includes a signal generated based on a codeword obtained by encoding the first PHR information, and the codeword includes a codeword, in a first codeword set, that corresponds to the first PHR information, and the logic circuit 901 is configured to decode the signal to obtain the first PHR information, where the first PHR information indicates a data rate of the PHY payload field.

It can be understood that, for specific descriptions of the PPDU, the first PHR information, the first codeword set, and the like, refer to the foregoing method embodiments. Details are not described herein again.

It can be understood that the communication apparatus described in embodiments of this application may implement the method provided in embodiments of this application in a form of hardware, or may implement the method provided in embodiments of this application in a form of software. This is not limited in embodiments of this application.

For specific implementations of the embodiment shown in FIG. 13, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to an actual requirement to implement the technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An ultra-wideband-based signal transmission method, comprising:

    generating a physical layer protocol data unit PPDU, wherein the PPDU comprises a physical layer header PHR field and a physical layer payload field, the PHR field comprises first PHR information, and the first PHR information indicates a data rate of the physical layer payload field; and
    sending a signal, wherein the signal is generated based on the PPDU, the signal comprises a signal generated based on a codeword obtained by encoding the first PHR information, and the codeword comprises a codeword, in a first codeword set, that corresponds to the first PHR information.

2. An ultra-wideband-based signal transmission method, comprising:

   receiving a signal, wherein the signal is generated based on a physical layer protocol data unit PPDU, the PPDU comprises a physical layer header PHR field and a physical layer payload field, the PHR field comprises first PHR information, the signal comprises a signal generated based on a codeword obtained by encoding the first PHR information, and the codeword comprises a codeword, in a first codeword set, that corresponds to the first PHR information; and

   decoding the signal to obtain the first PHR information, wherein the first PHR information indicates a data rate of the physical layer payload field.

3. The method according to claim 1 or 2, wherein the first codeword set comprises M codewords, a length of the codeword is L, and a Hamming distance d between any two of the M codewords satisfies the following formula:

$$d \geq \left\lfloor \frac{ML}{2(M-1)} \right\rfloor \quad \text{or} \quad d \geq \left\lfloor \frac{ML}{2(M-1)} \right\rfloor - 1 \; .$$

4. The method according to claim 3, wherein the first PHR information further comprises information indicating whether the physical layer payload field is encoded by using a first coding scheme.

5. The method according to claim 4, wherein the length of the codeword satisfies the following formula: , wherein

$$L=4n+2,$$

   L represents the length of the codeword, and n is a positive integer.

6. The method according to any one of claims 1 to 4, wherein the first codeword set comprises M codewords, the length of the codeword is L, M is less than or equal to 16, L is equal to 20 bits, and the first codeword set comprises one or more of the following codewords:

   1 1 1 1 1 111111111111111;
   0 0 0 0 0 100110011001100;
   0 0 0 0 0 001100110011001;
   0 0 0 0 0 111000011110000;
   0 0 0 0 0 010010110100101;
   0 0 0 0 0 100001111000011;
   0 0 0 0 0 001011010010110;
   0 0 0 0 0 111111100000000;
   0 0 0 0 0 010101001010101;
   0 0 0 0 0 100110000110011;
   0 0 0 0 0 010101010101010;
   0 0 0 0 0 001100101100110;
   0 0 0 0 0 111000000001111;
   0 0 0 0 0 010010101011010;
   0 0 0 0 0 100001100111100;or
   0 0 0 0 0 001011001101001.

7. The method according to any one of claims 1 to 4, wherein the first codeword set comprises M codewords, a binary bit length of the codeword is L, M is less than or equal to 16, L is equal to 20 bits, the codeword is represented in a hexadecimal form, and the first codeword set comprises one or more of the following codewords:

   0xFFFFF;
   0x04CCC;
   0x01999;
   0x070F0;

0x025A5;
0x043C3;
0x01696;
0x07F00;
0x02A55;
0x04C33;
0x02AAA;
0x01966;
0x0700F;
0x0255A;
0x0433C; and
0x01669.

8. The method according to any one of claims 1 to 4, wherein the first codeword set comprises M codewords, the length of the codeword is L, M is less than or equal to 16, L is equal to 36 bits, and the first codeword set comprises one or more of the following codewords:

1 0 0 0 0 1 1 0 1 1 0 0 1 1 1 1 0 1 1 0 0 0 0 1 1 0 1 1 0 0 1 1 1 1 0 1;
0 0 0 1 1 0 1 1 0 0 1 1 1 1 0 1 0 1 0 0 0 1 1 0 1 1 0 0 1 1 1 1 0 1 0 1;
0 0 1 1 0 1 1 0 0 1 1 1 1 0 1 0 1 0 0 0 1 1 0 1 1 0 0 1 1 1 1 0 1 0 1 0;
0 1 1 0 1 1 0 0 1 1 1 1 0 1 0 1 0 0 0 1 1 0 1 1 0 0 1 1 1 1 0 1 0 1 0 0;
1 1 0 1 1 0 0 1 1 1 1 0 1 0 1 0 0 0 1 1 0 1 1 0 0 1 1 1 1 0 1 0 1 0 0 0;
1 1 0 0 1 1 1 1 0 1 0 1 0 0 0 0 1 1 1 1 0 0 1 1 1 1 0 1 0 1 0 0 0 0 1 1;
1 0 0 1 1 1 1 0 1 0 1 0 0 0 0 1 1 0 1 0 0 1 1 1 1 0 1 0 1 0 0 0 0 1 1 0;
0 0 1 1 1 1 0 1 0 1 0 0 0 0 1 1 0 1 0 0 1 1 1 1 0 1 0 1 0 0 0 0 1 1 0 1;
1 1 1 0 1 0 1 0 0 0 0 1 1 0 1 1 0 0 1 1 1 0 1 0 1 0 0 0 0 1 1 0 1 1 0 0;
1 1 0 1 0 1 0 0 0 0 1 1 0 1 1 0 0 1 1 1 0 1 0 1 0 0 0 0 1 1 0 1 1 0 0 1;
1 0 1 0 1 0 0 0 0 1 1 0 1 1 0 0 1 1 1 0 1 0 1 0 0 0 0 1 1 0 1 1 0 0 1 1;
0 1 0 1 0 0 0 0 1 1 0 1 1 0 0 1 1 1 0 1 0 1 0 0 0 0 1 1 0 1 1 0 0 1 1 1;
0 1 0 0 0 0 1 1 0 1 1 0 0 1 1 1 1 0 0 1 0 0 0 0 1 1 0 1 1 0 0 1 1 1 1 0;
0 0 0 0 1 1 0 1 1 0 0 1 1 1 1 0 1 0 0 0 0 0 1 1 0 1 1 0 0 1 1 1 1 0 1 0;
1 0 1 1 0 0 1 1 1 1 0 1 0 1 0 0 0 0 1 0 1 1 0 0 1 1 1 1 0 1 0 1 0 0 0 0; and
0 1 1 0 0 1 1 1 1 0 1 0 1 0 0 0 0 1 0 1 1 0 0 1 1 1 1 0 1 0 1 0 0 0 0 1.

9. The method according to any one of claims 1 to 4, wherein the first codeword set comprises M codewords, the length of the codeword is L, M is less than or equal to 16, L is equal to 32 bits, and the first codeword set comprises one or more of the following codewords:

1 0 0 1 1 1 1 0 1 0 1 0 0 0 0 1 1 0 0 0 0 0 0 0 0 0 0 0 0 0 0 0;
0 0 1 1 1 1 0 1 0 1 0 0 0 0 1 1 0 1 1 1 0 0 1 1 0 0 1 1 0 0 1 1;
1 1 1 0 1 0 1 0 0 0 0 1 1 0 1 1 0 0 0 0 1 1 1 1 0 0 0 0 1 1 1 1;
1 1 0 1 0 1 0 0 0 0 1 1 0 1 1 0 0 1 1 1 1 1 0 0 0 0 1 1 1 1 0 0;
1 0 1 0 1 0 0 0 0 1 1 0 1 1 0 0 1 1 0 0 0 0 0 0 1 1 1 1 1 1 1 1;
0 1 0 1 0 0 0 0 1 1 0 1 1 0 0 1 1 1 1 1 0 0 1 1 1 1 0 0 1 1 0 0;
0 1 0 0 0 0 1 1 0 1 1 0 0 1 1 1 1 0 0 0 1 1 1 1 1 1 1 0 0 0 0;
0 0 0 0 1 1 0 1 1 0 0 1 1 1 1 0 1 0 1 1 1 1 0 0 1 1 0 0 0 0 1 1;
1 0 1 1 0 0 1 1 1 1 0 1 0 1 0 0 0 0 0 1 0 1 0 1 0 1 0 1 0 1 0 1;
0 1 1 0 0 1 1 1 1 0 1 0 1 0 0 0 0 1 1 0 0 1 1 0 0 1 1 0 0 1 1 0;
1 0 0 0 0 1 1 0 1 1 0 0 1 1 1 1 0 1 0 1 1 0 1 0 0 1 0 1 1 0 1 0;
0 0 0 1 1 0 1 1 0 0 1 1 1 1 0 1 0 1 1 0 1 0 0 1 0 1 1 0 1 0 0 1;
0 0 1 1 0 1 1 0 0 1 1 1 1 0 1 0 1 0 0 1 0 1 0 1 1 0 1 0 1 0 1 0;
0 1 1 0 1 1 0 0 1 1 1 1 0 1 0 1 0 0 1 0 0 1 1 0 1 0 0 1 1 0 0 1;
1 1 0 1 1 0 0 1 1 1 1 0 1 0 1 0 0 0 0 1 1 0 1 0 1 0 1 0 0 1 0 1; and
1 1 0 0 1 1 1 1 0 1 0 1 0 0 0 0 1 1 1 0 1 0 0 1 1 0 0 1 0 1 1 0.

10. The method according to any one of claims 1 to 4, wherein the first codeword set comprises M codewords, the length of the codeword is L, M is less than or equal to 16, L is equal to 32 bits, and the first codeword set comprises one or more of the following codewords:

0 1 0 0 0 1 1 1 0 1 0 1 0 1 0 0 0 1 1 1 0 1 0 0 0 0 0 0 0 0 0 0;
1 0 1 0 0 0 1 1 1 0 0 1 1 0 1 0 0 0 1 1 1 0 1 1 0 1 0 0 0 1 1 1;
0 1 1 0 1 0 0 0 1 1 0 1 0 1 1 0 1 0 0 0 1 1 1 1 0 1 1 0 1 0 0;
1 0 1 1 0 1 0 0 0 1 0 1 1 0 1 1 0 1 0 0 0 1 0 1 1 1 0 1 1 0 1 0;
1 1 0 1 1 0 1 0 0 0 0 1 1 1 0 1 1 0 1 0 0 0 0 0 1 1 1 0 1 1 0 1;
0 0 0 1 1 1 0 1 1 0 0 1 0 0 0 1 1 1 0 1 1 0 1 0 0 0 1 1 1 0 1 1;
0 1 0 0 0 1 1 1 0 1 1 0 1 0 1 1 1 0 0 0 1 0 0 1 0 0 0 1 1 1 0 1;
1 0 1 0 0 0 1 1 1 0 1 0 0 1 0 1 1 1 0 0 0 1 1 0 1 0 0 0 1 1 1 0;
0 1 1 0 1 0 0 0 1 1 1 0 1 0 0 1 0 1 1 1 0 0 0 1 1 0 1 0 0 0 1 1;
1 0 1 1 0 1 0 0 0 1 1 0 0 1 0 0 1 0 1 1 1 0 1 0 1 1 0 1 0 0 0 1;
1 1 0 1 1 0 1 0 0 0 1 0 0 0 1 0 0 1 0 1 1 1 1 0 1 1 0 1 0 0 0; and
0 0 0 1 1 1 0 1 1 0 1 0 1 1 1 0 0 0 1 0 0 1 0 0 0 1 1 1 0 1 1 0.

11. The method according to any one of claims 1 to 3, wherein the length of the codeword is an even quantity of bits, and the length of the codeword satisfies the following formula:

$$L=7n+m,$$

wherein
L represents the length of the codeword, n is a positive integer, and m is an integer greater than or equal to 0 and less than 7.

12. The method according to any one of claims 1 to 3, and 11, wherein the first codeword set comprises M codewords, the length of the codeword is L, M is less than or equal to 8, L is equal to 28 bits, and the first codeword set comprises one or more of the following codewords:

0 0 0 0 0 0 0 0 0 0 0 0 0 0 0 0 0 0 0 0 0 0 0 0 0 0 0 0;
1 0 1 0 1 0 1 1 0 1 0 1 0 1 1 0 1 0 1 0 1 1 0 1 0 1 0 1;
0 1 1 0 0 1 1 0 1 1 0 0 1 1 0 1 1 0 0 1 1 0 1 1 0 0 1 1;
1 1 0 0 1 1 0 1 1 0 0 1 1 0 1 1 0 0 1 1 0 1 1 0 0 1 1 0;
0 0 0 1 1 1 1 0 0 0 1 1 1 1 0 0 0 1 1 1 1 0 0 0 1 1 1 1;
1 0 1 1 0 1 0 1 0 1 1 0 1 0 1 0 1 1 0 1 0 1 0 1 1 0 1 0;
0 1 1 1 1 0 0 0 1 1 1 1 0 0 0 1 1 1 1 0 0 0 1 1 1 1 0 0; and
1 1 0 1 0 0 1 1 1 0 1 0 0 1 1 1 0 1 0 0 1 1 1 0 1 0 0 1.

13. The method according to any one of claims 1 to 3, and 11, wherein the first codeword set comprises M codewords, the length of the codeword is L, M is less than or equal to 8, L is equal to 30 bits, and the first codeword set comprises one or more of the following codewords:

0 0 0 0 0 0 0 0 0 0 0 0 0 0 0 0 0 0 0 0 0 0 0 0 0 0 0 0 0 0;
1 0 1 0 1 0 1 1 0 1 0 1 0 1 1 0 1 0 1 0 1 1 0 1 0 1 0 1 1 0;
0 1 1 0 0 1 1 0 1 1 0 0 1 1 0 1 1 0 0 1 1 0 1 1 0 0 1 1 0 1;
1 1 0 0 1 1 0 1 1 0 0 1 1 0 1 1 0 0 1 1 0 1 1 0 0 1 1 0 1 1;
0 0 0 1 1 1 1 0 0 0 1 1 1 1 0 0 0 1 1 1 1 0 0 0 1 1 1 1 0 0;
1 0 1 1 0 1 0 1 0 1 1 0 1 0 1 0 1 1 0 1 0 1 0 1 1 0 1 0 1 0;
0 1 1 1 1 0 0 0 1 1 1 1 0 0 0 1 1 1 1 0 0 0 1 1 1 1 0 0 0 1; and
1 1 0 1 0 0 1 1 1 0 1 0 0 1 1 1 0 1 0 0 1 1 1 0 1 0 0 1 1 1.

14. The method according to any one of claims 1 to 3, and 11, wherein the first codeword set comprises M codewords, the length of the codeword is L, M is less than or equal to 8, L is equal to 32 bits, and the first codeword set comprises one or more of the following codewords:

0 0 0 0 0 0 0 0 0 0 0 0 0 0 0 0 0 0 0 0 0 0 0 0 0 0 0 0 0 0 0 0;
1 0 1 0 1 0 1 1 0 1 0 1 0 1 1 0 1 0 1 0 1 1 0 1 0 1 0 1 1 0 0 1;
0 1 1 0 0 1 1 0 1 1 0 0 1 1 0 1 1 0 0 1 1 0 1 1 0 0 1 1 0 1 0 1;
1 1 0 0 1 1 0 1 1 0 0 1 1 0 1 1 0 0 1 1 0 1 1 0 0 1 1 0 1 1 0 0;
0 0 0 1 1 1 1 0 0 0 1 1 1 1 0 0 0 1 1 1 1 0 0 0 1 1 1 1 0 0 1 1;

1 0 1 1 0 1 0 1 0 1 1 0 1 0 1 0 1 1 0 1 0 1 0 1 1 0 1 0 1 0 1 0;
0 1 1 1 1 0 0 0 1 1 1 1 0 0 0 1 1 1 1 0 0 0 1 1 1 1 0 0 0 1 1 0; and
1 1 0 1 0 0 1 1 1 0 1 0 0 1 1 1 0 1 0 0 1 1 1 0 1 0 0 1 1 1 1 1.

15. The method according to any one of claims 1 to 3, and 11, wherein the first codeword set comprises M codewords, the length of the codeword is L, M is less than or equal to 8, L is equal to 34 bits, and the first codeword set comprises one or more of the following codewords:

0 0 0 0 0 0 0 0 0 0 0 0 0 0 0 0 0 0 0 0 0 0 0 0 0 0 0 0 0 0 0 0 0 0;
1 0 1 0 1 0 1 1 0 1 0 1 0 1 1 0 1 0 1 0 1 1 0 1 0 1 0 1 1 0 1 0 1 0;
0 1 1 0 0 1 1 0 1 1 0 0 1 1 0 1 1 0 0 1 1 0 1 1 0 0 1 1 0 1 1 0 0 1;
1 1 0 0 1 1 0 1 1 0 0 1 1 0 1 1 0 0 1 1 0 1 1 0 0 1 1 0 1 1 0 0 1 1;
0 0 0 1 1 1 1 0 0 0 1 1 1 1 0 0 0 1 1 1 1 0 0 0 1 1 1 1 0 0 0 1 1 1;
1 0 1 1 0 1 0 1 0 1 1 0 1 0 1 0 1 1 0 1 0 1 0 1 1 0 1 0 1 0 1 1 0 1;
0 1 1 1 1 0 0 0 1 1 1 1 0 0 0 1 1 1 1 0 0 0 1 1 1 1 0 0 0 1 1 1 1 0; and
1 1 0 1 0 0 1 1 1 0 1 0 0 1 1 1 0 1 0 0 1 1 1 0 1 0 0 1 1 1 0 1 0 0.

16. The method according to any one of claims 1 to 3, and 11, wherein the first codeword set comprises M codewords, the length of the codeword is L, M is less than or equal to 8, L is equal to 36 bits, and the first codeword set comprises one or more of the following codewords:

0 0 0 0 0 0 0 0 0 0 0 0 0 0 0 0 0 0 0 0 0 0 0 0 0 0 0 0 0 0 0 0 0 0 0 0;
1 0 1 0 1 0 1 1 0 1 0 1 0 1 1 0 1 0 1 0 1 1 0 1 0 1 0 1 1 0 1 0 1 0 1 1;
0 1 1 0 0 1 1 0 1 1 0 0 1 1 0 1 1 0 0 1 1 0 1 1 0 0 1 1 0 1 1 0 0 1 1 0;
1 1 0 0 1 1 0 1 1 0 0 1 1 0 1 1 0 0 1 1 0 1 1 0 0 1 1 0 1 1 0 0 1 1 0 1;
0 0 0 1 1 1 1 0 0 0 1 1 1 1 0 0 0 1 1 1 1 0 0 0 1 1 1 1 0 0 0 1 1 1 1 0;
1 0 1 1 0 1 0 1 0 1 1 0 1 0 1 0 1 1 0 1 0 1 0 1 1 0 1 0 1 0 1 1 0 1 0 1;
0 1 1 1 1 0 0 0 1 1 1 1 0 0 0 1 1 1 1 0 0 0 1 1 1 1 0 0 0 1 1 1 1 0 0 0; and
1 1 0 1 0 0 1 1 1 0 1 0 0 1 1 1 0 1 0 0 1 1 1 0 1 0 0 1 1 1 0 1 0 0 1 1.

17. The method according to any one of claims 1 to 16, wherein the quantity M of codewords in the first codeword set is less than or equal to $2^K$, K is a bit length of the first PHR information, and K=2, 3, or 4.

18. The method according to any one of claims 1 to 17, wherein the length of the codeword is any one of the following: 20, 22, 24, 26, 28, 30, 32, 34, 36, 38, or 40 bits.

19. A communication apparatus, comprising:

a processing unit, configured to generate a physical layer protocol data unit PPDU, wherein the PPDU comprises a physical layer header PHR field and a physical layer payload field, the PHR field comprises first PHR information, and the first PHR information indicates a data rate of the physical layer payload field; and
a transceiver unit, configured to send a signal, wherein the signal is generated based on the PPDU, the signal comprises a signal generated based on a codeword obtained by encoding the first PHR information, and the codeword comprises a codeword, in a first codeword set, that corresponds to the first PHR information.

20. A communication apparatus, comprising:

a transceiver unit, configured to receive a signal, wherein the signal is generated based on a physical layer protocol data unit PPDU, the PPDU comprises a physical layer header PHR field and a physical layer payload field, the PHR field comprises first PHR information, the signal comprises a signal generated based on a codeword obtained by encoding the first PHR information, and the codeword comprises a codeword, in a first codeword set, that corresponds to the first PHR information; and
a processing unit, configured to decode the signal to obtain the first PHR information, wherein the first PHR information indicates a data rate of the physical layer payload field.

21. A communication apparatus, comprising a processor and a memory, wherein

the memory is configured to store instructions; and

the processor is configured to execute the instructions, to perform the method according to any one of claims 1 to 18.

22. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 18.

23. A wireless communication system, comprising the communication apparatus according to claim 19 and/or the communication apparatus according to claim 20.

24. A computer-readable storage medium, wherein the computer-readable storage medium is configured to store a computer program, and when the computer program is executed, the method according to any one of claims 1 to 18 is performed.

PAN
coordinator

● Full function device

○ Reduced function device

FIG. 1

PAN
coordinator

● Full function device

○ Reduced function device

FIG. 2

| SYNC Synchronization | SFD Start-of-frame delimiter | PHR Physical layer header | PHY payload Physical layer payload |
|---|---|---|---|

FIG. 3

EP 4 614 846 A1

| SYNC<br>Synchronization | SFD<br>Start-of-frame<br>delimiter | PHR1 | PHR2 | PHY payload<br>Physical layer<br>payload |
|---|---|---|---|---|

PHR

FIG. 4

First communication apparatus

Second communication apparatus

S101: Generate a PPDU, where the PPDU includes a PHR field and a PHY payload field, the PHR field includes first PHR information, and the first PHR information indicates a data rate of the PHY payload field and whether the PHY payload field is encoded by using a first coding scheme

S102: Send a signal, where the signal is generated based on the PPDU, the signal includes a signal generated based on a codeword obtained by encoding the first PHR information, and the codeword includes a codeword, in a first codeword set, that corresponds to the first PHR information

S103: Decode the signal to obtain the first PHR information

FIG. 5

58

FIG. 6

FIG. 7

| First communication apparatus | Second communication apparatus |
|---|---|

S201: Generate a PPDU, where the PPDU includes a PHR field and a PHY payload field, the PHR field includes first PHR information, and the first PHR information indicates a data rate of the PHY payload field

S202: Send a signal, where the signal is generated based on the PPDU, the signal includes a signal generated based on a codeword obtained by encoding the first PHR information, and the codeword includes a codeword, in a first codeword set, that corresponds to the first PHR information

S203: Decode the signal to obtain the first PHR information

FIG. 8

FIG. 9

FIG. 10

FIG. 11

Communication apparatus

1001                                                    1003

Processor
┌─────────────────┐
│ Instructions │
└─────────────────┘

Memory
┌─────────────────┐
│ Instructions │
└─────────────────┘

Transceiver                          1002

┌─────────────────┐
│ Control circuit │
└─────────────────┘

┌─────────────────┐
│ Antenna │
└─────────────────┘

FIG. 12

Chip

Logic circuit                                901

Interface                                    902

FIG. 13

## INTERNATIONAL SEARCH REPORT

| International application No. |
| --- |
| **PCT/CN2023/137010** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, WPABSC, DWPI, CNKI, 3GPP, IEEE, ARXIV: 超宽带, 协议数据单元, 物理, 报头, 包头, 头部, 载荷, 净荷, 字段, 速率, 编码, 解码, 码字, 集, 表, 组, 码本, 码书, 码元, 比特, 符号, 流, 序列, 映射, ultra-wide band, UWB, physical layer protocol data unit, PPDU, physical layer, PHY, PHR, header, payload, field, rate, encoding, decoding, codeword, CW, codebook, CB, set, table, group, symbol, bit, stream, sequence, mapping

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 20050100848 A (SAMSUNG ELECTRONICS CO., LTD.) 20 October 2005 (2005-10-20) description, page 4 paragraph 5-page 15 paragraph 9, and figures 4-14 | 1-5, 11, 17-24 |
| Y | COPPENS, D. et al. "An Overview of UWB Standards and Organizations (IEEE 802.15.4, FiRa, Apple): Interoperability Aspects and Future Research Directions" *IEEE Access (Volume: 10)*, 30 June 2022 (2022-06-30), pages 70226-70228 | 1-5, 11, 17-24 |
| A | CN 101662438 A (HUAWEI TECHNOLOGIES CO., LTD.) 03 March 2010 (2010-03-03) entire document | 1-24 |
| A | US 2022116139 A1 (INTEL CORP.) 14 April 2022 (2022-04-14) entire document | 1-24 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 February 2024** | **07 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 20050100848 | A | 20 October 2005 | None | | | |
| CN | 101662438 | A | 03 March 2010 | None | | | |
| US | 2022116139 | A1 | 14 April 2022 | WO | 2023116269 | A1 | 29 June 2023 |
| | | | | CN | 117378158 | A | 09 January 2024 |

Form PCT/ISA/210 (patent family annex) (July 2022)

**EP 4 614 846 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211567222
- CN 202211620738
- CN 202310095577
- CN 202310101526